# EUROPEAN PATENT APPLICATION

(11) **EP 1 443 420 A2**
(43) Date of publication of application: **04.08.2004**
(21) Application number: 04000351.9
(22) Date of filing: 09.01.2004
(51) Int. Cl.: G06F 17/24, G06F 17/21

(54) **Method, program, and system for editing contents of multimedia**

(30) Priority: 16.01.2003 JP 2003008755
(71) Applicant: Hitachi Software Engineering Co., Ltd., Yokohama-shi, Kanagawa 230-0045 (JP)
(72) Inventor: Ogawa, Kaoru, Shinagawa-ku Tokyo 140-0002 (JP); Suzuka, Toyoaki, Shinagawa-ku Tokyo 140-0002 (JP)
(74) Representative: Liesegang, Roland, Dr.-Ing.

(57) **Abstract**

Disclosed herein is a contents editing method employed for an application system that relates processings of parts to each another by laying a plurality of parts in layers on a screen. This is to enable the user who is not familiar with computer operation to set an order for executing contents of multimedia intuitively without referring to manuals, thereby making the user to feel editing of contents of multimedia simple and attractive. The method comprises a step of displaying content processing start button parts for starting a contents-related processing on a screen respectively, a step of displaying a mat paper part on the screen, the content-related processings being executed by affixing the content processing start buttons on the mat paper part, and a step of affixing at least one or more content processing start buttons at coordinate positions on the mat paper part.

## Description

### FIELD OF THE INVENTION

The present invention relates to a contents editing technique, more particularly to an editing technique with respect to an order for processing contents of multimedia.

In this specification, a matrix cell denotes one of a plurality of areas divided like a matrix. It does not set limits to the form of the areas, however.

### BACKGROUND OF THE INVENTION

In recent years, users of personal computers have come to be able to handle contents of multimedia, such as video and music data, as well as characters synthetically due to the rapid progress of computer systems.

There is software usable to edit a plurality of slides. The software is, for example, PowerPoint of Microsoft (hereinafter, to be referred to as "PowerPoint") , which is a trademark of Microsoft Inc. The PowerPoint makes it possible to browse those slides, on each of which materials, tables, drawings, etc. of multimedia can be affixed according to an order specified for each of the slides. When creating a new work using the PowerPoint, the user is just requested to go with the following procedures. 1. Click [Create New] of the [File] menu, then click the [Standard] tab. 2. Double-click the [New Presentation] icon to select the layout of the first slide. 3. Input a title, then the contents. 4. Click [New Slide] of the [Function Used Often] toolbar, then scroll the screen to refer to another layout and select the layout of the second slide. 5. Add specific contents to the slide as needed. Repeat the procedures 4 and 5. 6. Click [Save by Overwriting] of the [File] menu at the end of the work. 7. Input a name for the created presentation, then click [Save]. At this time, the PowerPoint creates the necessary number of slides and affixes such materials of multimedia as sounds, images, texts, motion pictures, etc. on those slides.

More concretely, a sound material can be affixed on each slide with a mouse operation in the following procedures. 1. Display the slide to which a sound material is to be affixed in the slide display mode. 2. Point [Video & Sound] of the [Insert] menu. 3. To insert a sound from the clip gallery, click [Sound from Gallery], then double-click the sound clip to be inserted. To set a sound to be reproduced at a slide change, click [Screen Change] of the [Slide Show] menu, then specify the sound from the pull-down menu of the sound field provided in the displayed dialog box.

To insert an existing work slide in the current work, point [Slide from File] of the [Insert] menu to display the dialog box, then specify the work to be inserted to display a list of slides. After that, specify the desired slide in the list by double-clicking it. The double-clicked slide is inserted just after the current slide.

To set a time interval for changing slides, point [Screen Change] from the [Slide Show] menu on the menu bar, then input the time (in seconds) in the screen change timing field provided in the displayed screen change dialog box. The PowerPoint also enables sound reproduction objects and hyper link objects to be affixed on slides so that they can be operated on slides just with mouse operation. If an animation is set for each of a plurality of objects on a screen, the animations will be reproduced from those objects one by one. The order for reproducing such animations can be changed by pointing [Set Animation] from the [Slide Show] on the menu bar provided in the displayed dialog box.

Furthermore, the PowerPoint enables colors, shapes, and fonts of the objects affixed on slides to be changed from the tool/menu bar on the editing screen. In addition, the [Font Copy/Paste] function of the PowerPoint can be used to change the color, shape, and font attributes of any object collectively and set those obtained attributes for another object collectively. To use the [Font Copy/Paste] function to obtain such attributes, select the target object, then click the [Font Copy/Paste] button on the tool bar. If another object is clicked just after that, the obtained attributes are set for the clicked object.

To fetch an image from, for example, an image scanner, point the [Drawing] menu from the [Insert] menu displayed on the menu bar, then click [From Scanner]. At this time, a scanner control image set for the computer is displayed. Finally, specify a resolution and a range for fetching the image (refer to the non-patent document 1, for example).

### [Non-patent document 1]

### PowerPoint Online Manual "Inserting Sounds"

As described above, the PowerPoint has a variety of functions and can cope generally with editing of contents of multimedia. However, the PowerPoint has the following problems. The PowerPoint becomes complicated in operation unavoidably as it copes with operations specific to computers, thereby it is provided with many functions. And, this has made users who are inexperienced in computer operation feel too difficult to operate the PowerPoint to create their works in the way they want. In addition, the functions of the PowerPoint is also difficult to create works in free formats, although it is possible to create works in predetermined formats.

Furthermore, the PowerPoint cannot create any work but those in which the same size slides are browsed only at the same position. For example, it is difficult for the PowerPoint to display user-oriented screens, each of which is formed by changing both size and position thereof appropriately to the object slide.

Hereinafter, each of the functions users would desire to have and not provided in the PowerPoint will be described concretely. The PowerPoint, when adding a new slide, requests the user to point [New Slide] of the [Insert] menu provided on the menu bar. The PowerPoint also requires such a menu operation for affixing a sound, an image, and/or motion picture on a slide respectively. Although those operations are basic for creating works, the user will feel difficult to make such operations if he/she is not familiar with the terms displayed on menus and where they are installed. Even when setting a sound on a slide, the setting method differs between when sound reproduction is set with a mouse operation on the subject slide and when sound reproduction is made automatically at a slide change. In addition to those methods, there are still more methods, although which method to be employed depends on how the sound is to be reproduced.

Furthermore, in each work created with use of the PowerPoint, both size and display position of every slide must be identical among all the pages and a slide must consist of one screen. Consequently, all the pages of every work are unified in form. It is impossible to change both size and display position for each slide nor to create a slide over a plurality of screens.

When inserting a slide of an existing work in the current work with use of the PowerPoint, at first the user is requested to display a list of source slides in a dialog box opened with a menu operation, then select a target slide. The selected slide is always inserted just after the current slide, so that the user must set the current slide so as to be positioned just before the inserting position of the new slide before the insertion operation.

When setting a time interval between slide changes with use of the PowerPoint, the user is requested to input the time in seconds in the dialog box. If the specified time (seconds) is shorter than the time of the target sound reproduced at the slide change, the sound reproduction will stop at the slide change. To avoid this, the slide change must be done after the sound reproduction is completed. And, to make such a slide change, the sound reproduction time must be referred to and set as a slide change time interval.

Furthermore, the PowerPoint cannot be used to change a plurality of related attributes such as a font, a font size, a font style, etc. collectively, although it is possible to obtain/set one or all the attributes at a time when changing the background, the characters, and the frame of a slide-affixed object with use of the PowerPoint.

Under such circumstances, it is an object of the present invention to provide a method for making the user feel more simple and attractive to edit contents of multimedia than any of existing application programs by simplifying the use of the user interface and visualizing operations with icons. For example, the object of the present invention is to provide a technique for creating/editing contents of multimedia so that even users who are inexperienced in computer operation can create works as intended intuitively without referring to manuals.

### SUMMARY OF THE INVENTION

According to one aspect of the present invention, it is possible to provide a contents editing method employable for an application system capable of relating processings of parts to each another by affixing a part to another. The method comprises a step of displaying a plurality of contents processing start button parts, each for displaying a contents-related processing, on said screen, a step of displaying a mat paper part provided with a plurality of matrix cells specified for an order respectively on the screen, and a step of affixing the contents processing start button parts on the plurality of matrix cells.

Because each of the plurality of matrix cells affixed on the mat paper is specified for an order and desired content processing start button parts are affixed on the matrix cells, the above method is usable to specify an order for processing contents, thereby both processing contents and processing order can be set together to simply the operation of the application system.

According to another aspect of the present invention, it is possible to provide a contents editing method employable for an application system capable of relating processings of parts to each another by affixing a part to another. The method comprises a step of displaying a plurality of contents processing start button parts, each for starting a contents-related processing, on a screen, a step of displaying a mat paper part provided with a plurality of matrix cells on the screen, a step of affixing the plurality of contents processing start button parts on the plurality of matrix cells, and a step of specifying an order for executing the plurality of contents processing start button parts affixed on the plurality of matrix cells.

Because an extensive order for processing contents can be specified after affixing a selected content on the mat paper part, the above method is convenient for customizing both processing content and processing timing later.

According to still another aspect of the present invention, it is possible to provide a contents editing method employable for an application system capable of relating processings of parts to each another by affixing a part to another. The method comprises a step of displaying a plurality of contents processing start button parts, each for starting a contents-related processing, on a screen, a step of displaying a mat paper part provided with calendar information on the screen, the mat paper part enabling the plurality of contents processing start buttons to be affixed thereon and used to execute their corresponding contents-related processings, and a step of affixing the plurality of contents processing start button parts on the mat paper part.

The above method enables correspondence between the calendar information and each content processing, so that the contents can be processed by turns. The method thus makes it easier for the user to create works in a sensible manner.

### BRIEF DESCRIPTION OF THE DRAWINGS

Fig. 1 is a block diagram of a contents editing system in an embodiment of the present invention;
Fig. 2 is an example of editing processings by the contents editing system in the embodiment of the present invention, in which creating of a piece of work is started in a controller and completed by affixing various contents on a mat paper;
Fig. 3 is an example of a piece of work created with editing processings by the contents editing system in the embodiment of the present invention, in which capsule buttons are affixed on the mat paper to create the work;
Fig. 4 is an example of a piece of work created with editing processings by the contents editing system in the embodiment of the present invention, in which arrow parts are affixed on the mat paper to specify an order for operating the buttons affixed on the mat paper;
Fig. 5 is an illustration for denoting how to change some or all the related attributes of a piece of work created with editing processings by the contents editing system in the embodiment of the present invention;
Fig. 6 is an illustration for denoting how to affix various buttons on a capsule binder divided into matrix cell areas in an editing process for a piece of work created with editing processings by the contents editing system in the embodiment of the present invention;
Fig. 7 is an illustration for denoting how to affix various buttons on a calendar capsule binder divided into matrix cell areas in a editing process of a piece of work created with editing processings by the contents editing system in the embodiment of the present invention;
Fig. 8 is a table of parts for storing parts, slot names related to those parts respectively, and each operation started upon an event received at the corresponding slot;
Fig. 9 is a flowchart of the main editing processings by the multimedia contents editing system in the embodiment of the present invention;
Fig. 10 is a flowchart of the processings by the controller, the processings being included in the editing processings of the multimedia contents editing system in the embodiment of the present invention;
Fig. 11 is a flowchart of the processings related to a parts box, the processings being included in the editing processings of the multimedia contents editing system in the embodiment of the present invention;
Fig. 12 is a flowchart of the processings for generating a part on a mat paper/capsule screen, the processings being included in the editing processings of the multimedia contents editing system in the embodiment of the present invention;
Fig. 13 is a flowchart of the processings for generating a part on a capsule binder, the processings being included in the editing processings of the multimedia contents editing system in the embodiment of the present invention;
Fig. 14 is a flowchart of the processings for connecting the slot of a capsule button to another, the processings being included in the editing processings of the multimedia contents editing system in the embodiment of the present invention;
Fig. 15 is a flowchart of the processings for connecting the slot of a close button to another, the processings being included in the editing processings of the multimedia contents editing system in the embodiment of the present invention;
Fig. 16 is a flowchart of the processings for connecting the slot of a web site link button to another, the processings being included in the editing processings of the multimedia contents editing system in the embodiment of the present invention;
Fig. 17 is a flowchart of the processings for connecting the slot of a sound button to another, the processings being included in the editing processings of the multimedia contents editing system in the embodiment of the present invention;
Fig. 18 is a flowchart of the processings for connecting the slot of a simultaneous button to another, the processings being included in the editing processings of the multimedia contents editing system in the embodiment of the present invention;
Fig. 19 is a flowchart of the processings performed on a mat paper/capsule screen, the processings being included in the editing processings of the multimedia contents editing system in the embodiment of the present invention;
Fig. 20 is a flowchart of the editing processings performed on the mat paper/capsule screen, the processings being included in the editing processings of the multimedia contents editing system in the embodiment of the present invention;
Fig. 21 is a flowchart of the processings for specifying an extensive order of operations of buttons, the processings being included in the editing processings of the multimedia contents editing system in the embodiment of the present invention;
Fig. 22 is a flowchart of the automatic reproduction processings performed on the mat paper/capsule screen, the processings being included in the editing processings of the multimedia contents editing system in the embodiment of the present invention;
Fig. 23 is a flowchart of the automatic reproduction processings in an order specified by arrow parts, the processings being included in the editing processings of the multimedia contents editing system in the embodiment of the present invention;
Fig. 24 is a flowchart of the processings for obtaining a list of parts linked by arrow parts, the processings being included in the editing processings of the multimedia contents editing system in the embodiment of the present invention;
Fig. 25 is a flowchart of the editing processings performed on the capsule binder, the processings being included in the editing processings of the multimedia contents editing system in the embodiment of the present invention;
Fig. 26 is a flowchart of the processings for moving/copying a cell of the capsule binder, the processings being included in the editing processings of the multimedia contents editing system in the embodiment of the present invention;
Fig. 27 is a flowchart of the processings for deleting a cell from the capsule binder, the processings being included in the editing processings of the multimedia contents editing system in the embodiment of the present invention;
Fig. 28 is a flowchart of the processings for obtaining the last cell number, the processings being included in the editing processings of the multimedia contents editing system in the embodiment of the present invention;
Fig. 29 a flowchart of the processings performed on the capsule binder, the processings being included in the editing processings of the multimedia contents editing system in the embodiment of the present invention;
Fig. 30 is a flowchart of the automatic reproduction processings performed on the capsule binder, the processings being included in the editing processings of the multimedia contents editing system in the embodiment of the present invention;
Fig. 31 is a flowchart of the processings for a capsule button top-bottom event, the processings being included in the editing processings of the multimedia contents editing system in the embodiment of the present invention;
Fig. 32 is a flowchart of the processings for a close button top-bottom event, the processings being included in the editing processings of the multimedia contents editing system in the embodiment of the present invention;
Fig. 33 is a flowchart of the processings for a simultaneous button top-bottom event, the processings being included in the editing processings of the multimedia contents editing system in the embodiment of the present invention;
Fig. 34 is a flowchart of the processings for a web site link button top-bottom event, the processings being included in the editing processings of the multimedia contents editing system in the embodiment of the present invention;
Fig. 35 is a flowchart of the processings for a sound button top-bottom event, the processings being included in the editing processings of the multimedia contents editing system in the embodiment of the present invention;
Fig. 36 a flowchart of the processings for a capsule button bottom-top event, the processings being included in the editing processings of the multimedia contents editing system in the embodiment of the present invention;
Fig. 37 is a flowchart of the processings for a web site link button bottom-top event, the processings being included in the editing processings of the multimedia contents editing system in the embodiment of the present invention;
Fig. 38 a flowchart of the processings for a sound button bottom-top event, the processings being included in the editing processings of the multimedia contents editing system in the embodiment of the present invention;
Fig. 39 is a flowchart of the processings for a close button bottom-top event, the processings being included in the editing processings of the multimedia contents editing system in the embodiment of the present invention;
Fig. 40 is a flowchart of the processings for an action of the capsule button after receiving an event, the processings being included in the editing processings of the multimedia contents editing system in the embodiment of the present invention;
Fig. 41 is a flowchart of the processings for an action of the close button after receiving an event, the processings being included in the editing processings of the multimedia contents editing system in the embodiment of the present invention;
Fig. 42 is a flowchart of the processings for an action of the simultaneous button after receiving an event, the processings being included in the editing processings of the multimedia contents editing system in the embodiment of the present invention;
Fig. 43 is a flowchart of the processings for an action of the sound button after receiving an event, the processings being included in the editing processings of the multimedia contents editing system in the embodiment of the present invention;
Fig. 44 is a flowchart of the processings for an action of the home page linkage button after receiving an event, the processings being included in the editing processings of the multimedia contents editing system in the embodiment of the present invention;
Fig. 45 is a flowchart of the processings performed on the image scanner screen, the processings being included in the editing processings of the multimedia contents editing system in the embodiment of the present invention;
Fig. 46 is a flowchart of the processings for closing the mat paper/capsule screen, the processings being included in the editing processings of the multimedia contents editing system in the embodiment of the present invention;
Fig. 47 is a flowchart of the processings for closing a screen related to a button, the processings being included in the editing processings of the multimedia contents editing system in the embodiment of the present invention;
Fig. 48 is a flowchart of the processings performed in a drawer, the processings being included in the editing processings of the multimedia contents editing system in the embodiment of the present invention;
Fig. 49 is a flowchart of the processings performed on a photograph browser, the processings being included in the editing processings of the multimedia contents editing system in the embodiment of the present invention;
Fig. 50 is a flowchart of the processings performed on a sound browser, the processings being included in the editing processings of the multimedia contents editing system in the embodiment of the present invention;
Fig. 51 is a flowchart of the processings performed on a video browser, the processings being included in the editing processings of the multimedia contents editing system in the embodiment of the present invention;
Fig. 52 is a flowchart of the processings performed on an attribute change tool screen, the processings being included in the editing processings of the multimedia contents editing system in the embodiment of the present invention;
Fig. 53 is a detailed block diagram of the multimedia contents editing system in the embodiment of the present invention;
Fig. 54A and B are illustrations for denoting both display form and internal structure of each part displayed on a screen in the multimedia contents editing system in the embodiment of the present invention;
Fig. 55 is an example of a program system employed for the multimedia contents editing system in the embodiment of the present invention; and
Fig. 56 is a block diagram of a message transfer system employed for the multimedia contents editing system in the embodiment of the present invention.

### DETAILED DESCRIPTION OF THE PREFERRED EMBODIMENT

In this specification, a controller means a window for starting various operations and the controller displays icons of functions including those for generating mat papers and displaying browsers that handle various materials of multimedia. The materials are, for example, photographs, sounds, and parts. A mat paper or capsule binder is a window in which a work is to be created. Contents of multimedia such as materials and parts are affixed to each another in a window referred to as a mat paper to create a work. Parts are, for example, a capsule button, a close button, and a simultaneous button. A window from which those parts are taken out is referred to as a parts box. Each button works as an icon for executing its corresponding processing.

Hereunder, a concrete description will be made for examinations performed by the inventor of the present invention before describing the preferred embodiment of the present invention. The inventor thought it would be convenient if it was possible to change both size and position of each slide to be displayed, as well as to create a slide consisting of a plurality of screens. The inventor also thought it would be more convenient if it was possible to unify operations for adding such materials as slides and sounds to each work. Furthermore, the inventor thought it would also be convenient if it was possible (1) to simplify operations by using each existing work as a slide in another work, (2) to adjust a time interval between slide changes according to the reproduction time of various materials of multimedia included in the slide, (3) to execute button parts affixed to a slide by turns, (4) to change/obtain each attribute separately, as well as to change/obtain a plurality of attributes collectively, (5) to arrange information items sequentially according to the date information, and (6) to decide an image resolution freely for fetching image data.

As described above, the contents editing technique of the present invention enables correspondence between each of a plurality of parts affixed on a mat paper and an event for deciding an order or procedure for starting each of the processings of those parts. Depending on the order, consecutiveness, and direction related to the mat paper respectively, a story or processing function can be specified for each of the parts affixed on the mat paper.

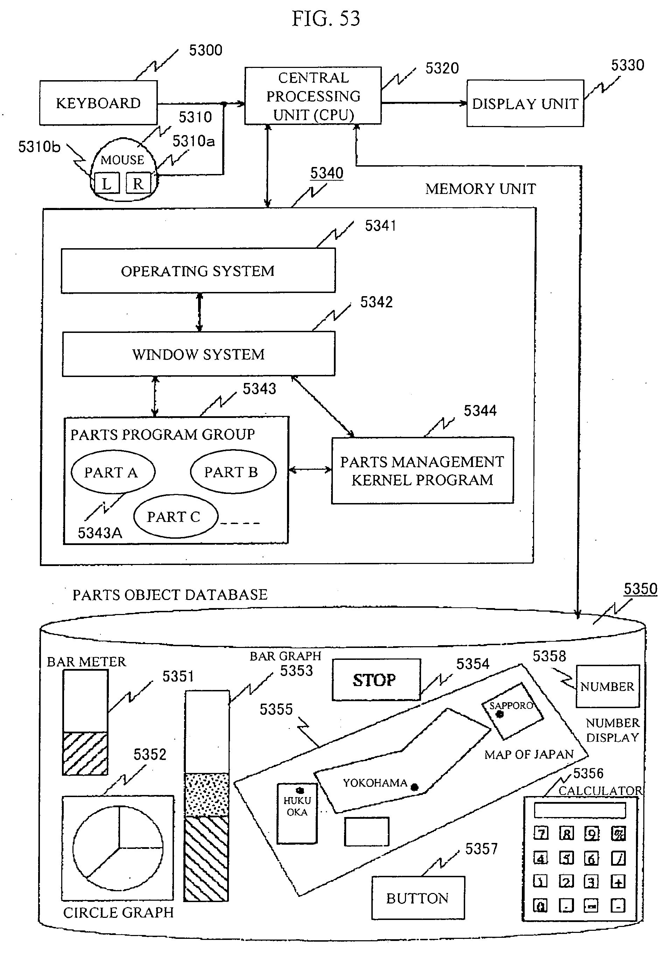

Next, a description will be made for the basic concept of the multimedia contents editing technique in this embodiment. The contents editing technique in this embodiment is based on a technique, which is an object-oriented programming system that uses graphic patterns. Hereinafter, the configuration and the basic operations of the programming system will be described with reference to the prior patent application (official gazette of JP-A No. 152546/7). Fig. 53 is an overall configuration of the obj ect-oriented programming system that uses graphic patterns in an embodiment of the present invention.

The programming system is roughly divided into a keyboard 5300 for inputting commands, characters, etc., a mouse (pointing device) 5310 for operating parts displayed on the screen, a central processing unit (CPU) for executing various processings, a display unit 5330 for displaying various types of parts on the screen, a memory unit 5340 for storing various types of programs, and a part objects data base 5350 for storing various types of parts. The mouse 5310 is provided with a right button 5310a and a left button 5310b.

The memory 5340 stores an operating system 5341 for controlling operations of parts displayed on the screen of the display unit 5330 and a window system 5342 for displaying parts as windows on the screen of the display unit 4330. Those systems 5341 and 5342 use well-known techniques. The memory 5430 further stores a part program group 5343 that defines the action of each part in response to an external operation and its display form on the screen as a "processing program", as well as a parts management kernel program 5344 for managing each link between parts.

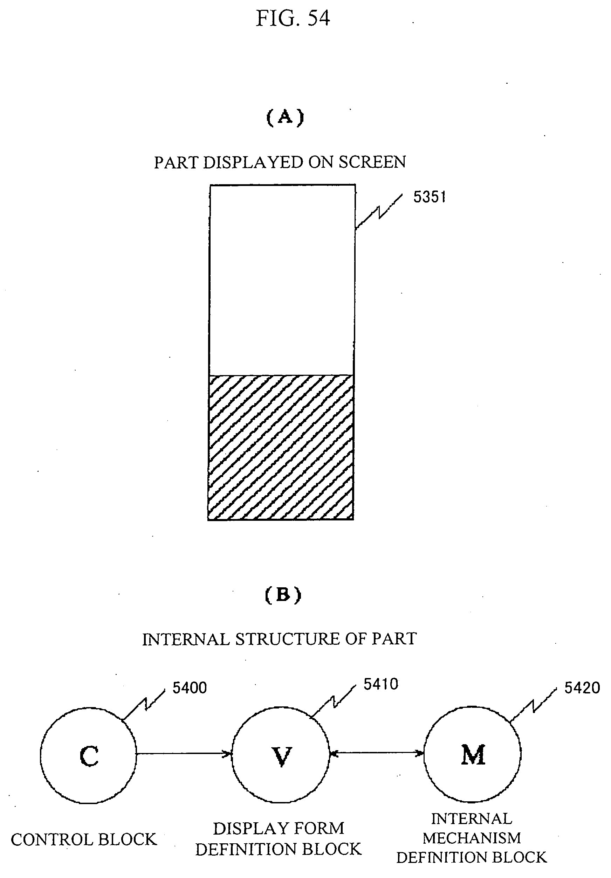

The part objects data base 5350 stores parts including a bar meter 5351, a circle graph 5352, a belt graph 5353, a STOP button 5354, a map of Japan 5355, a calculator 5356, a button 5357, etc. Figs.54A and B show the basic structure of each part. For example, the bar meter 5351 is displayed on the screen as shown in Fig. 54A and it has an internal structure as shown in Fig. 54B. In addition to the bar meter 5351, the basic structure of every part object is formed similarly in this embodiment as shown in Fig. 54B.

As shown in Fig. 54B, each part handled in this embodiment is configured by a control block (controller: C) 5400 that defines its action in response to an external operation, a display form definition block (view: V) 5410 provided with a retaining area for retaining a relationship with a link to another part, a definition area for defining a display form of each part on the screen, and an internal mechanism definition block (model: M) 5420 for retaining both name and current state thereof as a "slot".

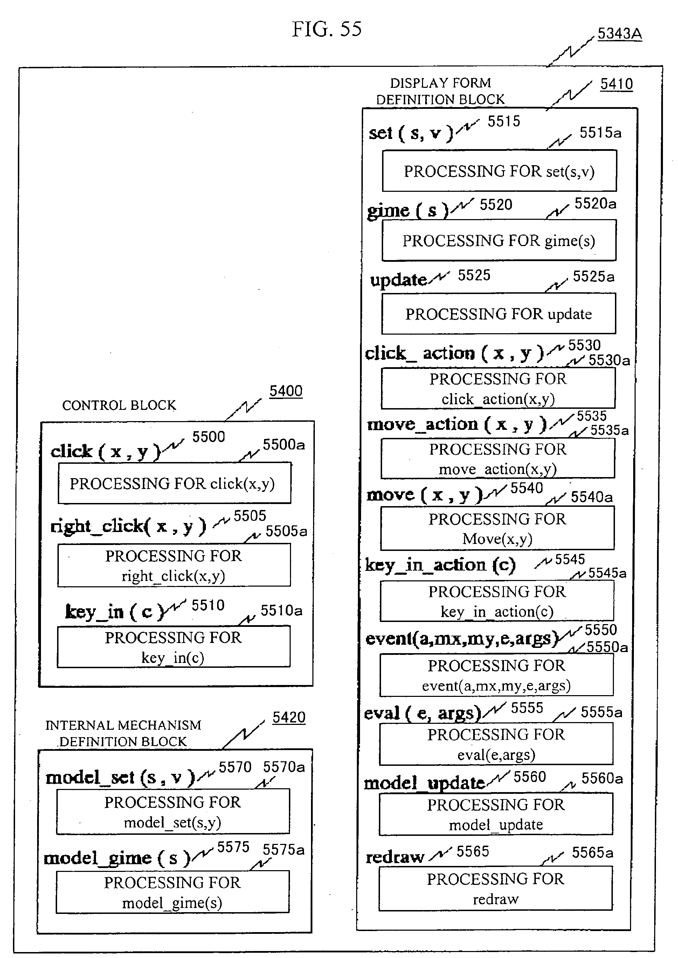

Fig. 55 shows the blocks (M, V, and C) of each part. Hereinafter, the blocks of each part will be described with reference to Figs.53 through 55. Each block of a part, as shown in Figs.53 through 55, is composed of a plurality of processings described as a program and stored in the part program group 5343. In Fig. 55, the control block 5400 describes a processing corresponding to a click event (x, y) 5500, which is a click of the left button 5310b of the mouse 5310, a processing 5505a corresponding to another click event right_click (x,y) 5505, which is a click of the right button 5310a of the mouse 5310, and a processing 5510a corresponding to a key_in(c) 5510, which is a key input on the keyboard 5300. A relationship between a message described in the display form definition block 5420 and a processing corresponding to the message is as follows.

1. set(s,v)5515 : This message is an instruction that means "Set a value "v" in the "slot" specified with "s". The processing 5515a corresponds to this message. 2. give (s) 5520 : This message is a request for the value of the "slot" specified with "s". The processing 5520a corresponds to this message. 3. update5525 : This message is a notice of a state change of the self-part to another part. The processing 5525a corresponds to this message. 4. click_action5530 : This message is output in response to an event for denoting that the self-part is clicked. The processing 5530a corresponds to this message. 5. move_action5535 : This message is output in response to a move of the self-part. The processing 5535a corresponds to this message. 6. move (x, y) 5540 : This message is a request for a move of the self-part. The processing 5540a corresponds to this message. 7. key _in _action (c) 5545 : This message is output in response to a key input from the keyboard 100. The processing 5545a corresponds to this message. 8. event (a, mx, my, e, args) 5550 : This message is a notice of event occurrence. The processing 5550a corresponds to this message. 9. eval (e,args)5555 : This message is a request for message evaluation. The processing 5555a corresponds to this message. 10. model_update5560 : This message is a notice of a change received from the internal mechanism definition block 5320. The processing 5560a corresponds to this message. 11. redraw5565 : This message is a request for redisplaying a value, meter height, etc. on the screen. The processing 5565a corresponds to this message.

The internal mechanism definition block 5320 describes a processing 5570a corresponding to a message model_set(s,v)5570 that is a request for setting of the value of the "slot" specified with "s" and a processing 5575a corresponding to a message model_give(s) 5575 that is a request for the value of the "slot" specified with "s".

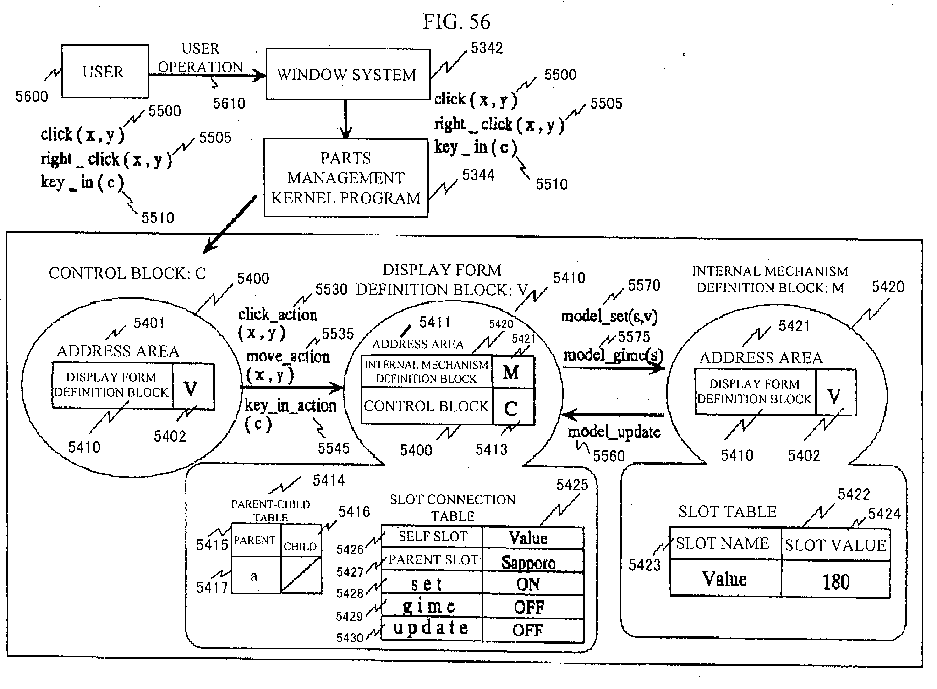

Fig. 56 shows an illustration for denoting a flow of various types of issued messages. In Fig. 56, each part is composed of a control block 5400, a display form definition block 5410, and an internal mechanism definition block 5420. The control block 5400 includes an address area for retaining the address V5402 of the display form definition block 5410 of the self-part.

The display form definition block 5410 includes the address C5413 of the control block corresponding to the self-part, an address area for retaining the address M5412 of the internal mechanism definition block 5410, and a parent-child table 5414 for retaining a parent-child relationship of the part with another part. The parent-child table 5414 retains parent and child self-parts. For example, in the case of a Sapporo bar meter, the parent part is a map of Japan 5355 and its address is "a". The parent part has no child part. And, the display form definition block 5410 includes a slot connection table 5425 for retaining information of a relationship of the part with another part. The slot connection table 5425 is composed of an area 5426 for storing the name of the self-slot, an area 5427 for storing the name of its parent slot, a set field 5428 for turning "ON"/"OFF" the set (s,v) 5515, which is a message from a child part, a "set" field 5428 for turning "ON"/"OFF" the set (s,v) 5515, a "give" field 5429 for turning "ON"/"OFF" the give(s)5520, an "update" field 5530 for turning "ON"/"OFF" the update5525, which is a message to be sent to a child part.

The internal mechanism definition block 5420 includes a slot table 5422 composed of an address area 5421 for retaining the address V5402 of the display form definition block 5410 corresponding to the self-part, the slot name 5423 of the self-part, and the slot value 5424. Hereinafter, the action of one part composed such way will be described. In Fig. 56, if the user 5600 makes an operation 5610 such as a mouse button click on the screen of the display unit 5330, the window system 5342 detects the operation 5610 and generates a message click(x,y)5500, right_click(x,y) 5505, or key_in(c)5510 corresponding to the operation content. These messages are all transmitted to the parts management kernel program 5344 from the window system 5342.

The parts management kernel program 5344 transmits those messages (click(x,y)5500, right_click(x,y) 5505, and key_in(c)5510) to the control block 5400 of the part. Receiving those messages, the control block 5400 transmits such messages as click_action(x,y)5530, move_action(x,y)5535, and key_in_action(c)5545 to the display form definition block 5410 corresponding to the self-part. The display form definition block 5410, when receiving those messages, transmits such messages as model_set(s,v)5570 and model_give(s)5575 to the internal mechanism definition block 5420 corresponding to the self-part.

The internal mechanism definition block 5420 transmits model_update5560 to the display form definition block 5410 as a corresponding processing decided by the contents of those messages, then notifies the display form definition block 5410 of the value change.

As a result, the system executes a relating processing (affixing processing), which lays one part on top of another. The conventional technique as described above can be summarized as a programming method employable for a programming system that forms an application program by combining processings of a plurality of object-oriented parts, each of which is composed of a control block for defining an action in response to an external operation, an internal mechanism definition block for retaining the processing result, a display form definition block for defining a graphic display form of the object part on the screen, obtaining the processing result of the internal mechanism definition block, transmitting the processing result to another object-oriented part corresponding to itself, and displaying the processing result on the screen according to the defined display form with respect to an object to be operated according to the conventional technique. And, the programming method can also be considered as a programming method employable for an object-oriented programming system that uses graphics. The method comprises a) a step of storing an object-oriented part as a unit of graphic parts; b) a step of specifying a relationship between object-oriented parts displayed graphically in layers on the screen; c) a step of storing the relationship; d) a step of detecting an external operation addressed to any of the plurality of object-oriented parts related to each other to transmit the external operation to the control block of the object-oriented part; and e) a step of combining the processings of the plurality of object-oriented parts related to each another according to the information of the relationship stored in the step of storing the relationship.

Hereunder, an embodiment of the present invention will be described with reference to the accompanying drawings according to the above-described basic concepts.

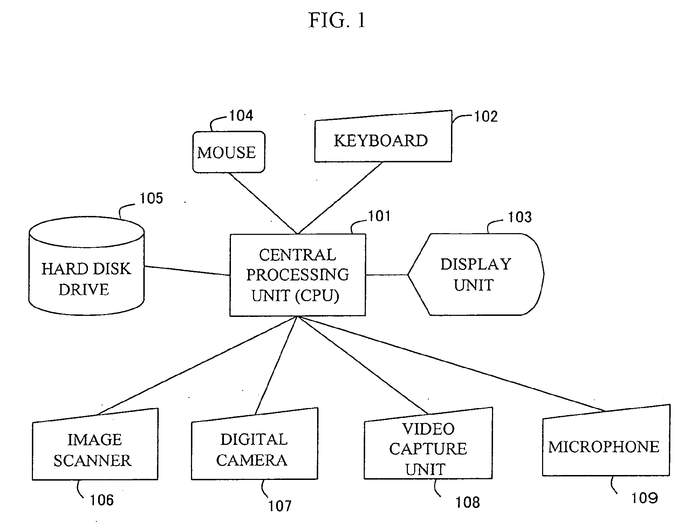

Fig. 1 shows a block diagram of a multimedia contents editing system in an embodiment of the present invention. Fig. 1 is related to Fig. 53. As shown in Fig. 1, the contents editing system in this embodiment comprises a central processing unit (CPU) 101, a keyboard 102, a display unit 103, a mouse 104, and a hard disk unit 105. The editing system may also include interfaces of such multimedia devices as an image scanner 106, a digital still camera 107, a video capture 108, and a microphone 109 so as to cope with multimedia. The central processing unit (CPU) 101 performs processings for editing contents of multimedia. The keyboard 102 is an interface for inputs of characters. The display unit 103 displays graphics and the mouse 104 is a pointing device. The hard disk unit 105 stores programs for operating the central processing unit (CPU) 101, as well as such contents of multimedia as materials of images and video and voice data. The image scanner 106 fetches digital data converted from characters and images into a personal computer or the like. The digital still camera 107 fetches images and photographs. The video capture 108 fetches video data of motion pictures. The microphone 109 fetches voice information.

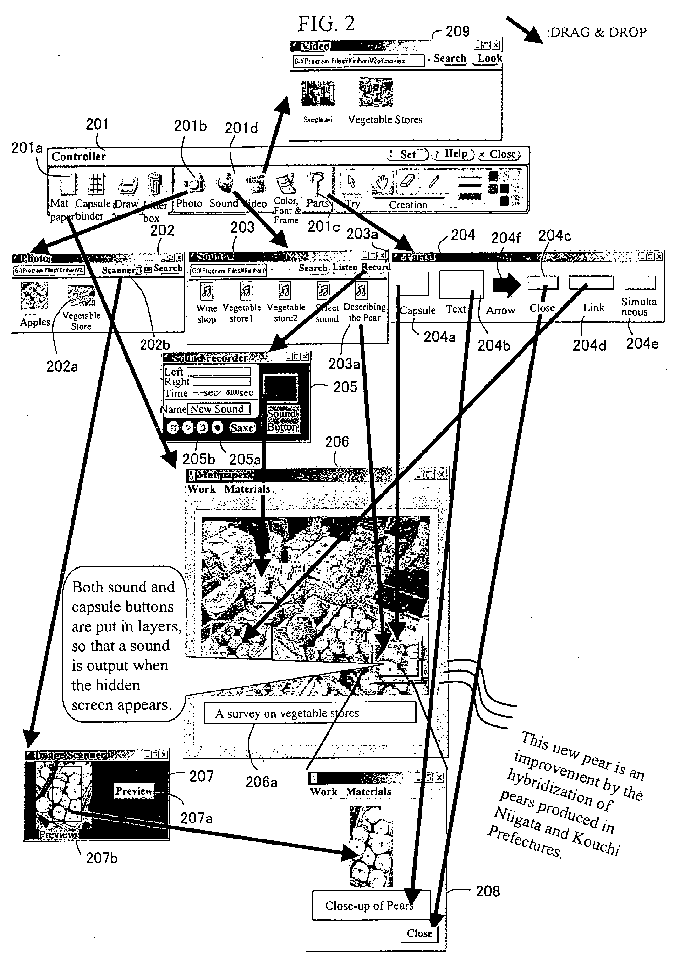

Figs.2 through 7 show screens displayed for processings executed with use of the conventional multimedia contents editing technique in this embodiment. In this embodiment, each operation is basically executed as a drag & drop operation by the mouse. In Figs.2 through 7, each drag & drop operation is denoted with an arrow. Although a plurality of screens are displayed simultaneously in this embodiment, such a screen display is referred to as a slide. In other words, a slide may be composed of one or more screens.

Each work is created in a window referred to as a mat paper or capsule binder with use of the contents editing technique in this embodiment. Materials and parts of contents of multimedia are affixed to each another in this window to complete a piece of work.

Each part has a button referred to as a capsule button and the capsule button is clicked to open another screen referred to as a capsule screen. This capsule screen function is equivalent to that of the mat paper and materials and parts of multimedia can be affixed on the capsule screen. The mat paper differs from the capsule screen in that the mat paper is formed in the bottom layer while the capsule screen is formed in the second or upper layer. If a piece of work is created on the mat paper, the capsule button of each part may be affixed on the mat paper and/or capsule screen to complete the work provided with two or more layers of screens.

As described above, in addition to the mat paper, a capsule binder is also to be placed on the screen of a work created in the bottom layer. The mat paper enables materials and parts of contents of multimedia to be affixed at any positions thereon. On the contrary, the capsule binder is partitioned like a matrix and one or more buttons can be affixed on each cell of the matrix-like capsule binder. The capsule binder can execute buttons affixed in a matrix cell thereof sequentially according to an order defined for the cell. If a capsule button is affixed in each of the plurality of cells of the capsule binder, capsule screens of the work ca be opened sequentially. In other words, if a slide opened in a cell is defined as a page, it is possible to display the pages of the work sequentially.

Therefore, just by changing the mat paper, the capsule binder, and the capsule button to another respectively such way, the configuration of screens of a work can be changed freely.

Next, the above processings will be described in detail. At first, a description will be made for how to affix materials and parts of contents of multimedia on the mat paper/capsule screen with reference to Fig. 2.

A window 201 shown in Fig. 2 is a controller. This controller 201 starts up an operation for editing contents of multimedia in this embodiment. The controller 201 is provided with functions including those for generating a mat paper and displaying a browser that handles various types of materials and displays various types of icons including a mat paper icon 201a, a photo icon 201b, a part icon 201c, and a sound icon 201d.

If the user click any of those icons, its corresponding screen is displayed; the screen may be, for example, a photograph browser screen 202 for displaying the photograph icons 202a displayed as a photograph thumb-nail, a sound browser screen 203 for displaying sound icons 203a, a parts box screen 204, or a video browser screen 209. The parts box screen 204 includes a capsule button 204a, a text button 204b, a close button 204c, a web site link button 204d, a simultaneous button 204e, and an arrow button 204f, which functions as a link button.

The scanner button 202b is clicked on the photograph browser screen 202 to display the image scanner screen 207. If the preview button 207a provided on the image scanner screen 207 is clicked, a preview screen 207b is displayed. If the record button 203b provided on the sound browser screen 203 is clicked, a sound recorder 205 is displayed so that the user can set various conditions related to a sound so as to fetch a recorded sound, thereby the user can perform processings to reproduce/stop 205b the recorded sound, as well as record 205a another sound.

If the user drags and drops the capsule button 204a of the parts box 204 at a predetermined position on the mat paper 206, then drags and drops the sound button 203a at the same position, the sound button and the capsule button are put in layers. And, on the displayed capsule screen, the user can display the preview 207b of the image scanner screen 207 by dragging and dropping it. Furthermore, the user can display text data by clicking the text button 204b and a close icon by clicking the close button 204c of the parts box 204 respectively. If the sound button and the capsule button are put in layers, a sound is output when the capsule screen 208 is displayed.

A piece of work consisting of a mat paper and a capsule screen as shown in Fig. 2 can be created, for example, in the following procedures.
(1) Drag and drop the mat paper icon 201a of the controller 201 to display the mat paper 206 on the screen.
(2) Then, drag and drop the photo icon 201b of the controller 201 to display the photo browser 202 on the screen.
(3) After that, drag and drop a photograph of a front view of a vegetable store from the photograph browser 202 and affix the photograph on the mat paper 206.
(4) Then, drag and drop the part icon 201c of the controller 201 to open the parts box 204.
(5) Drag the capsule button 204a out of the parts box 204, then drop it on the pear in the photograph of the mat paper 206 to affix the button thereon.
(6) Open the capsule button affixed in (5) to display the capsule screen 208.
(7) Drag the scanner icon 202b out of the photograph browser screen 202, then drop it on the target position to display the image scanner screen 207 there.
(8) Click the preview button 207a of the image scanner screen 207 to display the thumbnail 207b of the photograph of the pear set in the image scanner in a preview field.
(9) Drag a rectangle displayed on the thumbnail in the preview field provided on the image scanner screen 207 with the mouse to decide a range to fetch the rectangle in.
(10) Drag and drop the rectangular specified in (9) on the capsule screen 208, then fetch the photograph of the pear from the image scanner and drag the photograph onto the capsule screen 208, then drop and affix it there.
(11) Drag a text part 204b out of the parts box 204 onto the capsule screen 208, then drop and affix it there, then input "a close-up of pear" in the part 204b.
(12) Drag the text part 204b out of the parts box 204 onto the mat paper 206, then drop and affix it there, then input "a survey on the vegetable store" in the part 204b.
(13) Drag the close button 204c out of the parts box 204 onto the capsule screen 208, then drop and affix it thereon.
(14) Drag and drop the sound icon of the controller 201 to display the sound browser screen 203.
(15) Drag a voice icon 203a for describing the pear from the sound browser screen 203 onto the capsule button affixed in (5) , then drop it there to generate and affix a sound button there.
(16) Drag the record icon 203b out of the sound browser screen 203, then drop it on the target position to display the sound recorder 205 there.
(17) Click the record button of the sound recorder 205 to input a voice "This mandarin is produced in Ehime Prefecture" from the connected microphone.
(18) click the STOP button 205b of the sound recorder 205 to stop the recording. At this time, a sound button for reproducing the voice recorded in (17) and (18) in the sound recorder 205 is generated automatically.
(19) Drag the sound button generated in (17) onto the photograph of the mandarin affixed in (3), then drop and affix it there.
(20) Drag the web site link button204d out of the parts box 204 onto the apple photograph affixed in (3), the drop and affix it there.
(21) Specify the URL of the web site that describes how apples are glowing in the district as a link for the web site link button 204b affixed in (20).

With those processings described above, a piece of work is completed, so that a mat paper and a capsule screen are related to each other in the work. For example, if the user clicks the button on the pear, the pear is narrated and the capsule screen 208 of the pear photograph is opened. If the close button of the pear screen that is opened at that time, the capsule screen 208 is closed. If the user clicks the button on the apple, the WWW browser is started up and the target web site is displayed. If the user clicks the button on the mandarin, the voice inputted in (17) is reproduced.

It is possible in the processing (8) to decide a size of the image to be fetched, fetch the image, and generate a photograph of the displayed image at a time with drag and drop operations. The size of the image to be fetched can be decided according to the size of the mat paper to which the image is to be dropped. It is also possible to affix a thumbnail to the object work; there is no need to store the thumbnail in any file. Consequently, the editor (user) can fetch photographs with no regard to the size and the storage file of the image.

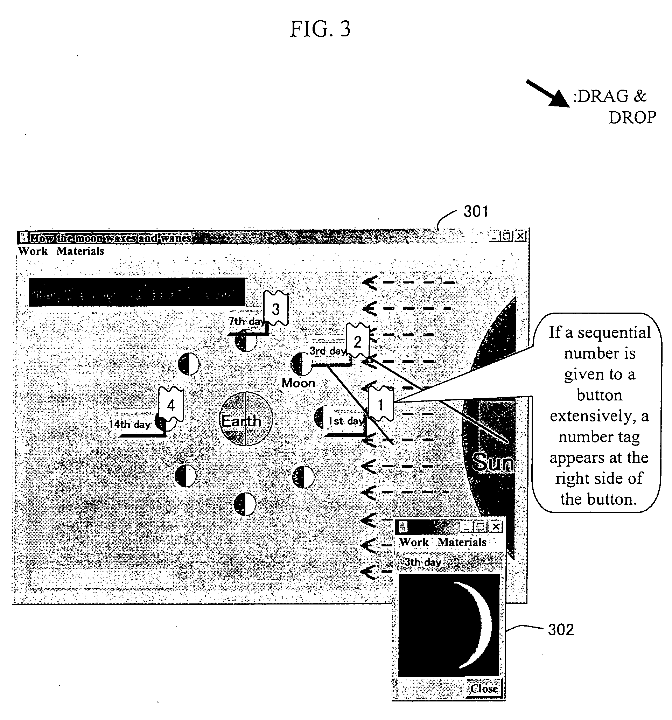

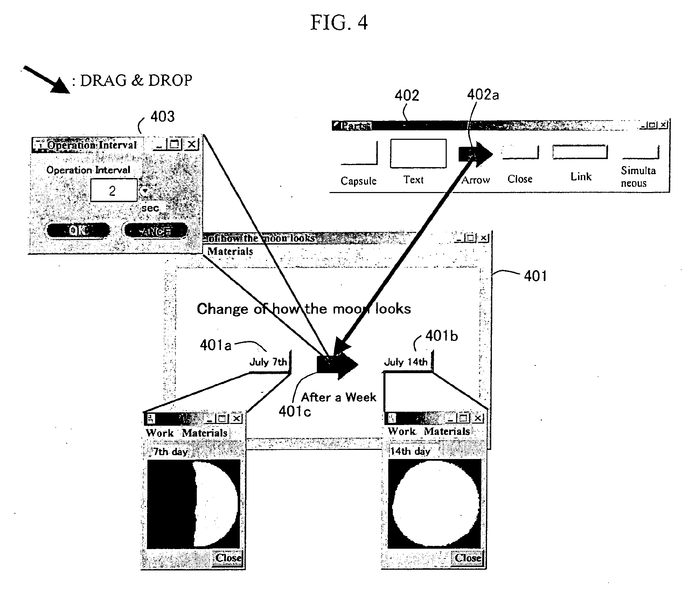

Next, a description will be made for how to specify an order for executing the buttons on the mat paper/capsule screen with reference to Figs.3 and 4. If the work shown in Fig. 3 or 4 is started up in the automatic reproduction mode, the buttons affixed on the work come to be executed automatically.

There are four methods (a) to (d) for specifying an order for executing the buttons provided on the mat paper/capsule screen. (a) Method for specifying respective turns of the buttons extensively. (b) Method for deciding an order by sorting the buttons according to the label value set in each button. (c) Method for specifying an order by turns of arrow parts. (d) Method for specifying a turn for each matrix cell of the mat paper as an attribute and affixing a button part on the cell so as to specify an order.

In that connection, (a) to (d) may be referred to as follows respectively; (a) as an extensive order mode, (b) as a label order mode, (c) as an arrow part order mode, and (d) as a cell order mode. Any of those order modes can be specified for the mat paper/capsule screen.

Fig. 3 shows a piece of work having four capsule buttons affixed on its mat paper. The work shows how the moon waxes and wanes. If one of the four capsule (1 to 4) buttons provided on the moon is clicked, the capsule screen is expanded to show an example of how the moon looks. To operate the four capsule buttons sequentially in an ascending order of the distance from the sun, the method (a) may be used to specify an order. The procedures for specifying such an order with the method (a) will be described below.
(1) Start the extensive order mode on the mat paper 301. (2) Click the "1st day" button. (3) Click the "3rd day" button. (4) Click the "7th day" button. (5) Click the "14th day" button. This completes the specification.
(1) When the extensive order mode is started up in (1), the clicks are validated only in the specified order. In (2) to (5), click the buttons sequentially in order of the desired operations. Each button having a specified turn displays the specified sequential number tag.

To exit the extensive order mode, click something other than the buttons. The buttons that are not defined for the order are sorted in an ascending order of the distance from the upper left corner of the screen and arranged at the rear of the order.

In Fig. 3, while the buttons are operated in an ascending order of the distance from the sun (method a) , the method (b) may also be used to specify the above order.

In (b), the four buttons represent labels; the order for operating the buttons is decided by sorting the character strings in the labels in order of character codes. The contents in the labels are "1st day", "3rd day", "7th day", and "14th day". The labels of the four buttons are thus sorted in order of "1st day", "3rd day", "7th day", and "14th day". Consequently, the buttons are executed according to this order.

Fig. 4 shows a work in which an order for executing the two buttons is specified with an arrow (link) part provided therebetween. Hereinafter, a description will be made for how to specify an order in (c) and an operation interval with reference to this work.

On the mat paper 401 are affixed two capsule buttons 401a and 401b, as well as an arrow part 401c. The arrow part 401c is affixed between the two capsule buttons 401a and 401b. The arrow part 401c can be dragged from the parts box 402 and dropped at a desired position so as to be generated there similarly to a capsule button. The arrow part 401c on the mat paper 401 transmits events to the two capsule buttons 401a and 401b sequentially.

The form itself of the arrow part 401c denotes a direction and the processings of the button parts are executed in the direction denoted by the arrow part. In other words, the arrow part 401c has both starting and ending points, so that the button closer to the starting point is executed first, then the button closer to the ending point is executed. Consequently, the button to be executed first is disposed around the starting point, then the button to be operated next is disposed around the ending point.

In the case of the work shown in Fig. 4, the buttons are executed in order of "July 7th" button 401a and "July 14th" button 401b. The arrow part 401c may include the execution interval between the two buttons 401a and 401b, that is, the time interval between the operation of the buttons around the starting point and around the ending point. An operation interval specification screen 403 is prepared so that this time interval is specified with a value inputted on the screen.

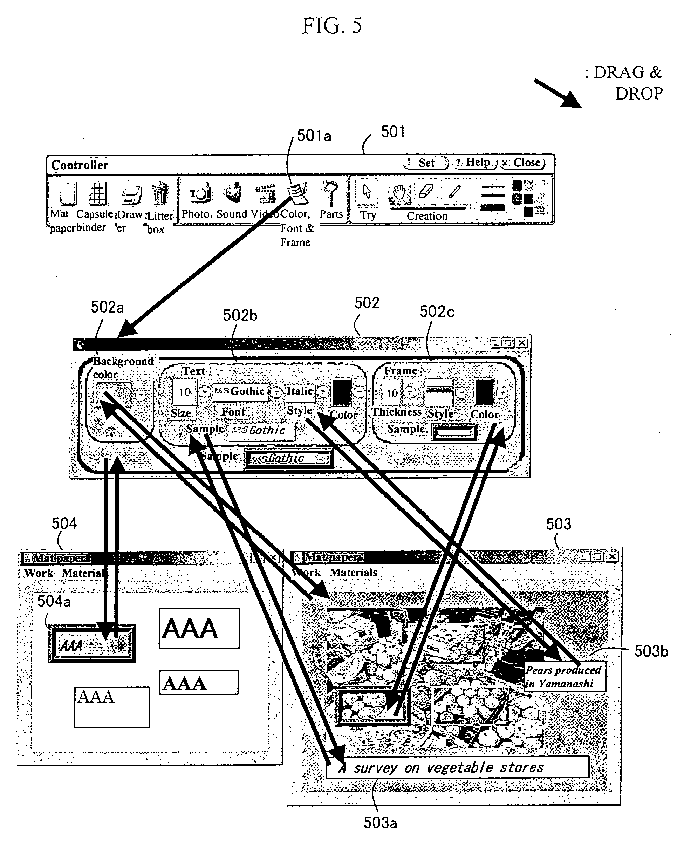

Fig. 5 shows how to change color, font, and frame attributes of an object on a work. An attribute change screen 502 as shown in Fig. 5 is prepared to change such attributes as the background color, the character, and the frame of each object on a work. On the screen are displayed a background color attribute setting button, character attribute setting buttons 502b used to set a character size, a font, a character style, a character color, etc. , and frame attribute setting buttons 502c used to set a thickness, a style, a color, etc. for a frame. The current attribute values specified currently are displayed for those buttons. The current attribute value of each button can be changed in a menu dialog box opened by an inverted triangle arrow button disposed at the right side of the button. The buttons used to set those attributes are grouped into a background color attribute set, a character attribute set, and a frame attribute set and enclosed by a line frame respectively and all those sets are enclosed by another external line frame so that they are displayed on the screen in hierarchical layers.

To change an attribute, the object is selected on the editing screen, then the target attribute button is clicked on the attribute change screen 502 or the target attribute button is dragged and dropped on the object on the attribute change screen 502. It is also possible to change a plurality of attributes groups, each consisting of a plurality of related attributes such as a character size, a font, a character style, a character color, etc., as well as to change all the attribute groups collectively. In that connection, the graphic pattern (line frame) that encloses the buttons of those attribute groups is dragged and dropped on the target object.

For example, when setting character attributes such as a character size, a font, a character style, a character color, etc. specified on the attribute change screen 502 collectively, it is done as follows.

(1) Drag and drop the "color/font/frame" icon 501a of the controller 501 to display the attribute change screen 502. (2) Specify the desired character attributes such as the character size, the font, the character style, the character color, etc. on the attribute change screen 502. (3) Drag and drop the graphic pattern (line frame) that encloses the buttons of the character attributes on the attribute change screen 502 on the object 503a of the text material located at the bottom of the mat paper screen 503.

Similarly, it is possible to set all the attributes, that is, the background color, the character attributes, and the frame attributes collectively. In that connection, it is just required to drag and drop the graphic pattern (line frame) that encloses the background color 502a, the character attributes 502b, and the frame attributes 502c provided on the attribute change screen 502 on the target object. As described above, the menu dialog can be used to specify the current attribute values on the attribute change screen 502. In addition to this method, it is also possible to specify the current attribute values by dragging the object displayed on the editing screen onto the attribute change screen 502, then and dropping it there. In that case, in addition to the specification of one attribute at a time, it is also possible to specify a plurality of attributes collectively. When specifying one attribute at a time, the object having the target attribute value in the work is dragged onto the target attribute button on the attribute change screen 502, then dropped there. On the other hand, if a plurality of attributes, for example, all the character attributes are to be specified collectively, the object on the work is dragged and dropped in the graphic pattern (line frame) that encloses the character attributes on the attribute change screen 502. If all the attributes, that is, all of the background color, the character attributes, and the frame attributes are to be specified collectively, the object is dragged and dropped in the graphic pattern (line frame) that encloses the graphic patterns (line frames) 502a, 502b, and 502c of the background color, the character attributes, and the frame attributes on the attribute change screen 502.

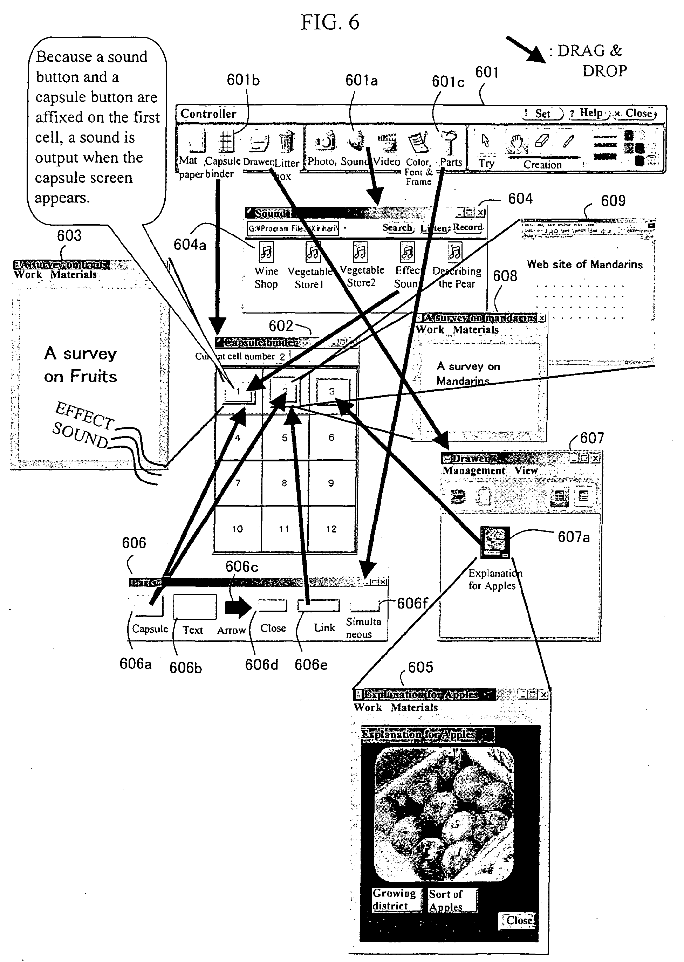

Next, a description will be made for how to affix a button to the capsule binder 602 and how to specify an execution interval between the buttons affixed on the capsule binder 602 with reference to Fig. 6. As described above, the capsule binder 602 can be used to create a work in which slides are displayed in turn in the following procedures.

The capsule binder 602 is partitioned into square matrix cells. A sequential number is assigned to each of those cells. When button parts are affixed on those matrix cells, an execution order is specified among the button parts. And, an event transmission slot is provided on each sequentially numbered cell of the capsule binder 602. The turn of each cell is decided by its position on the matrix-like capsule binder. When the automatic reproduction mode is started up, the capsule binder 602 transmits an event to each of the cells sequentially according to the specified order. Each cell, when receiving the event, executes its processing.

If a capsule button or web site link button that can open another screen is affixed on each cell, slides come to be displayed sequentially in the work. One or more button parts can also be affixed on the same cell. In that connection, the capsule binder transmits an event to one or more buttons affixed on the same cell simultaneously. The buttons on the cell, when receiving an event respectively, start their actions simultaneously. This is why screens to be opened by one or more buttons affixed on the same cell can be set as elements of the same slide.

Fig. 6 shows a work created on a capsule binder in the following procedures, for example.
(1) Drag and drop the capsule binder icon 601b of the controller 601 to generate a capsule binder 602. (2) Drag and drop the part icon 601 of the controller 601 to open the parts box 606. (3) Drag the capsule button 606a out of the parts box 606, then drop and affix it on the first cell of the capsule binder 602. (4) Open the capsule button affixed in (3) to display the capsule screen 603. (5) Drag the text part 606b out of the parts box 606, then drop and affix it on the capsule screen 603, then input "A survey on fruits." (6) Drag and drop the sound icon 601a of the controller 601 to display the sound browser 604. (7) Drag the effective sound icon out of the sound browser 604, then drop it on the first cell of the capsule binder 602 to generate and affix the sound button there. (8) Drag the web site link button 606e out of the parts box 606, then drop and affix it on the second cell of the capsule binder 602. (9) Input the URL of the web site that describes "mandarin" by specifying the web site link button affixed in (8) as a link. (10) Drag the capsule button out of the parts box 606, then drop and affix it on the second cell of the capsule binder 602. (11) Open the capsule button affixed in (10) to display the capsule screen 608. (12) Drag the text button 606b out of the parts box 606, then drop and stick it on the capsule screen 608, then input a comment "A survey on mandarins." (13) Drag the work icon 607a of "Explanation for apples" out of the drawer 607, then drop and affix it on the third cell of the capsule binder 602.

A capsule button 606a and a sound button 601g are affixed on the first cell, a web site link button 606e and a capsule button 606a are affixed on the second cell, and a capsule button is affixed on the third cell of the capsule binder respectively. Consequently, a work is created with three slides so that the first slide consisting of a capsule screen is opened from the first cell, the second slide consisting of a capsule screen and a WWW browser screen is opened from the second cell, and the third slide consisting of a capsule screen is opened from the third cell. The first slide reproduces a sound when it is opened.

A capsule screen that opens an existing work from another work can be inserted in the current work by a drag & drop operation. For example, in the above processing (13) , it is possible to create a capsule button that includes a work screen "Comment on apples" on a target cell by dragging the work "Comment on apples" out of a drawer and drop it on the cell. This capsule button is clicked to open the "Comment on apples" screen.

Although it is possible to specify an interval between transmissions of events to the current and next cells, that is, a time interval between displays of current and next slides with a value for each capsule binder after the system is started up in the auto reproduction mode, this is only possible when a motion picture or sound is inserted in each slide. If the reproduction time is longer than the specified interval time, the switching time (interval) is extended up to the reproduction time. The switching time (interval) can be specified as a reproduction time of the sound and/or motion picture included in the capsule button affixed on the cell. As a result, it is possible to prevent a reproduction break that might occur due to the switching between slides when in reproducing a sound/motion picture. In the work shown in Fig. 6, if 3 seconds are set as an interval between events to be transmitted to cells and 10 seconds are set as a reproduction time of the sound of the first cell, then the time for switching to the second slide becomes 10 seconds and the time for switching to the third slide becomes 3 seconds.

There are two methods usable for changing an order for displaying slides; one method is for moving elements (capsule button, etc.) of a slide on a cell one by one to another cell and the other method is for moving all those elements together with the cell. According to the former method, each element is dragged and dropped on the target cell. According to the latter method, the whole cell is dragged and dropped on the target place. At that time, the capsule binder decides whether the operation is done for the whole cell or for each element (button) by the starting point of the dragging.

Next, a description will be made for how to specify an order for executing buttons on a calendar capsule binder of which functions are expanded, as well as how to specify objects to be executed.

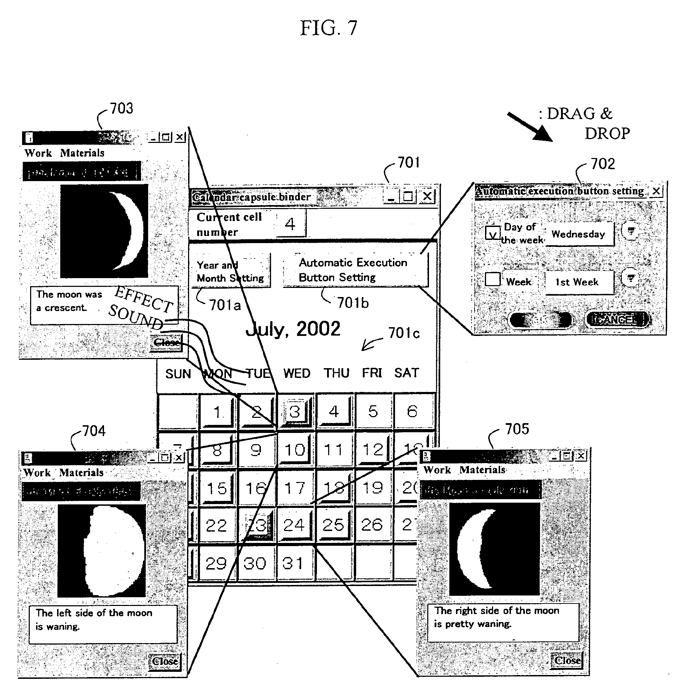

As shown in Fig. 7, the calendar capsule binder 701 includes calendar information added newly thereto. If year and month information is inputted in a dialog box opened from a "year and month setting" button 701a of the calendar capsule binder 701, the date is assigned to each cell and displayed on the cell. When executing buttons on a cell automatically in the automatic reproduction mode, the buttons to be selected can be narrowed according to the date information from among buttons displayed on the automatic execution button setting screen 702. On the automatic execution button setting screen 702, a specific day of the week is specified as a condition, so that the buttons in the fourth column comes to be executed automatically in sequence of date. Therefore, as shown in Fig. 7, it is easy to display how the moon waxes and wanes on each day of July, 2002. If July 3rd is clicked, the moon of July 3rd 703 is displayed with an effective sound. If July 10th is clicked, the moon of July 24th is displayed with a comment, etc.

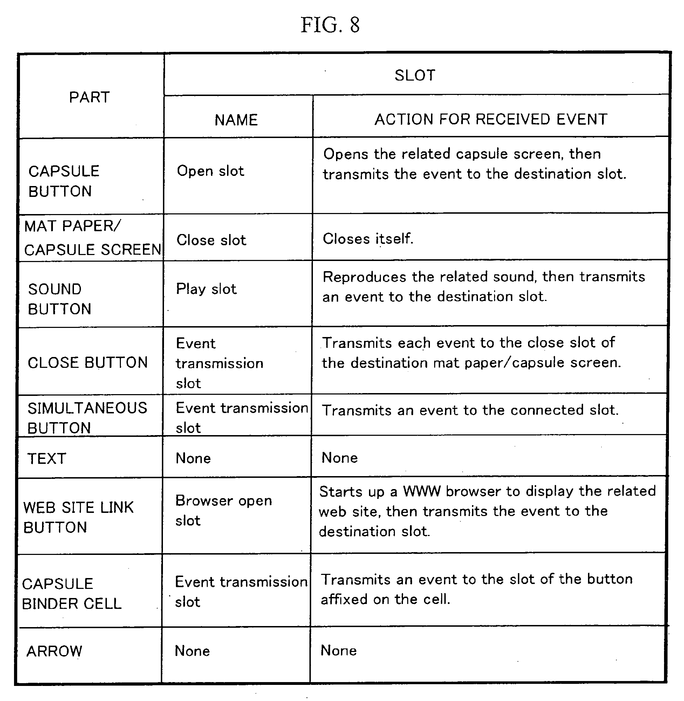

Fig. 8 shows a table of communication channels between parts referred to as slots. In this embodiment, a concept of slot is employed for a mechanism that operates another button part, the mat paper/capsule screen, and the capsule binder screen in response to a received mouse event for clicking a button part. A slot is a communication channel, for example, between a button part and a mat paper/capsule screen, between a button part and a capsule binder, and between button parts. There are a plurality of types of slots, each having a function and a name different from those of others.

For example, the open slot of the capsule button, when receiving a mouse click event, reports the received event to itself. If a sound button is affixed on the capsule button at this time, the play slot of the sound button is connected to the open slot of the capsule button. Therefore, the event transmitted to the capsule button is also transmitted to the play slot of the sound button. A predetermined sound is thus reproduced from the play slot.

The table shown in Fig. 8 describes parts, their slot names, and their slot actions in response to received events. Each part having a "button" at the end of its word transmits each received mouse click event to itself.

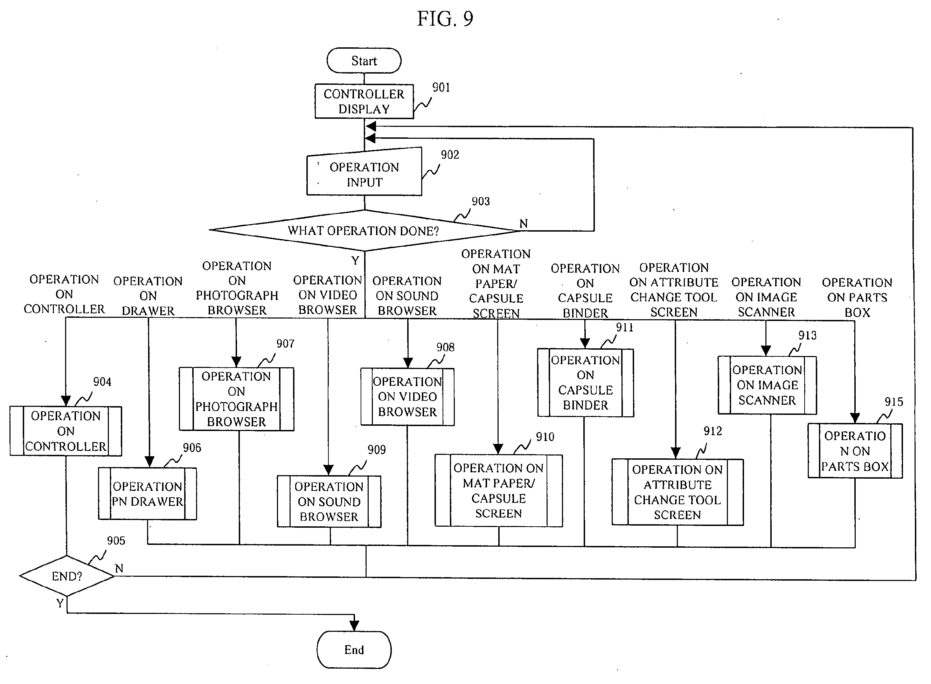

Fig. 9 shows a flowchart of the main processings in this embodiment. Upon a processing start, the system displays the controller in step 901 first. Then, the system, when receiving an operation input in step 902, decides the object window in which the operation is made, then goes to the corresponding step. If it is decided that the processing on the controller in step 904 is an ending processing, the system decides whether or not the processing is ended in step 905. If the result is YES (ended), the system exits the processing. If not, the system returns to step 902.

If the decision result in step 903 is an operation in the drawer, the system goes to step 906. If the decision result in step 903 is an operation on the video browser, the system goes to step 909. And, if the decision result in step 903 is an operation on the sound browser, the system goes to step 908. If it is an operation on the mat paper/capsule screen, the system goes to step 910. If it is an operation on the capsule binder, the system goes to step 911. If it is an operation on the attribute change screen, the system goes to step 912. If it is an operation on the image scanner, the system goes to step 913. If it is an operation on the parts box, the system goes to step 915. The system goes back to step 902 after ending any one of the above processings.

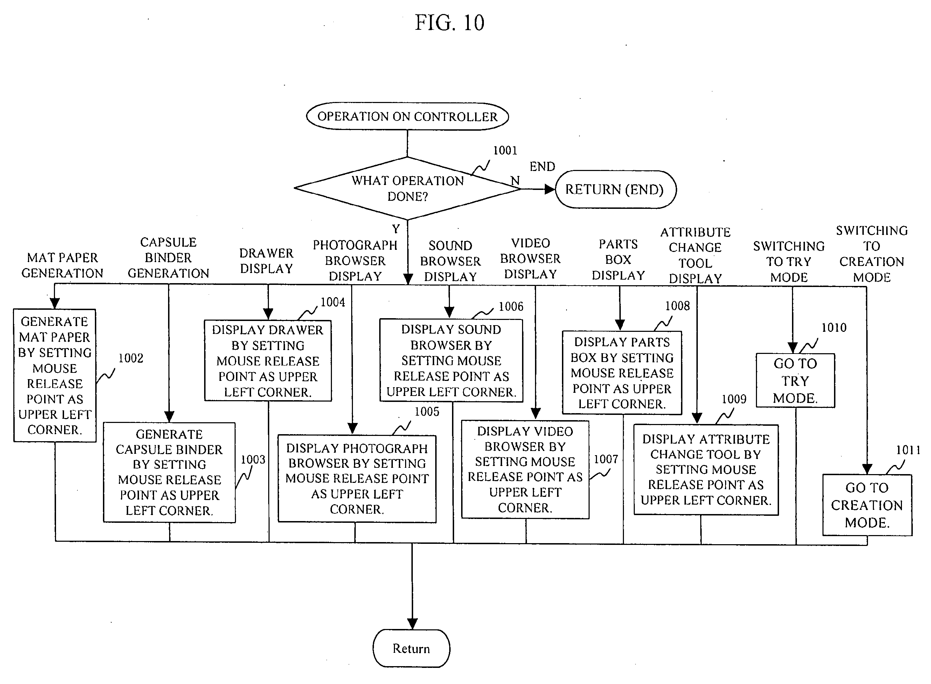

Fig. 10 shows a flowchart of the processing 904 performed on the controller. In step 1001, the system decides the operation type. If it is an ending processing, the system returns the value of "end" to the object. If the decision result in step 1001 is generating a mat paper, the system goes to step 1002 to generate a mat paper by deciding the mouse release point as the upper left corner. If it is generating a capsule binder, the system goes to step 1003 to generate a capsule binder by deciding the mouse release point as the upper left corner.

If it is displaying a drawer, the system goes to step 1004 to display a drawer by deciding the mouse release point as the upper left corner. If it is displaying the photograph browser, the system goes to step 1005 to display the photograph browser by deciding the mouse release point as the upper left corner. If it is displaying the sound browser, the system goes to step 1006 to display the sound browser by deciding the mouse release point as the upper left corner. If it is displaying the video browser, the system goes to step 1007 to display the video browser by deciding the mouse release point as the upper left corner. If it is displaying the parts box, the system goes to step 1008 to display the parts box by deciding the mouse release point as the upper left corner.

If it is displaying the attribute change tool screen, the system goes to step 1009 to display the attribute change tool screen by deciding the mouse release point as the upper left corner. If it is going to the try mode, the system goes to step 1010 to goes to the try mode. If it is going to the creation mode, the system goes to step 1011 to goes to the creation mode. Ending the processing in any of the above steps, the system returns (to step 902 shown in Fig. 9).

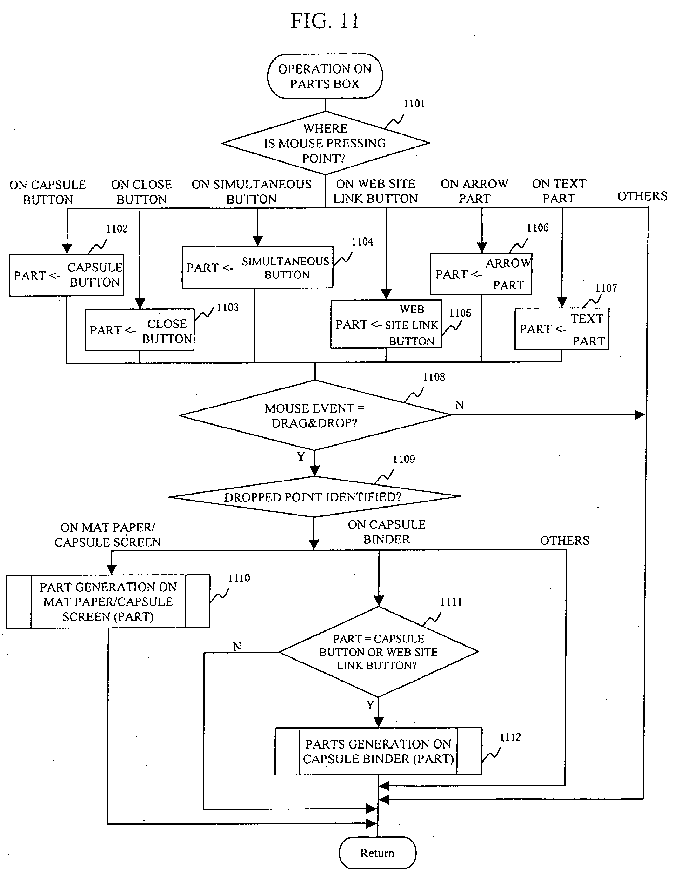

Next, how to operate the parts box will be described with reference to Fig. 11. Figs. 1 and 2 will also be referred to here as needed. Fig. 11 is a flowchart (915) of the processings performed for the parts box. As shown in Fig. 11, at first the system decides the click point of the mouse 104 in step 1101. If the click point is on the capsule part, the system goes to step 1102 to drag and drop the capsule part on a variable "part" and set (substitute) the variable value for the capsule part. If the click point is on the close button 204c, the system sets the close button in the variable "part" in step 1103. If the click point is on the simultaneous button 204e, the system sets the simultaneous button in the variable "part" in step 1104. If the click point is on the web site link button 204d, the system sets the web site link button 204d in the variable "part" in step 1105. If the click point is on the arrow 204f, the system sets the arrow part 204f in the variable "part". If the click point is on the text part 204b, the system sets the text part 204b in the variable "part". If the click point is not on any of the above items, the system returns.

If a value is set in the variable "part", the system decides whether or not the mouse event is dragging and dropping in step 1108. If the result is YES (dragging and dropping), the system goes to step 1109. If not, the system returns. In step 1109, the system decides whether the drop point is on the mat paper/capsule screen or on the capsule binder. If the result is "on the mat paper/capsule screen", the system goes to step 1110. If the result is "on the capsule binder", the system goes to step 1111. If not any of them, the system returns.

In step 1111, the system decides whether the variable "part" on the capsule binder is the capsule button or web site link button. If the result is YES (one of them), the system goes to step 1112. If not, the system returns. In step 1110, the system calls the part generation procedure on the mat paper/capsule screen using the variable "part" as its argument, then returns.

In step 1112, the system calls the part generation procedure on the capsule binder using the variable "part" as its argument, then returns.

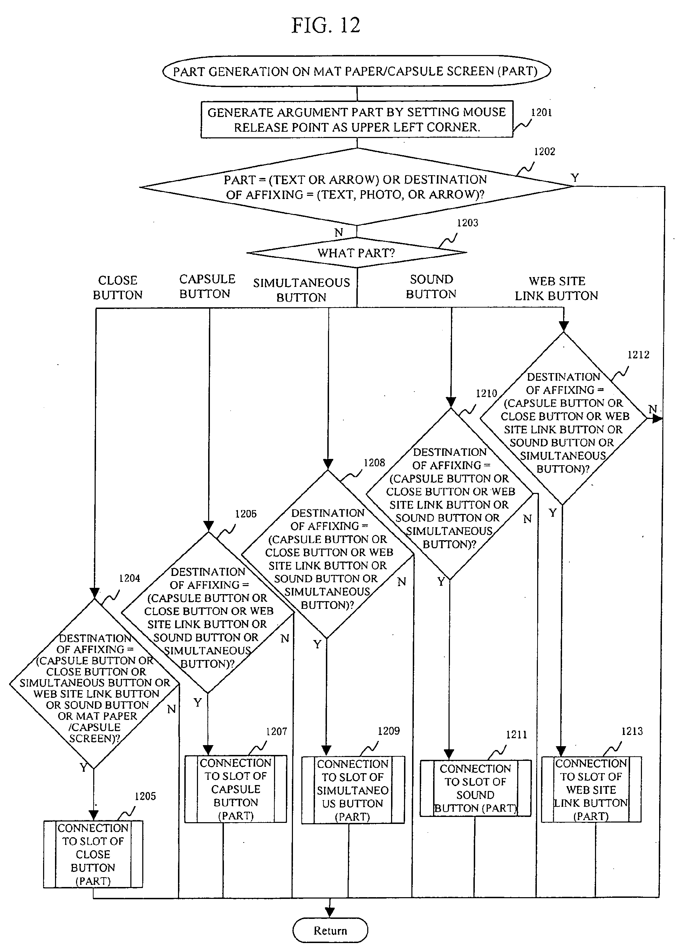

Next, a description will be made for the processings for generating a part on the mat paper/capsule screen with reference to Fig. 12. Figs. 1 and 2 will also be referred to here as needed. Fig. 12 shows a flowchart of the processings (910) for generating a part on the mat paper/capsule screen. As shown in Fig. 12, in step 1201, the system generates an argument part by deciding the mouse release point as the upper left corner. In step 1202, the system decides whether the argument part is a text 204b or arrow 204f, as well as whether it is to be affixed on text, photograph, or arrow. If the decision result is NO, the system goes to step 1203. If the decision result is YES, the system returns.

In step 1203, the system decides the next step according to the type of the argument part. If the argument part is a close button 204c, the system goes to step 1204. If the destination of the part to be affixed is any of a capsule button, a close button, a simultaneous button, a web site link button, a sound button, and a mat paper/capsule screen, the system goes to step 1205 to call the slot connection procedure of the close button using the target part as its argument.

If the target part is the capsule button 204a, the system goes to step 1206 to decide whether or not the destination of the part to be affixed is any of a capsule button, a close button, a simultaneous button, a web site link button, and a sound button. If the decision result is YES (any of them) , the system goes to step 1207 to call the slot connection procedure of the capsule button using the target part as its argument. If the target part is the simultaneous button 204e, the system goes to step 1208 to decide whether the destination of the part to be affixed is any of a capsule button, a close button, a simultaneous button, a web site link button, and a sound button. If the decision result is YES (any of them) , the system goes to step 1209 to call the simultaneous button slot connection procedure using the target part as its.

If the target part is the sound button 201d, the system decides in step 1210 whether the destination of the part to be affixed is any of a capsule button, a close button, a simultaneous button, a web site link button, and a sound button. If the decision result is YES (any of them), the system calls the sound button slot connection procedure using the target part as its argument in step 1211. If the target part is a web site link button 204d, the system decides in step 1212 whether the destination of the part to be affixed is any of a capsule button, a close button, a simultaneous button, a web site link button, and a sound button. If the decision result is YES (any of them), the system calls the slot connection procedure of the web site link button 204d using the target part as its argument in step 1213. Completing any of the above processings, the system returns.

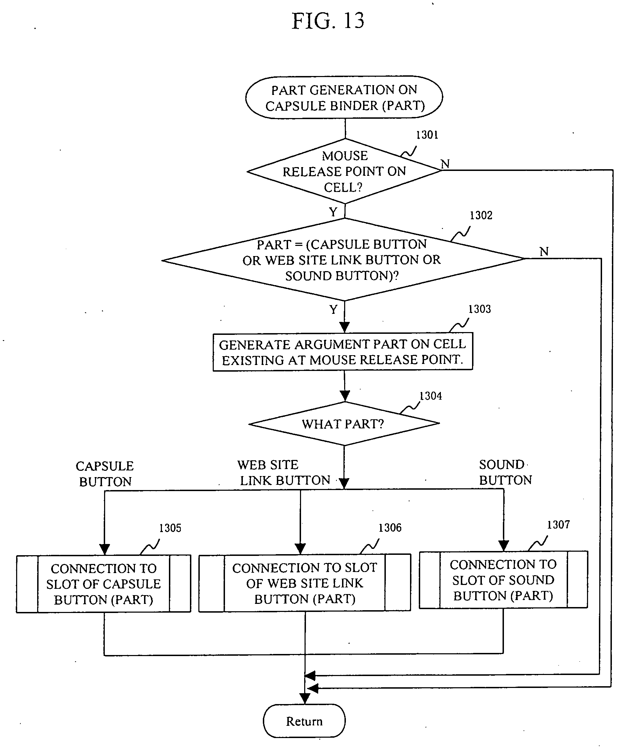

Next, how to generate a part on the capsule binder will be described with reference to Fig. 13. Fig. 13 is a flowchart of the processings 911 for generating a part on the capsule binder. Figs.1 and 2 will also be referred to here as needed here. As shown in Fig. 13, in step 1301, the system decides whether or not the mouse release point is on a cell. If the decision result is YES (on a cell), the system goes to step 1302. If not, the system returns. Then, in step 1302, the system decides whether or not the argument part is any of a capsule button 204a, a close button, a web site link button 204d, and a sound button 201d. If the decision result is YES (any of them) , the system goes to step 1303. If not, the system returns.

In step 1303, the system generates an argument part on the cell on which the mouse button is released. The system then goes to the next step decided in step 1304 according to the type of the argument part. If the argument part is the capsule button 204a, the system calls the slot connection procedure of the capsule button 204a using the part as its argument. If the argument part is the web site connection button 204d, the system calls the slot connection procedure of the web site link button 204d using the part as its argument in step 1306. If the argument part is the sound button 201d, the system calls the slot connection procedure of the sound button 201d using the part as its argument in step 1307. Completing any of the above processings, the system returns.

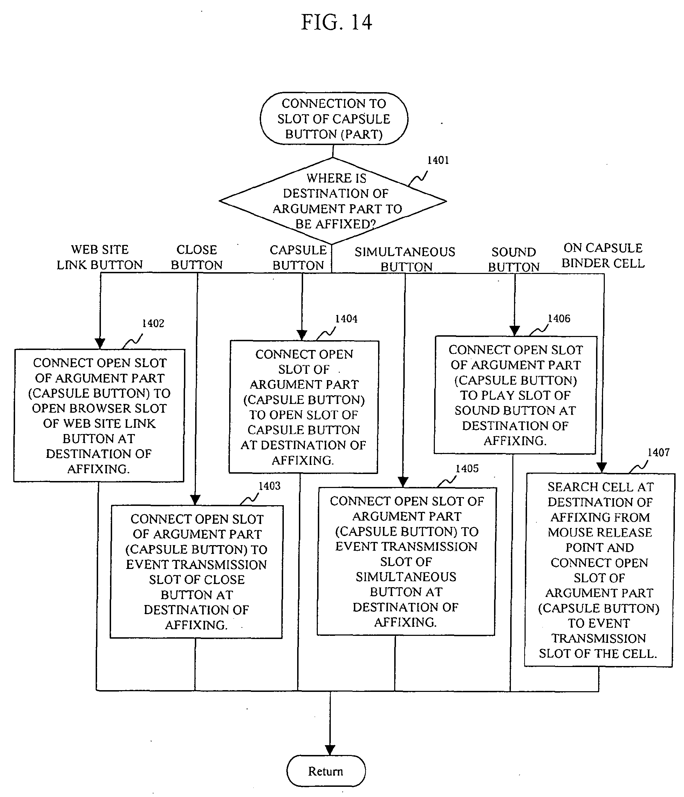

Next, how to connect the slot of the capsule button to another will be described with reference to Fig. 14. Figs.1 and 2 will also be referred to as needed here. Fig. 14 is a flowchart of the processings 1305 for connecting the slot of the capsule button to another. As shown in Fig. 14, in step 1401, the system decides the destination of the button to be affixed. If it is the web site link button 204d, the system connects the open slot of the argument capsule button 204a to the browser open slot of the web site link button 204d in step 1402. If it is the close button 204c, the system connects the open slot of the argument capsule button 204a to the event transmission slot of the close button in step 1403. If it is the capsule button 204a, the system connects the open slot of the argument capsule button 204a to the open slot of the capsule button in step 1404. If it is the simultaneous button 204e, the system connects the open slot of the argument capsule button 204a to the event transmission slot of the target simultaneous button in step 1405. If it is the sound button 201d, the system connects the open slot of the argument capsule button 204a to the play slot of the sound button in step 1406. If it is the capsule binder 602 (Fig. 6), the system connects the open slot of the argument capsule button 204a to the event transmission slot of the cell of the capsule binder in step 1407. Completing any of the above processings, the system returns.

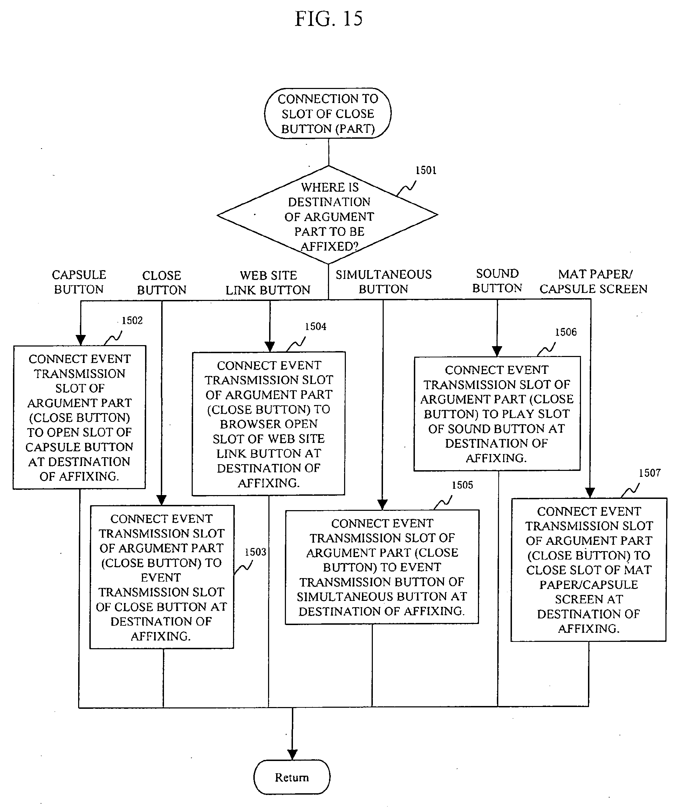

Next, how to connect the slot of the close button to another (1205) will be described with reference to Fig. 15. Figs.1 and 2 will also be referred to as needed here. Fig. 15 is a flowchart of the processings for connecting the slot of the close button to another. As shown in Fig. 15, in step 1501, the system decides the destination of the button to be affixed. If it is the capsule button 204a, the system connects the event transmission slot of the argument close button to the open slot of the capsule button 204a in step 1502. If it is the close button 204c, the system connects the event transmission slot of the argument close button to the event transmission slot of the close button in step 1503. If it is the web site link button 204d, the system connects the event transmission slot of the close button to the browser open slot of the web site link button in step 1504. If it is the simultaneous button 204e, the system connects the event transmission slot of the argument close button to the event transmission slot of the simultaneous button in step 1505. If it is the sound button 201d, the system connects the event transmission slot of the argument close button to the play slot of the sound button in step 1506. If it is the mat paper/capsule screen 208, the system connects the event transmission slot of the argument close button to the close slot of the mat paper/capsule screen in step 1507. Completing any of the above processings, the system returns.

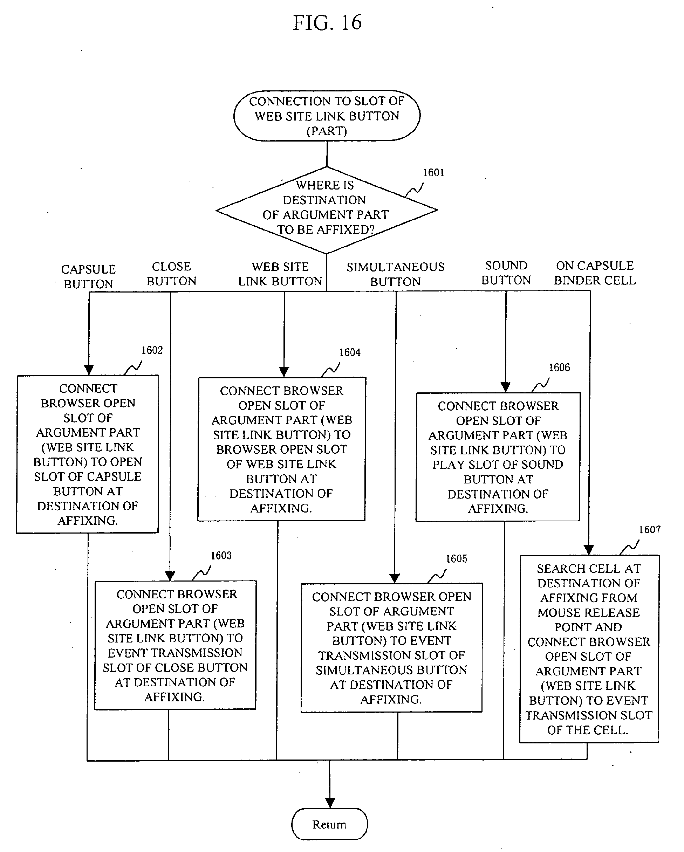

Next, how to connect the slot of the web site link button to another will be described with reference to Fig. 16. Figs.1 and 2 will also be referred to as needed here. Fig. 16 is a flowchart of the processings for connecting the slot of the web site link button to another. As shown in Fig. 16, in step 1601, the system decides the destination of the button to be affixed. If it is the capsule button 204a, the system connects the browser open slot of the argument web site link button 204d to the open slot of the capsule button 204a in step 1602. If it is the close button 204c, the system connects the browser open slot of the argument web site link button to the event transmission slot of the close button in step 1603. If it is the web site link button 204d, the system connects the browser open slot of the argument web site link button 204d to the browser open slot of the web site link button in step 1604. If it is the simultaneous button 204e, the system connects the browser open slot of the argument web site link button to the event transmission slot of the simultaneous button 204e in step 1605. If it is the sound button 201d, the system connects the browser open slot of the web site link button to the play slot of the sound button in step 1606. If it is a cell of the capsule binder 602 (Fig. 6), the system connects the browser open slot of the argument web site link button 204d to the event transmission slot of the cell of the capsule binder 602 in step 1607. Completing any of the above processings, the system returns.

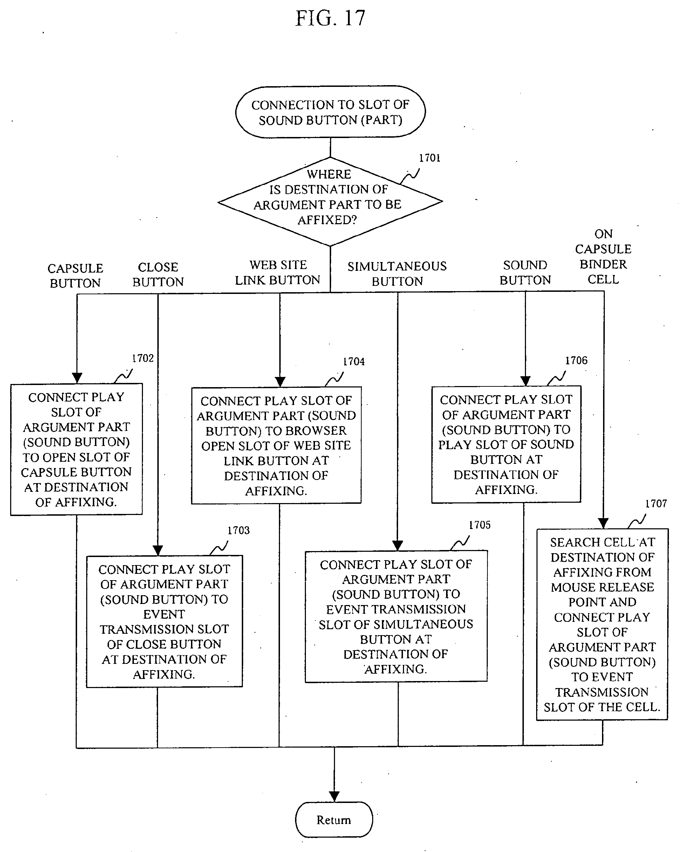

Next, how to connect the slot of the sound button to another will be described with reference to Fig. 17. Figs. 1 and 2 will also be referred to as needed here. Fig. 17 is a flowchart of the processings for connecting the slot of the sound button to another. As shown in Fig. 17, in step 1701, the system decides the destination of the argument button to be affixed. If it is the capsule button 204a, the system connects the play slot of the argument sound button 201d to the open slot of the capsule button 204a in step 1702. If it is the close button 204c, the system connects the play slot of the argument sound button 201d to the event transmission slot of the close button in step 1703. If it is the web site link button 204d, the system connects the play slot of the argument sound button 201d to the browser open slot of the web site link button in step 1704. If it is the simultaneous button 204e, the system connects the play slot of the argument sound button to the event transmission slot of the simultaneous button in step 1705. If it is the sound button 201d, the system connects the play slot of the argument sound button 201d to the play slot of the sound button 201d in step 1706. If it is a cell of the capsule binder 602 (Fig. 6), the system connects the play slot of the argument sound button to the event transmission slot of the cell of the capsule binder 602 in step 1707. Completing any of the above processings, the system returns.

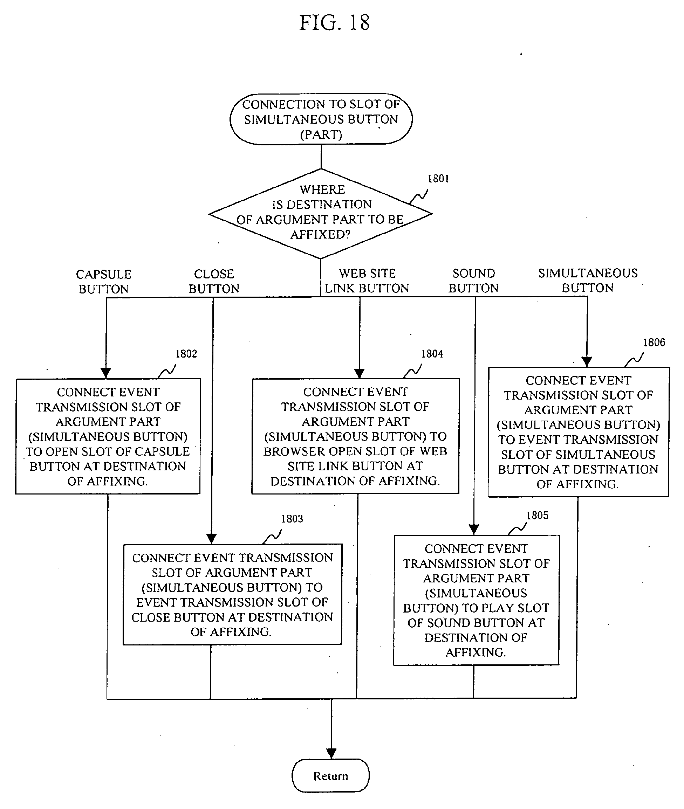

Next, how to connect the slot of the simultaneous button to another will be described with reference to Fig. 18. Figs. 1 and 2 will also be referred to as needed here. Fig. 18 is a flowchart of the processings for connecting the slot of the simultaneous button to another. As shown in Fig. 18, in step 1801, the system decides the destination of the simultaneous button to be affixed. If it is the capsule button 204a, the system connects the event transmission slot of the argument simultaneous button 204e to the open slot of the capsule button 204a in step 1802. If it is the close button 204c, the system connects the event transmission slot of the argument simultaneous button 204e to the event transmission slot of the close button 204c in step 1803. If it is the web site link button 204d, the system connects the event transmission slot of the argument simultaneous button 204e to the browser open slot of the web site link button in step 1804. If it is the sound button 201d, the system connects the event transmission slot of the argument simultaneous button 204e to the play slot of the sound button 201d in step 1805. If it is the simultaneous button 204e, the system connects the event transmission slot of the argument simultaneous button 204e to the event transmission slot of the simultaneous button 204e in step 1806. Completing any of the above processings, the system returns.

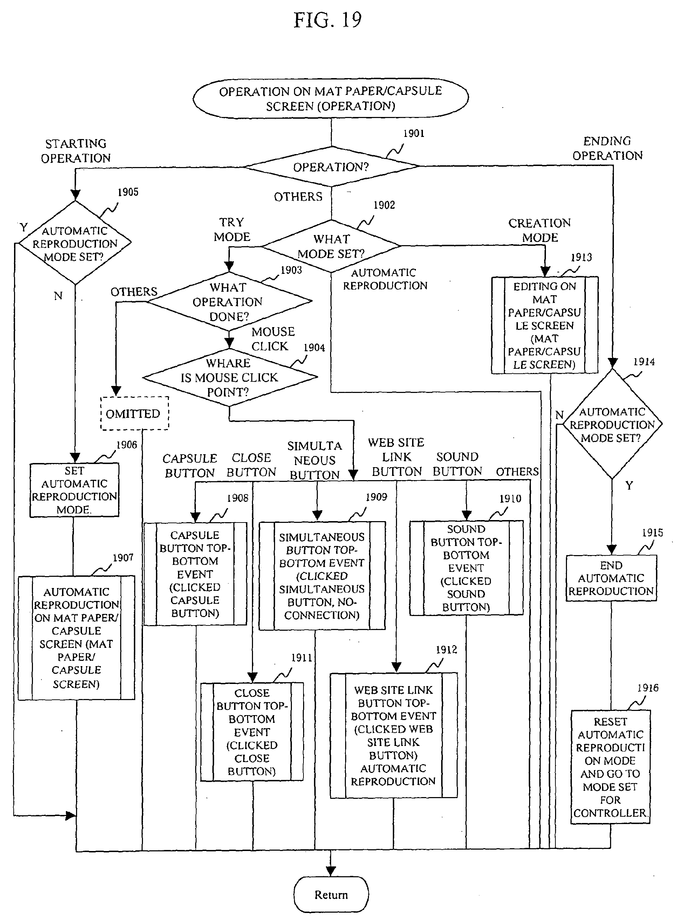

Next, the processings 910 performed on the mat paper/capsule screen will be described with reference to Fig. 19. Fig. 19 is a flowchart of the processings performed on the mat paper/capsule screen. Figs.1 and 2 will also be referred to as needed here. As shown in Fig. 19, the operation performed on the mat paper/capsule screen depends significantly the current mode that might be any of the "automatic reproduction mode", "creation mode", and "try mode". The "automatic reproduction mode" is used to appreciate works. This mode is started to execute the buttons on the mat paper/capsule screen automatically. The "creation mode" is used to edit works. In this mode, none of the capsule button, the sound button, the close button, the simultaneous button, and the web site link button functions as a button. In other words, a part is just selected without executing any predetermined function shown in Fig. 8, which is clicked with the left button of the mouse so as to be executed. The "try mode" is used to execute contents. In this mode, each button part functions as a button.

As shown in Fig. 19, in step 1901, the system decides the type of the processing. If the processing is starting an automatic reproduction processing, the system goes to step 1905. If the processing is ending the automatic reproduction processing, the system goes to step 1914. If the processing is none of them, the system goes to step 1902. In step 1905, the system decides whether or not the current mode is the automatic reproduction mode. If the decision result is NO (not the mode) , the system goes to the automatic reproduction mode in step 1906. In step 1907, the system then calls the automatic reproduction procedure on the mat paper/capsule screen using the current active mat paper/capsule screen as its argument, then returns. If the decision result in step 1905 is YES (the automatic reproduction mode), the system returns with no operation. Then, the system decides in step 1914 whether or not the current mode is the automatic reproduction mode. If the decision result is YES, the system goes to step 1915. If the decision result is NO, the system returns. After that, the system exits the automatic reproduction processing. And, in step 1916, the system resets the automatic reproduction mode and goes to the mode set in the controller, then returns. In step 1902, the system checks the current mode. If it is the try mode, the system goes to step 1903. If it is the creation mode, the system goes to step 1913.

If the current mode is the automatic reproduction mode, the system returns. Then, in step 1903, the system decides the operation type. If it is a mouse click, the system goes to step 1904. If not, the system returns. In step 1904, the system then decides the mouse click point. If the capsule button 602 is clicked, the system calls the capsule button top-to-bottom event procedure using the clicked capsule button 204a as its argument in step 1908. If the close button 204c is clicked, the system calls the close button top-to-bottom event procedure using the clicked close button as its argument in step 1911. If the simultaneous button 204e is clicked, the system calls the simultaneous button top-to-bottom event procedure using the clicked simultaneous button as its argument in step 1909. If the web site link button 204d is clicked, the system calls the web site link button top-to-bottom event procedure using the clicked web site link button as its argument in step 1912. If the sound button 201d is clicked, the system calls the sound button top-to-bottom event procedure using the clicked sound button as its argument in step 1910. If it is not any of the above points, the system returns. Completing any of the above processings, the system returns.

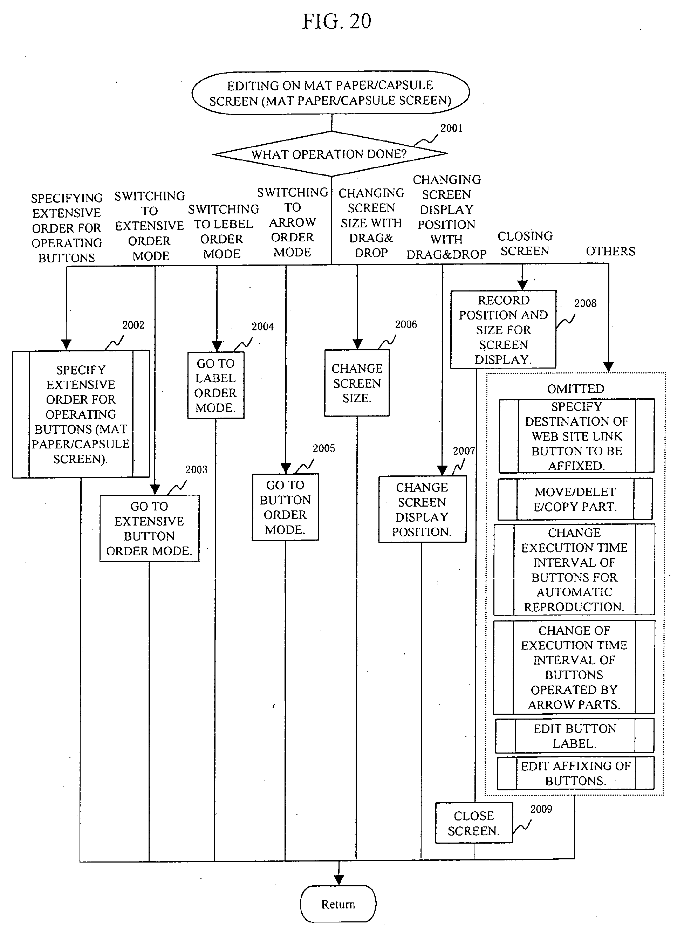

Next, the editing processings 913 performed on the mat paper/capsule screen will be described with reference to Fig. 20. Fig. 20 is a flowchart of the editing processings performed on the mat paper/capsule screen. As shown in Fig. 20, in step 2001, the system decides the operation type. If the operation is to specify an extensive order for executing the buttons, the system calls the extensive order specifying procedure using the current active mate paper/capsule screen as its argument, then returns. If the operation is to change the current mode to the extensive order mode, the system goes to the extensive order mode in step 2003, then returns. If the operation is to change the current mode to the label order mode, the system goes to the label order mode in step 2004, then returns. If the operation is to change the current mode to the arrow part order mode, the system goes to the arrow part order mode in step 2005, then returns. If the operation is to change the screen size by a drag and drop operation, the system changes the screen size in step 2006, then returns. If the operation is to change a display position on the screen by a drag and drop operation, the system changes the display position on the screen in step 2007, then returns. If the operation is to close the screen, the system records both display position and screen size in step 2008, then closes the screen in step 2009. The "extensive order mode", the "label order mode", and the "arrow part order mode" will be described later.

Other processings will be omitted in this specified for the following two reasons.
(1) The algorithm for editing affixed buttons is the same as that for generating parts. (2) Processings for specifying links of the web site link buttons, editing labels of buttons, changing attributes of materials and parts such as setting the video reproduction mode, and editing materials and parts are the same as those of general multimedia editing software programs (so-called painting software).

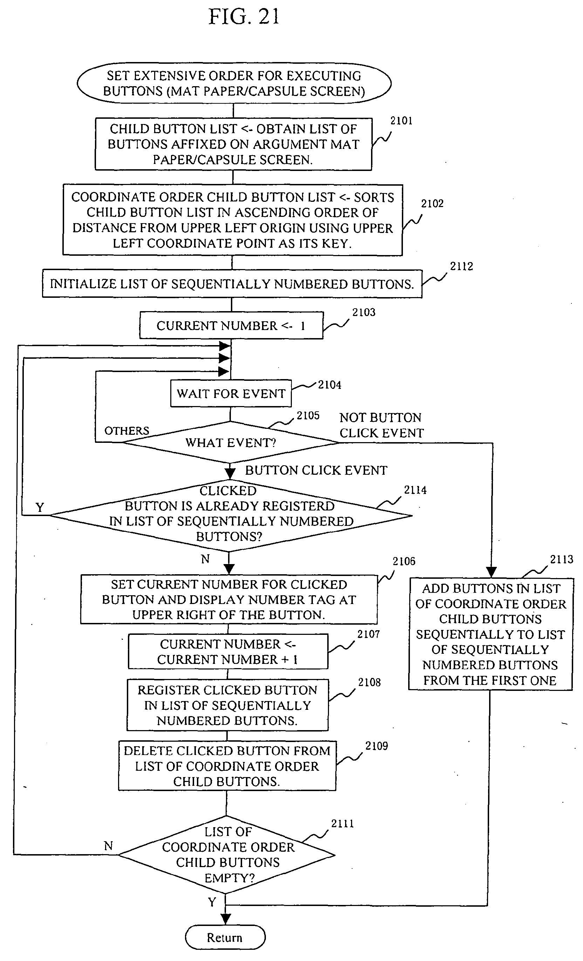

Next, how to specify an extensive order for executing buttons will be described with reference to Fig. 21. Fig. 21 is a flowchart of the processings for specifying an extensive order for executing buttons. Figs.1 and 2 will also be referred to as needed here. As shown in Fig. 21, in step 2101, the system obtains a list of buttons affixed on the argument mat paper/capsule screen and stores it in a list of variable child buttons. In step 2102, the system sorts the child button list obtained in step 2101 in an ascending order of the distance from the upper left origin using the upper left coordinate point of the button as its key in step 2102, then stores the result in the list of variable coordinate order child buttons. In step 2112, the system initializes the list of sequentially numbered buttons. Then, in step 2103, the system substitutes "1" for the variable current number to initialize it. In step 2104, the system monitors and waits for an event. If an event occurs, the system goes to step 2105. The system then decides the content of the event occurred in step 2105. If the event is a button click, the system goes to step 2114. If the event is not a button click event, the system goes to step 2113. If the event is not any click, the system returns to step 2104 to monitor event occurrence.

In step 2113, the system adds the buttons in the list of coordinate order child buttons to the list of sequentially numbered buttons, starting at the first button, then returns. After that, the system decides in step 2114 whether or not the button clicked in step 2114 is already registered in the list of sequentially numbered buttons. If the decision result is YES (registered), the system returns to step 2104 to monitor event occurrence. If the decision result is NO (not registered), the system goes to step 2106. In step 2106, the system gives the current number to the button clicked in step 2106, then displays the number tag at the upper right of the button and goes to step 2107. In step 2107, the system increases the current number. The system then registers the clicked button in the list of sequentially numbered buttons in step 2108. In step 2109, the system deletes the clicked button from the list of sequentially numbered buttons. In step 2111, the system decides whether or not the list of coordinate order child buttons is empty. If it is empty (YES), the system returns. If it is not empty (NO) , the system returns to step 2104 to monitor event occurrence. In step 2113, the system adds the buttons in the list of coordinate order buttons to the list of sequentially numbered buttons, starting at the first one, then returns.

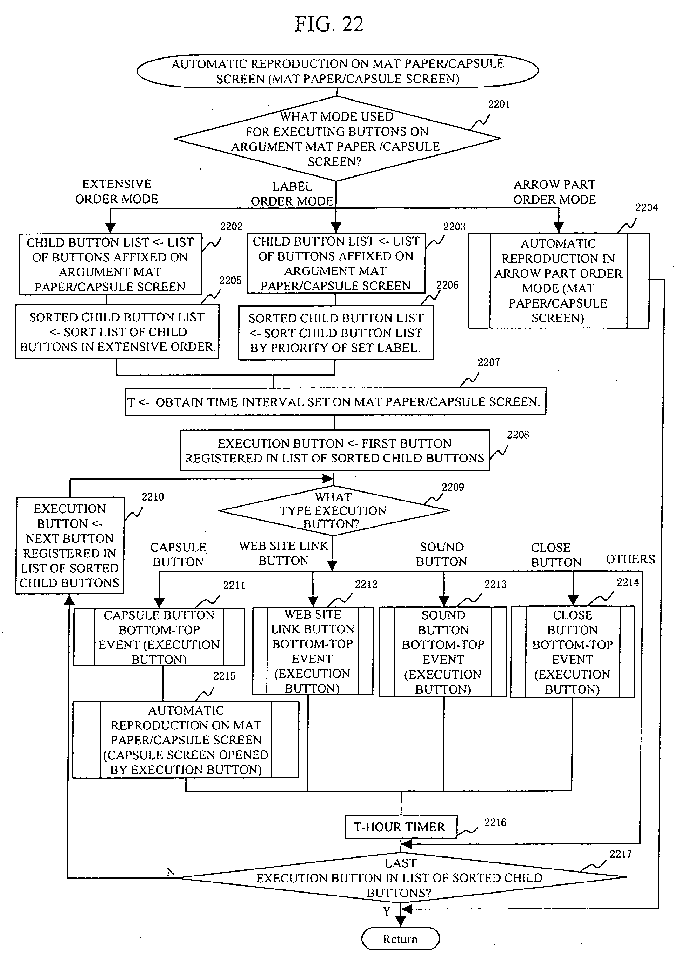

Next, automatic reproduction processings performed on the mat paper/capsule screen will be described with reference to Fig. 22. Fig. 22 is a flowchart of the automatic reproduction processings performed on the mat paper/capsule screen. As shown in Fig. 22, when an automatic processing is started, the buttons affixed on the mat paper/capsule screen are executed automatically. An order can be specified for executing those buttons sequentially in any of the following three modes, that is, the "extensive order mode", the "label order mode", and the "arrow part order mode".

In the "extensive order mode", buttons are executed according to the specified extensive order when they are clicked respectively. In the "label order mode", buttons are executed in order of priority of button label. In the "arrow part order mode", buttons are executed sequentially in the direction denoted by each arrow part that functions as a link part between buttons.

In step 2201, the system decides the order mode. If it is the extensive order mode, the system goes to step 2202. If it is the label order mode, the system goes to step 2203. If it is the arrow part order mode, the system goes to step 2204. In each of the above steps, the system calls the automatic reproduction procedure using the mat paper/capsule screen as its argument.

In step 2202, the system obtains a list of buttons affixed on the argument mat paper/capsule screen and substitutes the list for a list of variable child buttons, then goes to step 2205. In step 2205, the system sorts the child buttons in the list obtained in step 2202 in the extensive order, then goes to step 2207. In step 2203, the system obtains a list of the buttons affixed on the argument mat paper/capsule screen and substitutes the list for the list of variable child buttons, then goes to step 2206. In step 2206, the system sorts the buttons in the list obtained in step 2203 by order of priority of label, then goes to step 2207. In step 2207, the system obtains the time interval set on the mat paper/capsule screen and substitutes it for a variable T. This time interval is an execution interval between the current button and the next button. The system then obtains the first button registered in the list of sorted child buttons obtained in step 2208 and substitutes it for a variable execution button. In step 2209, the system decides the type of the execution button. If it is a capsule button, the system goes to step 2211. If it is a web site link button, the system goes to step 2212. If it is a sound button, the system goes to step 2213. If it is a close button, the system goes to step 2214. If it is none of those buttons, the system goes to step 2217. The description for the simultaneous button will be omitted here, although it is also an execution button. In step 2211, the system calls the capsule button bottom-top event procedure using the execution button as its argument, then goes to step 2215. In step 2215, the system calls the automatic reproduction procedure to be performed on the mat paper/capsule screen recursively using the capsule screen opened by the execution button as its argument. And, in step 2212, the system calls the web site link button bottom-top event using the execution button as its argument. In step 2213, the system calls the sound button bottom-top event procedure using the execution button as its argument. In step 2214, the system calls the close link button bottom-top event procedure using the execution button as its argument. In step 2216, the system starts the "T-hour timer". In step 2217, the system decides whether or not the execution button is the last button in the list of sorted child buttons. If the decision result is YES (the last button) , the system returns. If the decision result is NO, the system substitutes the next button registered in the list of sorted child buttons for the execution button in step 2210, then returns to step 2209.

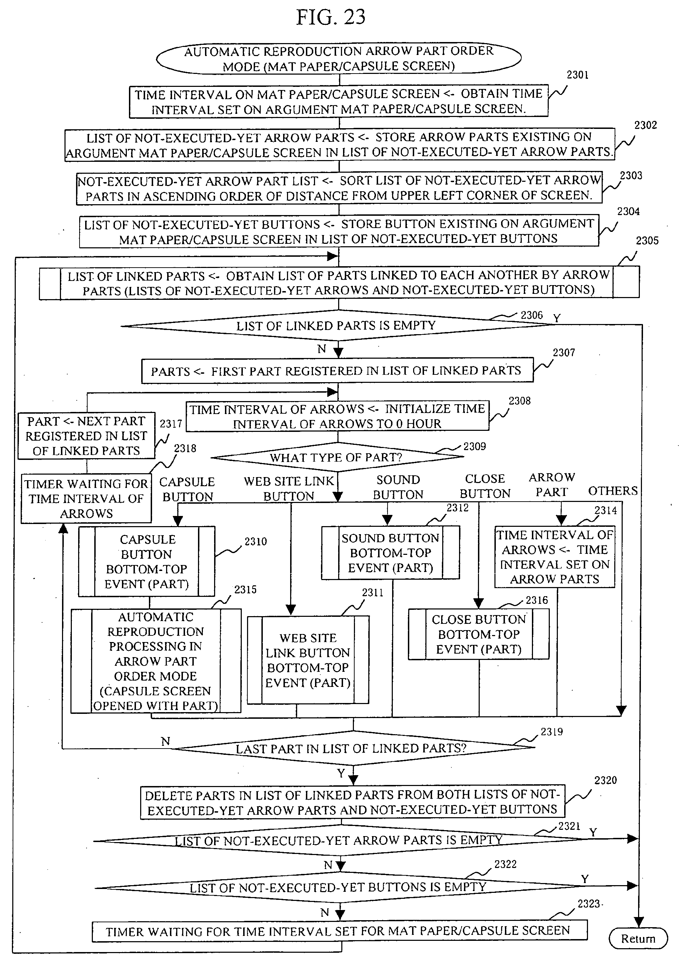

Next, automatic reproduction processings performed in the arrow part order mode will be described with reference to Fig. 23. Fig. 23 is a flowchart of the automatic reproduction processings performed in an order (direction) specified by arrow parts. Figs. 1 and 2 will also be referred to as needed here. As shown in Fig. 23, the system obtains the time interval set on the argument mat paper/capsule screen in step 2301, then substitutes it for the time interval set on the variable mat paper/capsule screen. In step 2302, the system stores the arrow parts existing on the argument mat paper/capsule screen in a list of not-executed-yet arrow parts. In step 2303, the system sorts the not-executed-yet arrow parts in the list in an ascending order of the distance from the upper left corner of the screen. In step 2304, the system stores the buttons existing on the argument mat paper/capsule screen in the list of not-executed-yet buttons. Then, in step 2305, the system calls a procedure for obtaining a list of parts linked to each another sequentially in the direction denoted by arrow parts using the list of not-executed-yet arrow parts as the first argument and the list of not-executed-yet buttons as the second argument, then stores the returned value in the list of linked parts. After that, the system decides whether or not the list of linked parts is empty in step 2306. If the list is empty, the system returns. If not, the system goes to step 2307 to substitute the first part registered in the list of linked parts for a variable part. Then, in step 2308, the system initializes the time interval of variable arrows to 0 hour. The system then decides the type of the part. If it is a capsule button, the system goes to step 2310. If it is a web site link button, the system goes to step 2311. If it is a sound button, the system goes to step 2312. If it is a close button, the system goes to step 2316. If it is an arrow part, the system goes to step 2314. If it is none of the above ones, the system goes to step 2319. Although the simultaneous button is also an execution button, the description for the button will be omitted here. The system then calls the capsule button bottom-top event using the part as its argument in step 2310. In step 2315, the system calls an automatic reproduction processing in the arrow part order mode using the capsule screen opened with the part as its argument. In step 2311, the system calls the web site link button bottom-top event using the part as its argument. In step 2312, the system calls the sound button bottom-top event using the part as its argument. In step 2316, the system calls the close button bottom-top event using the part as its argument. In step 2314, the system substitutes the time interval of arrow parts for the time interval of variable arrows. In step 2319, the system decides whether or not the part is the last one in the list of linked parts. If the decision result is YES (the last one), the system goes to step 2320. If not, the system starts up the timer so that the timer waits for the time interval of the variable arrows in step 2318. The system then substitutes the next part registered in the list of linked parts for a variable part in step 2317, then returns to step 2308. In step 2320, the system deletes the parts in the list of linked parts from both of the list of not-executed-yet arrow parts and the list of not-executed-yet buttons. Then, in step 2321, the system decides whether or not the list of not-executed-yet arrow parts is empty. If the list is empty, the system returns. If not, the system goes to step 2322. In step 2322, the system decides whether or not the list of not-executed-yet buttons is empty. If it is empty, the system returns. If not, the system starts the timer so that the timer waits for the time interval set for the variable mat paper/capsule screen, then returns to step 2305.

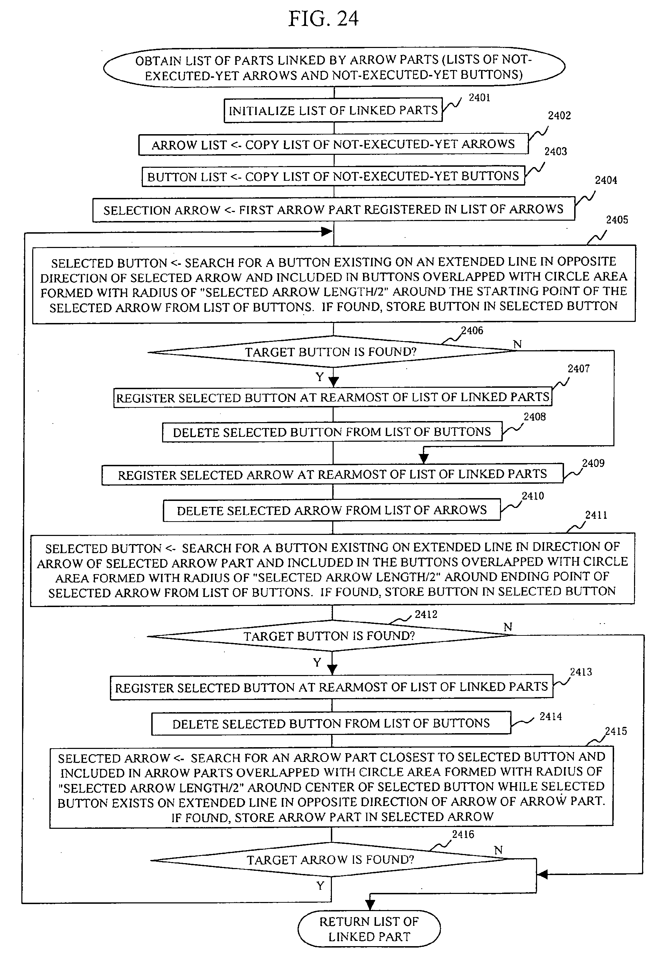

Next, how to obtain a list of parts linked sequentially in the direction denoted by arrow parts with reference to Fig. 24. Fig. 24 is a flowchart of the processings for obtaining the list of parts linked sequentially in the direction denoted by arrow parts. Figs.1 and 2 will also be referred to as needed here. As shown in Fig. 24, the system initializes a list of variable linked parts. Then, in step 2402, the system copies the list of the first argument not-executed-yet arrows and substitutes it for a list of variable arrows. In step 2403, the system copies the list of the second argument not-executed-yet buttons and substitutes it for a list of variable buttons. In step 2404, the system substitutes the first arrow part registered in the list of arrows for a variable selection arrow. In step 2405, the system searches a button existing on an extended line in the opposite direction of the selected arrow and included in the buttons overlapped with a circle area formed with a radius of "the selected arrow length/2" around the starting point of the selected arrow. The system then stores the button in the variable selection button if it is found. In step 2406, the system decides whether or not the target button is found in step 2405. If it is found, the system goes to step 2407. If not, the system goes to step 2409. The system then registers the selected button at the rear of the list of linked parts. The system deletes the selected button from the list of buttons in step 2408. In step 2409, the system registers the selected arrow at the rear of the list of linked parts. In step 2410, the system deletes the selected arrow from the list of arrows. In step 2411, the system searches a button existing on an extended line in the direction of the arrow of the selected arrow part and included in the buttons overlapped with a circle area formed with a radius of "the selected arrow length/2" around the ending point of the selected arrow. If it is found, the system substitutes it for the selected button. In step 2412, the system decides whether or not the target button is found in the search in step 2411. If it is found, the system goes to step 2413. If not, the system returns the list of linked parts to the object. In step 2413, the system registers the selected button at the rear of the list of linked parts. In step 2414, the system deletes the selected button from the list of buttons. In step 2415, the system searches an arrow part closest to the selected button and included in the arrow parts overlapped with a circle area formed with a radius of "the selected arrow length/2" around the center of the selected button while the selected button exists on an extended line in the opposite direction of the arrow of the arrow part. If it is found, the system substitutes it for a variable selection arrow. In step 2416, the system decides whether or not the target arrow part is found in the search in step 2415. If it is found, the system returns to step 2405. If not, the system returns the list of linked parts to the object.

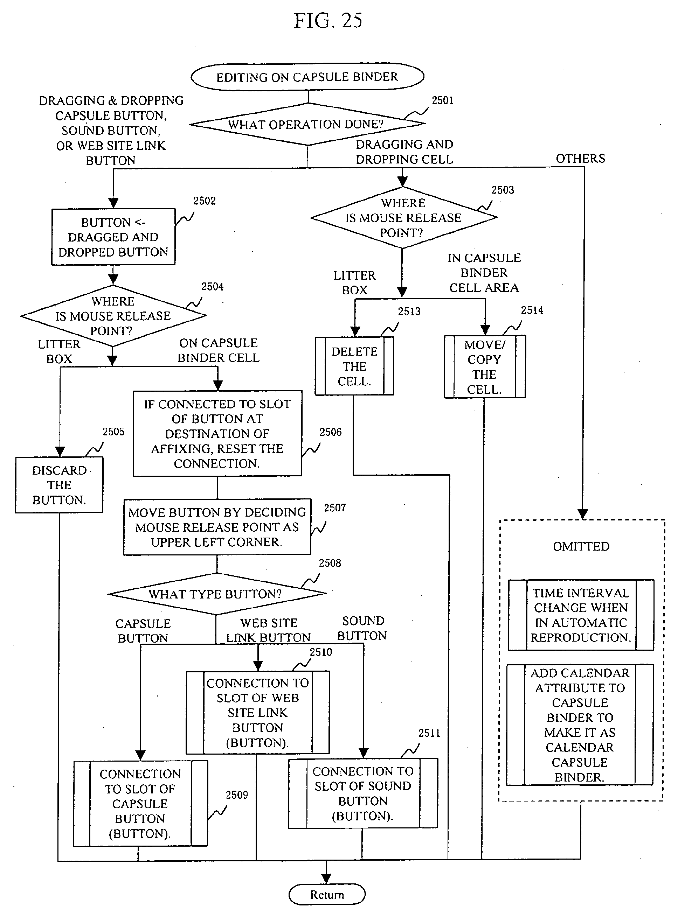

Next, editing processings performed on the capsule binder will be described with reference to Fig. 25. Fig. 25 is a flowchart of the editing processings performed on the capsule binder. Fig. 6 will also be referred to as needed here.

How a processing is to be performed on the capsule binder depends on whether it is performed for a button on a cell or for the cell itself. If a button on a cell is dragged and dropped, the system executes an editing processing for affixing a button to another. If a cell is dragged and dropped, the system executes an editing processing for the cell structure such as changing the turn of the cell or copying/deleting the cell.

As shown in Fig. 25, in step 2501, the system decides the content of the processing. If the processing is dragging and dropping a capsule button, sound button 601g, or web site link button 601e on a cell, the system goes to step 2502. If the processing is dragging and dropping a cell itself, the system goes to step 2503. The system substitutes the button dragged and dropped in step 2502 for a variable button. Then, in step 2504, the system decides the mouse release point. If it is on a litter box icon provided on the controller, the system goes to step 2505. If it is on a cell of the capsule binder, the system goes to step 2506. The system then discards the button in step 2505, then returns.

If the slot of the subject button is already connected to the slot of the destination button, the system resets the connection in step 2506. Then, the system moves the button to the mouse release point in step 2507, then goes to step 2508. The system then decides the type of the button in step 2508. If it is a capsule button, the system goes to step 2509. If it is a web site link button 606e, the system goes to step 2510. If it is a sound button, the system goes to step 2511. The system then calls the capsule button slot connection procedure using the button as its argument in step 2509, then returns.

The system then calls the web site link button slot connection procedure using the button as its argument in step 2510, then returns. In step 2511, the system calls the sound button slot connection procedure using the button as its argument, then returns. In step 2503, the system decides the mouse release point. If it is on the litter box icon provided on the controller, the system goes to step 2513. If it is on a cell of the capsule binder 602, the system goes to step 2514. In step 2513, the system calls the cell deletion procedure, then returns. In step 2514, the system calls the cell movement/copy procedure, then returns.

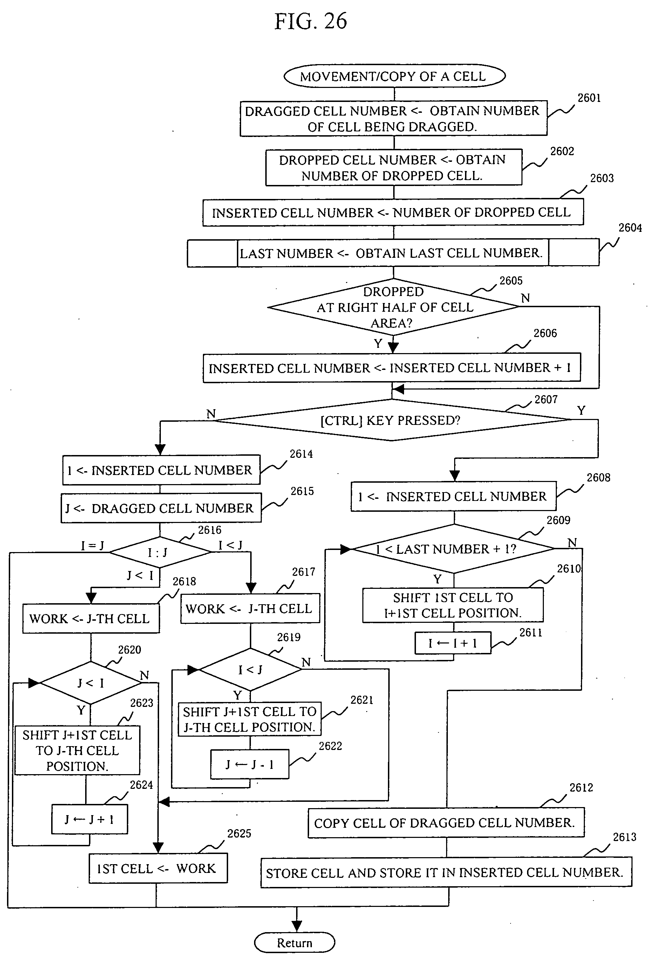

Next, how to move/copy a capsule binder cell will be described with reference to Fig. 26. Fig. 6 will also be referred to as needed here. Fig. 26 is a flowchart of the processings for moving/copying a capsule binder cell. As shown in Fig. 26, the system obtains the number of the target cell being dragged in step 2601, then substitutes it for a variable dragging cell number. In step 2602, the system obtains the number of the drop destination cell and substitutes the number for the number of the variable drop destination cell. In step 2603, the system substitutes the number of the drop destination cell for the number of the variable insertion destination cell. In step 2604, the system obtains the largest cell number of the button-affixed cells, then substitutes it for the last variable number. In step 2605, the system decides whether or not the dropped point is included in the right half of the cell. If the decision result is YES (included), the system increases the number of the insertion destination cell by one in step 2606. If not, the system goes to step 2607. In step 2607, the system decides whether or not the short cut key [CTRL] is pressed. If the key is pressed, the system decides it as a copy operation, then goes to step 2608. If not, the system decides it as a move operation, then goes to step 2614. The system then substitutes the number of the insertion destination cell for a variable I in step 2614 and the number of the dragged cell for a variable J in step 2615. Hereinafter, the system moves the target numbered cell to the destination numbered cell. The system compares I with J in step 2616. If I and J are equal, the system returns. If J is grater than I, the system goes to step 2617. If J is less than I, the system goes to step 2618. In step 2617, the system saves the J-th cell in WORK. The system then compares I and J. If J is less than I, the system goes to step 2625. If J is greater than I, the system shifts the J - I-th cell to the J-th cell in step 2621 and decreases the J value by one in step 2622, then returns to step 2619. In step 2618, the system saves the J-th cell in WORK. Then, the system compares I and J in step 2620. If J is greater than I, the system goes to step 2625. If J is less than I, the system shifts the J + I-th cell to the J-th cell position in step 2623 and increases the J value by one in step 2624, then returns to step 2620. The system then substitutes the number of the insertion destination cell for I in step 2608. In step 2609, the system compares I with the destination cell number + 1. If I is less than destination cell number + 1, the system shifts the I-th cell to the place of the I + first cell in step 2610, then increases the I value by one in step 2611. If I is greater, the system goes to step 2612. The system then copies the cell of the dragged cell number in step 2612. At that time, the system copies the cell together with all the buttons affixed thereon. In step 2613, the system stores the copied cell in the insertion destination cell number.

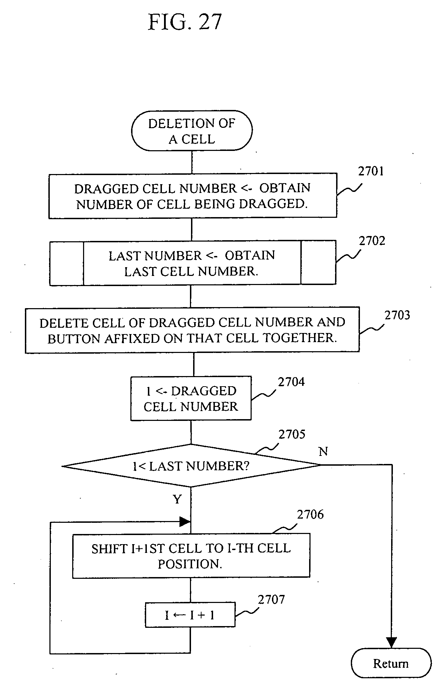

Next, how to delete a capsule binder cell will be described with reference to Fig. 27. Fig. 27 is a flowchart of the processings for deleting a cell from the capsule binder. Fig. 6 will also be referred to as needed here. As shown in Fig. 27, the system obtains the number of the cell being dragged with the mouse and substitutes the number for a variable dragging cell number(step 2701). In step 2702, the system obtains the largest button-affixed cell number and substitutes it for the last variable number. In step 2703, the system deletes the cell having the dragging cell number together with the buttons affixed on the cell. In step 2704, the system substitutes the dragging cell number for a variable I to initialize the variable I. In step 2705, the system compares I with the last number. If I is less than the last number, the system shifts the cell having I + the first cell number to the position of the first cell in step 2706. If I is greater than the last number, the system returns.

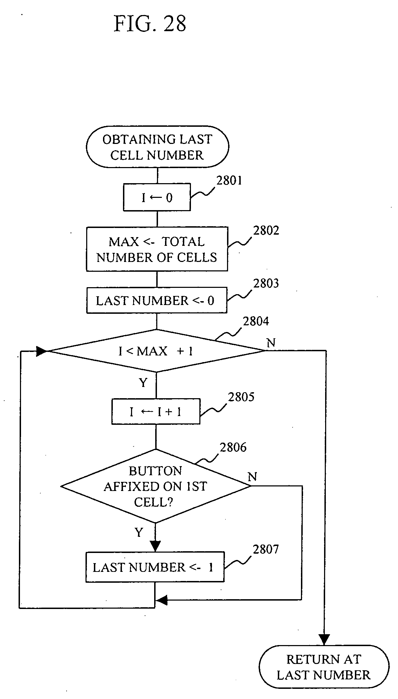

Next, how to obtain the last cell number will be described with reference to Fig. 28. Fig. 28 is a flowchart of the processings for obtaining the last cell number. Fig. 6 will also be referred to as needed here. As shown in Fig. 28, this processings are executed to obtain the largest button-affixed cell number and return the value to the object. At first, the system substitutes 0 for I that represents the current cell number to initialize the I in step 2801. In step 2802, the system substitutes the total number of cells for a variable MAX. In step 2803, the system substitutes 0 for the last variable number for which a returned value is to be substituted to initialize the last variable number. In step 2804, the system compares I with MAX. If I is greater than MAX, the system returns the last cell number to the object. If I is less than MAX or equal to MAX, the system goes to step 2805. In step 2805, the system increases the I value by one. In step 2806, the system decides whether or not a button is affixed on the I-th cell. If a button is affixed thereon, the system substitutes I for the last cell number in step 2807, then jumps to step 2804. If not, the system jumps to step 2804.

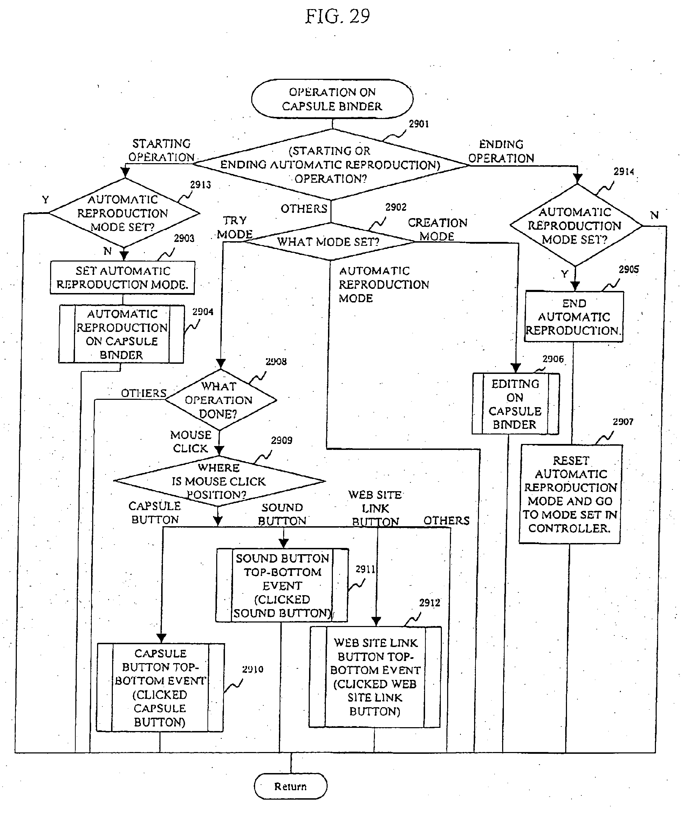

Next, other processings performed on the capsule binder will be described with reference to Fig. 29. Fig. 29 is a flowchart for the other processings performed on the capsule binder. Fig. 6 will also be referred to as needed here. As shown in Fig. 29, the capsule binder has three modes just like the mat paper/capsule screen, that is, "automatic reproduction mode", "creation mode", and "try" mode. The "automatic reproduction mode" is used to appreciate works. This mode is started up to execute buttons on the capsule binder cell by cell automatically. The "creation" mode is used to edit works so as to change the order of cells, as well as to delete cells, and affix buttons to each other on each cell. In this mode, none of the capsule button, the sound button, the close button, the simultaneous button, the web site link button function as a button. In other words, no mouse click event can function to execute any predetermined function shown in Fig. 8; each event just enables selection of a part. This operation is an editing operation just to affix buttons to each other. On the other hand, the "try" mode is used to execute contents. In this "try" mode, each button part can execute its original function.

As shown in Fig. 29, the system decides the type of the operation in step 2901. If it is starting an automatic reproduction processing, the system decides whether or not the automatic reproduction mode is set currently in step 2914. If not, the system goes into the automatic reproduction mode in step 2903, then calls the automatic reproduction procedure to be performed on the capsule binder in step 2904, then returns. If the decision result in step 2914 is YES (the automatic reproduction mode is set), the system returns. If it is ending the automatic reproduction processing, the system decides whether or not the automatic reproduction mode is set currently in step 2914. If not, the system goes into the automatic reproduction mode in step 2903, then calls the automatic reproduction procedure to be performed on the capsule binder in step 2904, then returns. If the decision result in step 2914 is YES (the automatic reproduction mode is set), the system exits the automatic reproduction processing in step 2907, then goes into the mode set in the controller, then returns.

If the decision result in step 2914 is NO (not the automatic reproduction mode), the system returns. If the operation is not starting nor ending the automatic reproduction processing, the system goes to step 2902 to decide the mode. If the mode is the "try" mode, the system goes to step 2906. If the mode is the automatic reproduction mode, the system returns. Then, the system decides the content of the operation in step 2908. If it is a mouse click, the system goes to step 2909. If not, the system returns.

In step 2909, the system decides the mouse click point. If the capsule button is clicked, the system calls the capsule button top-bottom event procedure using the clicked capsule button as its argument in step 2910. If the close button is clicked, the system calls the close button top-bottom event procedure using the clicked close button as its argument in step 2911. If the sound button is clicked, the system calls the sound button top-bottom event procedure using the clicked sound button as its argument in step 2911. If the web site link button is clicked, the system calls the web site link button top-bottom event procedure using the clicked web site link button as its argument in step 2912. If none of the above buttons is clicked, the system returns. Completing any of the above processings, the system also' returns.

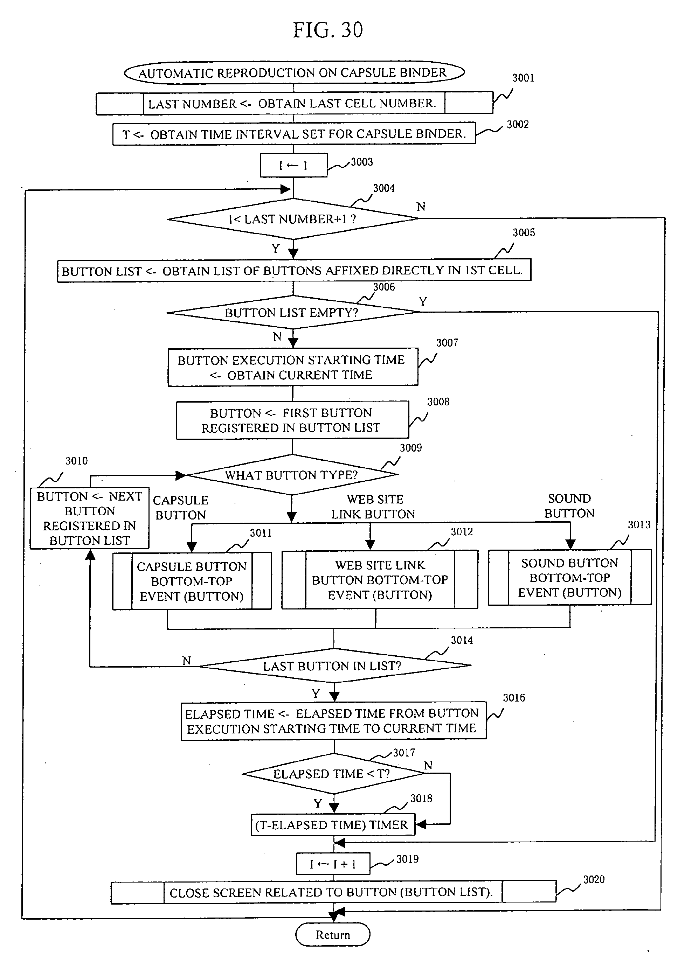

Next, automatic reproduction processings performed on the capsule binder will be described with reference to Fig. 30. Fig. 30 is a flowchart of the automatic reproduction processings performed on the capsule binder. Fig. 6 will also be referred to as needed here. The automatic reproduction processings are executed to transmit an event to each cell of the capsule binder by order of priority of cell. One or more buttons can be affixed on each cell of the capsule binder 602 and each button affixed on the cell is connected to the event transmission slot of the cell. Here, at first, the system obtains a list of buttons affixed on a cell and transmits an event to those buttons affixed on the cell simultaneously. At first, the system transmits an event to each cell of the capsule binder by order of cell's priority. As described above, one or more buttons can be affixed on each cell of the capsule binder and each of those buttons is connected to the event transmission slot of the cell. Here, the system obtains a list of the buttons affixed on a cell and transmits an event to those buttons affixed on the cell simultaneously.

In step 3001, the system obtains the largest button-affixed cell number and substitutes it for the last variable number. In the subsequent steps, the system transmits events only to button-affixed cells included in those disposed between the first number cell and the last number one by one. In step 3002, the system obtains the time interval set on the capsule binder for transmitting an event from the current cell to the next cell, then substitutes it for a variable T. Although this time interval is used usually, if reproduction of a sound/video started at a cell exceeds this time interval, the system control goes to the next cell after the reproduction is completed. In step 3003, the system regards I as the current cell number to be used for the next loop, then substitutes 1 for the I to initialize the I value. In step 3004, the system decides whether or not the I is less than the last cell number + 1. If it is less, the system goes to step 3005. If not, the system returns. In step 3005, the system obtains a list of buttons affixed directly on the I-th cell, then substitutes it for a list of variable buttons. In step 3005, the system refers to the number of buttons in the list. And, if the list is not empty, the system goes to step 3007. If the list is empty, the system jumps to step 3019. In step 3007, the system obtains the current time and substitutes it for a starting time at which execution of variable buttons starts. In step 3008, the system obtains the first button in the list and substitutes it for a variable button. In step 3009, the system decides the type of the button. If it is a capsule button, the system calls the capsule button bottom-top event procedure using the button as its argument in step 3011, then goes to step 3014. If it is a web site link button, the system calls the web site link button bottom-top event procedure using the button as its argument in step 3012, then goes to step 3014. If it is a sound button, the system calls the sound button bottom-top event procedure using the button as its argument in step 3013, then goes to step 3014. In step 3014, the system decides whether or not the button is the last one in the list. If it is the last button, the system goes to step 3016. If not, the system obtains the next button in the list in step 3010, then substitutes it for a button, then returns to step 3009. In step 3016, the system calculates an elapsed time between the variable button execution starting time and the current time (that is, the first cell execution time), then substitutes it for a variable elapsed time. In step 3017, the system decides whether or not the variable elapsed time exceeds the variable T. If the elapsed time does not exceed the variable T, the system starts up the T-elapsed time timer in step 3018. If the elapsed time is exceeded, the system goes to step 3019. In step 3019, the system starts up the (T-elapsed time) timer. In step 3019, the system also increases the I value by one. In step 3020, the system calls the procedure for closing the button-related screen using the button list as its argument.

In the flowchart shown in Fig. 30, all the cells are executed sequentially and automatically. However, if the capsule binder to be subjected to an automatic reproduction processing has a calendar attribute (if it is a calendar capsule binder), the automatic reproduction is executed sequentially for specific cells, for example, cells in a specified row/column.

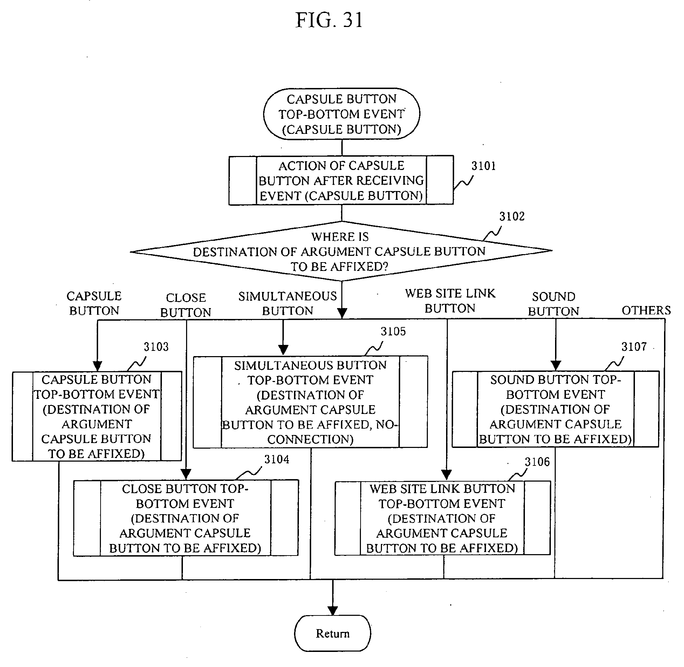

Next, how to process a capsule button top-bottom event will be described with reference to Fig. 31. Fig. 31 is a flowchart of the capsule button top-bottom event processings. If a click event is transmitted to a button, the button that receives the event executes its function, then transmits the event to another button to which the button is affixed. The button that receives the event then transmits the event to still another button to which the button is affixed. This processing continues up to the last destination button affixed. Such way, an event is kept transmitted sequentially from a button to the next button by turns as specified. Fig. 31 shows such event transmission processings. As shown in Fig. 31, in step 3101, the system calls a capsule button action procedure to be performed after receiving an event using the argument capsule button as its argument. In step 3102, the system decides the destination of the argument capsule button to be affixed. If the argument capsule button is to be affixed on another capsule button, the system calls the capsule button top-bottom event procedure using the destination of the argument capsule button to be affixed as its argument in step 3103 recursively, then returns. If the destination decided in step 3102 is a close button, the system calls the close button top-bottom event procedure using the destination of the argument capsule button to be affixed as its argument in step 3104, then returns. If the destination is a simultaneous button, the system calls the simultaneous button top-bottom event procedure using the destination of the argument capsule button to be affixed and the no-connection (call type) as its arguments in step 3105, then returns. The simultaneous button event call type will be described later. If the destination decided in step 3102 is a web site link button, the system calls the web site link button top-bottom event procedure using the destination of the argument capsule button to be affixed as its argument in step 3106, then.returns. If the destination decided in step 3102 is a sound button, the system calls the sound button top-bottom event procedure using the destination of the argument capsule button to be affixed as its argument in step 3107, then returns. If the destination decided in step 3102 is none of the above buttons, the system returns with no operation.

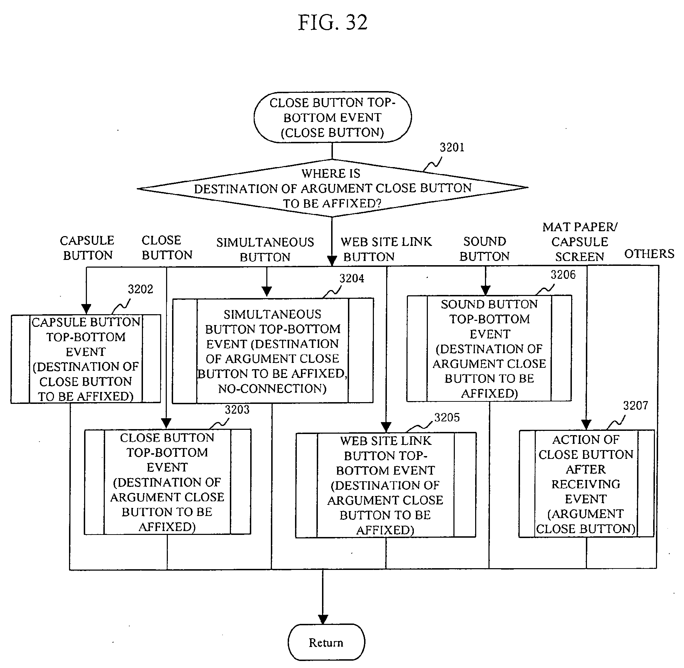

Next, how to process a close button top-bottom event will be described with reference to Fig. 32. Fig. 32 is a flowchart of the close button top-bottom event processings. Just like the processings shown in Fig. 31, in Fig. 32, an event is transmitted from the first button to the second affixed button, then to the third button up to the last destination button affixed sequentially. As shown in Fig. 32, in step 3201, the system decides the destination of the argument close button to be affixed. If the destination decided in step 3201 is a capsule button, the system calls the capsule button top-bottom event procedure using the destination of the argument close button to be affixed as its argument in step 3202, then returns. If the destination decided in step 3201 is a close button, the system calls the close button top-bottom event procedure using the destination of the argument close button as its argument in step 3203, then returns. If the destination decided in step 3201 is a simultaneous button, the system calls the simultaneous button top-bottom event procedure using the destination of the argument close button to be affixed and the no-connection (call type) as its arguments in step 3204, then returns. The simultaneous button event call type will be described later. If the destination decided in step 3201 is a web site link button, the system calls the web site link button top-bottom event procedure using the destination of the close button to be affixed as its argument in step 3205, then returns. If the destination decided in step 3201 is a sound button, the system calls the sound button top-bottom event procedure using the destination of the argument close button to be affixed as its argument in step 3206, then returns. If the destination decided in step 3201 is a mat paper/capsule screen, the system calls the close button action procedure performed after receiving an event using the destination of the argument close button to be affixed as its argument in step 3207, then returns. If the destination decided in step 3201 is none of the above buttons, the system returns with no operation.

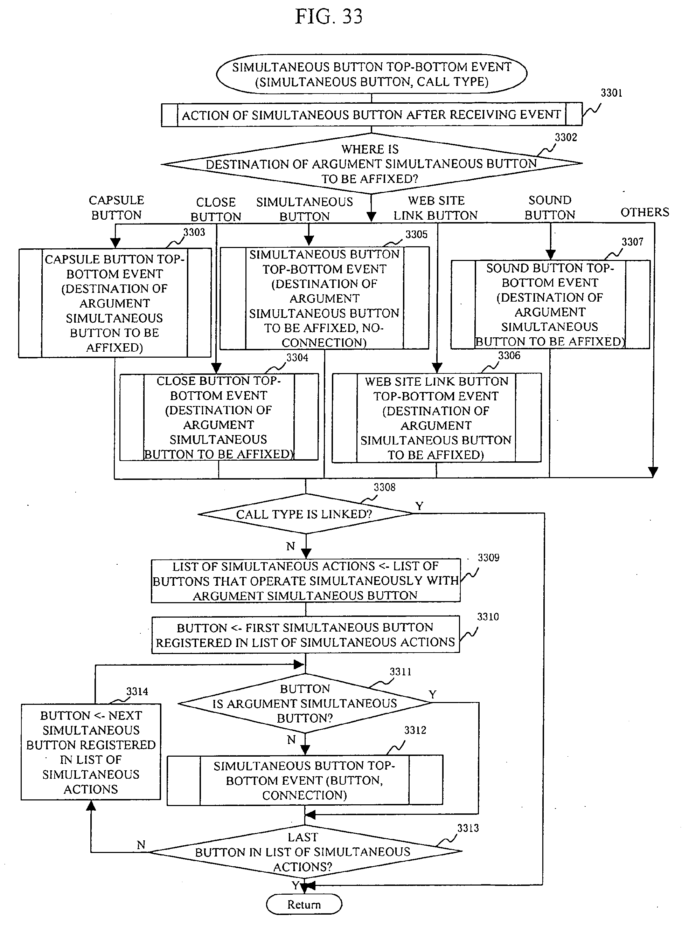

Next, how to process a simultaneous button top-bottom event will be described with reference to Fig. 33. The simultaneous button, for example, when receiving a click event, transmits the event to a slot to which it is affixed, then transmits the event to the slots of all the simultaneous buttons copied from itself (those copied buttons are referred to as connected buttons here). Fig. 33 is a flowchart of the simultaneous button top-bottom event processings. As shown in Fig. 33, the system calls the simultaneous button action procedure performed after receiving an event in step 3301, then goes to step 3302. In step 3302, the system decides the destination of the argument simultaneous button to be affixed. If the destination is on a capsule button, the system calls the capsule button top-bottom event procedure using the destination of the argument simultaneous button to be affixed as its argument, then goes to step 3308. If the destination is on a close button, the system calls the close button top-bottom event procedure using the destination of the argument simultaneous button to be affixed as its argument in step 3304, then goes to step 3308. If the destination is on a simultaneous button, the system calls the simultaneous button top-bottom event procedure using the destination of the argument simultaneous button to be affixed as its first argument and the call type mode of no-connection as its second argument in step 3305, then goes to step 3308. The call type mode will be described later. If the destination is on a web site link button, the system calls the web site link button top-bottom event procedure using the destination of the argument simultaneous button to be affixed as its argument in step 3306, then goes to step 3308. If the destination is on a sound button, the system calls the sound button top-bottom event procedure using the destination of the argument simultaneous button to be affixed as its argument in step 3307, then goes to step 3308. If the destination is none of the above buttons, the system goes to step 3308 to decide the argument call type. If the call type is a link, the system returns. If the call type is no-link, the system goes to step 3308. The processings in and after step 3308 are executed upon receiving an event so as to transmit the subject event to the slots of all the simultaneous (linked) buttons copied from itself. The processing for transmitting an event to the buttons linked to the simultaneous button is called recursively. A call type is used as the second argument so as not to repeat calls between linked buttons. This call type is used to distinguish between events from buttons to which it is affixed and events from buttons to which it is linked. Buttons linked to the simultaneous button are managed in a list of simultaneous actions. In step 3308, the system decides whether or not the argument call type is a link. If it is a link, the system returns with no operation. If not, the system goes to step 3309. In step 3309, the system substitutes the list of the simultaneous actions of the argument simultaneous button for another list of simultaneous actions. In step 3310, the system sets the first simultaneous button registered in the list of simultaneous actions in a variable button. The processing of the argument simultaneous button event is already ended. Therefore, in order to omit the event processing, the system decides whether or not the button is an argument simultaneous button in step 3311, then if the button is not the argument simultaneous button, the system calls the simultaneous button top-bottom event procedure using the button as its first argument and the call type as its second argument recursively in step 3312. If the button is the argument simultaneous button, the system makes no recursive call. In step 3313, the system decides whether or not the button is the last one in the simultaneous action list. If it is the last one, the system returns. If not, the system sets the next simultaneous button in a button variable, then returns to step 3311.

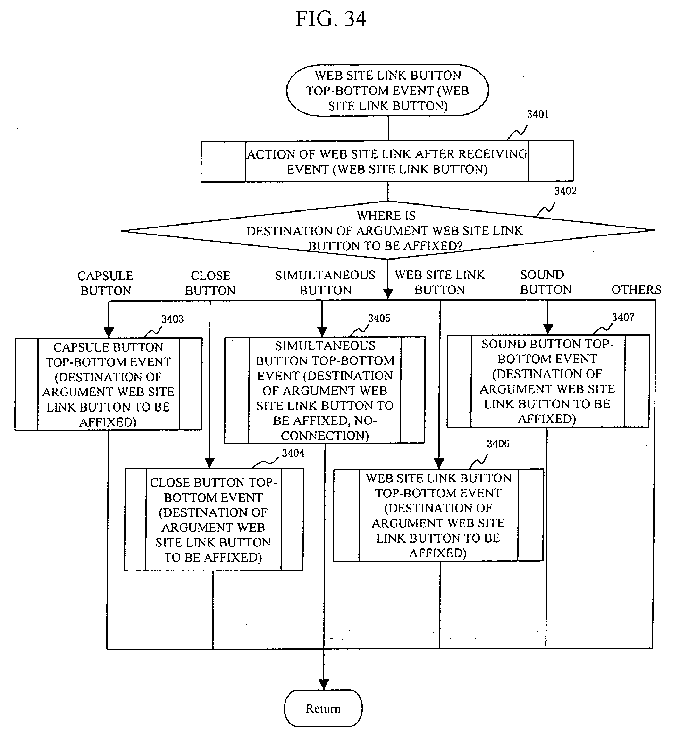

Next, how to process a web site link button top-bottom event with reference to Fig. 34. Fig. 34 is a flowchart of the web site link button top-bottom event processings. Just like the processings shown in Fig. 31, the processings shown in Fig. 34 are executed to transmit an event from a button to another to which the button is affixed, then its subsequent affixed buttons sequentially.

As shown in Fig. 34, in step 3401, the system calls the web site link button action procedure performed after receiving an event using the argument web site link button as its argument. In step 3402, the system decides the destination of the argument web site link button to be affixed. If the destination is on a capsule button, the system calls the capsule button top-bottom event procedure using the destination of the argument web site link button to be affixed as its argument, then returns. If the destination decided in step 3402 is on a close button, the system calls the close button top-bottom event procedure using the destination of the argument web site link button to be affixed as its argument in step 3404, then returns. If the destination decided in step 3402 is on a simultaneous button, the system calls the simultaneous button top-bottom event procedure using the destination of the argument web site link button to be affixed and the call type of no-link as its arguments in step 3405, then returns. The simultaneous button event call type will be described later. If the destination decided in step 3402 is on a web site link button, the system calls the web site link button top-bottom event procedure using the destination of the argument web site link button to be affixed as its argument in step 3406, then returns. If the destination decided in step 3402 is on a sound button, the system calls the sound button top-bottom event procedure using the destination of the argument web site link button to be affixed as its argument in step 3407, then returns. If the destination decided in step 3402 is none of the above buttons, the system returns with no operation.

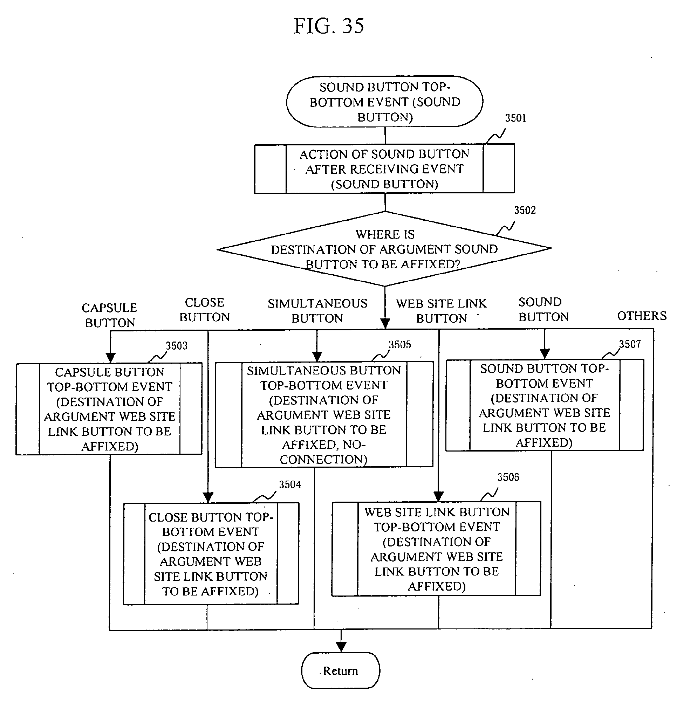

Next, how to process a sound button top-bottom event will be described with reference to Fig. 35. Fig. 35 is a flowchart of the sound button top-bottom event processings. Just like the processings shown in Fig. 31, the processings shown in Fig. 35 are executed to transmit an event from a button to another to which the button is affixed, then the subsequent affixed buttons sequentially.

As shown in Fig. 35, in step 3501, the system calls the sound button action procedure performed after receiving an event using the argument sound button as its argument. In step 3502, the system decides the destination of the argument sound button to be affixed. If the destination decided in step 3502 is on a capsule button, the system calls the capsule button top-bottom event procedure using the destination of the argument sound button to be affixed as its argument in step 3503, then returns. If the destination decided in step 3502 is on a close button, the system calls the close button top-bottom event procedure using the destination of the argument sound button to be affixed as its argument in step 3504, then returns. If the destination decided in step 3502 is on a simultaneous button, the system calls the simultaneous button top-bottom event procedure using the destination of the argument sound button to be affixed and the call type of no-link as its arguments in step 3505, then returns. The simultaneous button event call type will be described later. If the destination decided in step 3502 is on a web site link button, the system calls the web site link button top-bottom event procedure using the destination of the sound button to be affixed as its argument in step 3506, then returns. If the destination decided in step 3502 is on a sound button, the system calls the sound button top-bottom event procedure using the destination of the argument sound button to be affixed as its argument in step 3507, then returns. If the destination decided in step 3502 is none of the above buttons, the system returns with no operation.

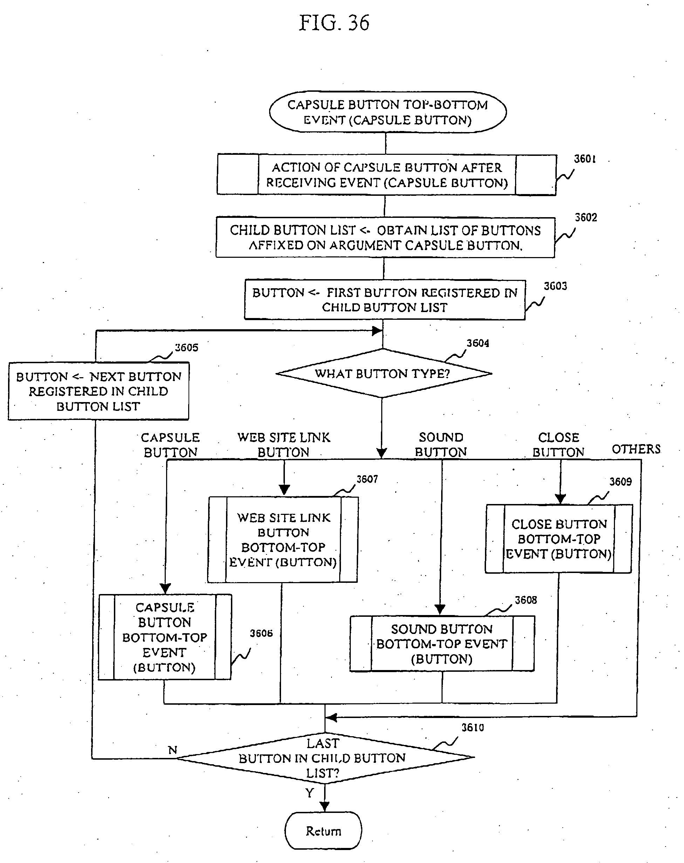

Next, how to process a capsule button bottom-top event with reference to Fig. 36. Fig. 6 will also be referred to as needed here. Fig. 36 is a flowchart of the capsule button bottom-top event processings. As shown in Fig. 36, if an event is transmitted from the destination of a button to be affixed to the button, for example, while an event is transmitted from the event transmission slot of a cell of the capsule binder 602 to a button affixed on the cell, the button that receives the event executes its function, then transmits the event to another button affixed to the button. Furthermore, the button that receives the event transmits the event to still another button affixed to the button. This processing is repeated up to the last affixed button. Such way, an event from a button is transmitted to the next button affixed beforehand, then its subsequent buttons sequentially by priority of affixed button. Fig. 36 shows a flow of the event transmission processings. At first, the system calls a capsule button action procedure to be performed after receiving an event using the argument capsule button as its argument in step 3601. In step 3602, the system obtains a list of buttons affixed on the argument capsule button, then substitutes it for a list of variable child buttons. In step 3603, the system substitutes the first button registered in the list of child buttons for a variable button. In step 3604, the system decides the type of the button. If the button is a capsule button, the system calls the capsule button bottom-top event procedure using the button as its argument in step 3606.

If the button is a web site link button, the system calls the web site link button bottom-top event procedure using the button as its argument in step 3607. If the button is a sound button, the system calls the sound button bottom-top event procedure using the button as its argument in step 3608. If the button is a close button, the system calls the close button bottom-top event procedure using the button as its argument in step 3609. If the button is none of the above buttons, the system jumps to step 3610 to decide whether or not the button is the last one in the list of child buttons. If it is the last button, the system returns. If not, the system obtained the next button registered in the list of child buttons in step 3605 and substitutes it for the button, then returns to step 3604.

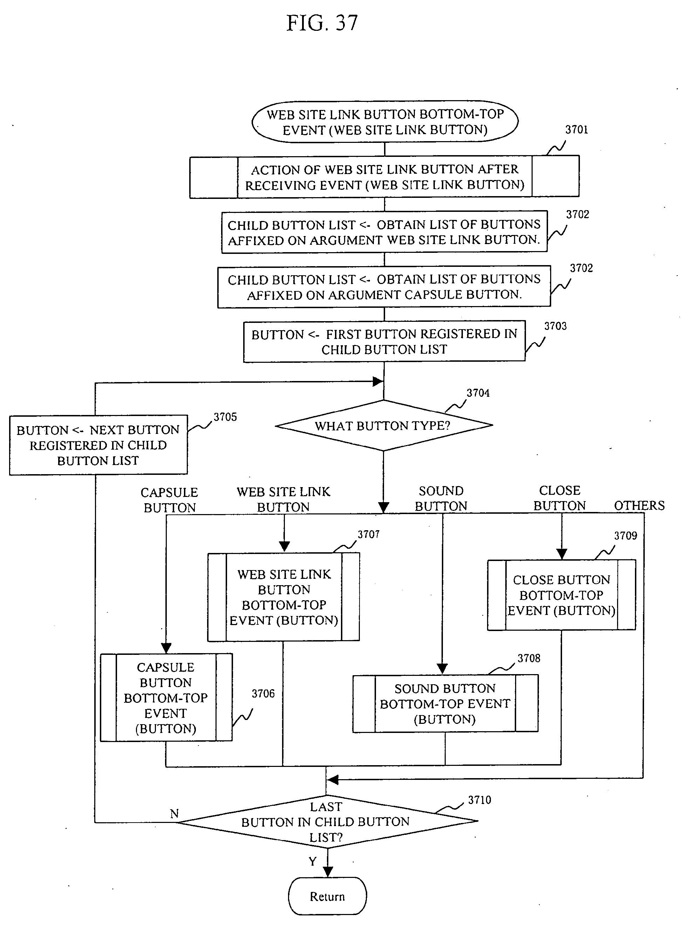

Next, how to process a web site link button bottom-top event with reference to Fig. 37. Fig. 37 is a flowchart of the web site link button bottom-top event processings. Just like the processings shown in Fig. 36, if an event is transmitted from the destination of a button to the button in Fig. 37, the button that receives the event transmits the event to another button affixed to the button.

As shown in Fig. 37, the system calls a web site link button action procedure to be performed after receiving an event using the argument web site link button as its argument in step 3701. In step 3702, the system obtains a list of buttons affixed on the argument web site link button, then substitutes it for a list of variable child buttons. In step 3703, the system substitutes the first button registered in the list of child buttons for a variable button. In step 3704, the system decides the type of the button. If the button is a capsule button, the system calls the capsule button bottom-top event procedure using the button as its argument in step 3706. If the button is a web site link button, the system calls the web site link button bottom-top event procedure using the button as its argument in step 3707. If the button is a sound button, the system calls the sound button bottom-top event procedure using the button as its argument in step 3708. If the button is a close button, the system calls the close button bottom-top event procedure using the button as its argument in step 3709. If the button is none of the above buttons, the system jumps to step 3710. In step 3710, the system decides whether or not the button is the last one in the list of child buttons. If it is the last button, the system returns. If not, the system obtains the next button registered in the list of child buttons in step 3705, then substitutes it for the button, then returns to step 3704.

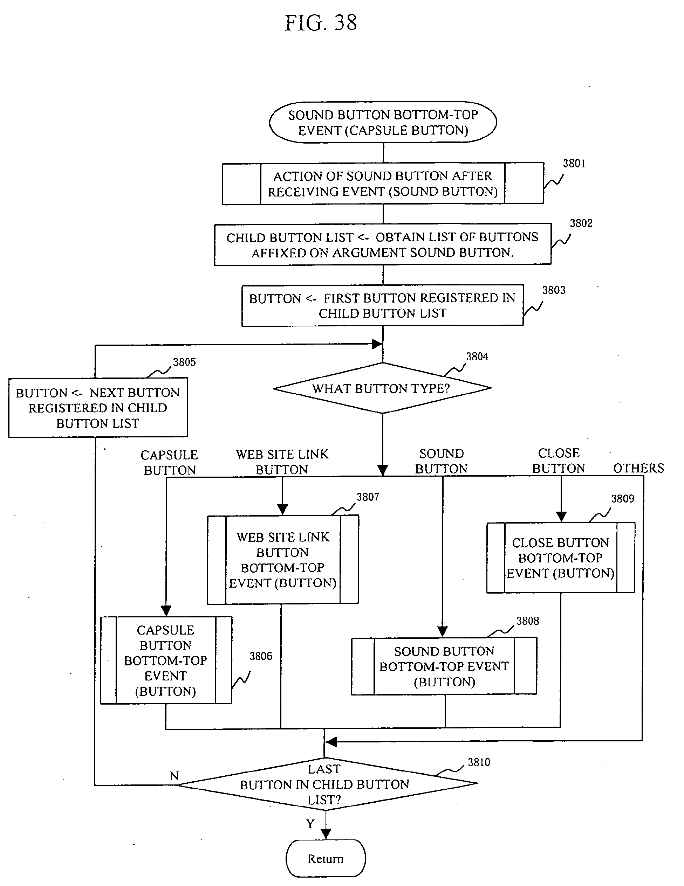

Next, how to process a sound button bottom-top event will be described with reference to Fig. 38. Fig. 38 is a flowchart of the sound button bottom-top event processings. Just like the processings shown in Fig. 36, if an event is transmitted from the destination of a button to be affixed to the button in Fig. 38, the button that receives the event transmits the event to another button affixed to the button. And, as shown in Fig. 38, the system calls a sound button action procedure to be performed after receiving an event using the argument sound button as its argument in step 3801. In step 3802, the system obtains a list of buttons affixed on the argument sound button in step 3802, then substitutes it for a list of variable child buttons. In step 3803, the system substitutes the first button registered in the list of child buttons for a variable button. In step 3804, the system decides the type of the button. If the button is a capsule button, the system calls the capsule button bottom-top event procedure using the button as its argument in step 3806.

If the button is a web site link button, the system calls the web site link button bottom-top event procedure using the button as its argument in step 3807. If the button is a sound button, the system calls the sound button bottom-top event procedure using the button as its argument in step 3808. If the button is a close button, the system calls the close button bottom-top event procedure using the button as its argument in step 3809. If the button is none of the above buttons, the system jumps to step 3810. In step 3810, the system decides whether or not the button is the last one in the list of child buttons. If it is the last button, the system returns. If not, the system obtains the next button registered in the list of child buttons in step 3805, then substitutes it for the button, then returns to step 3804.

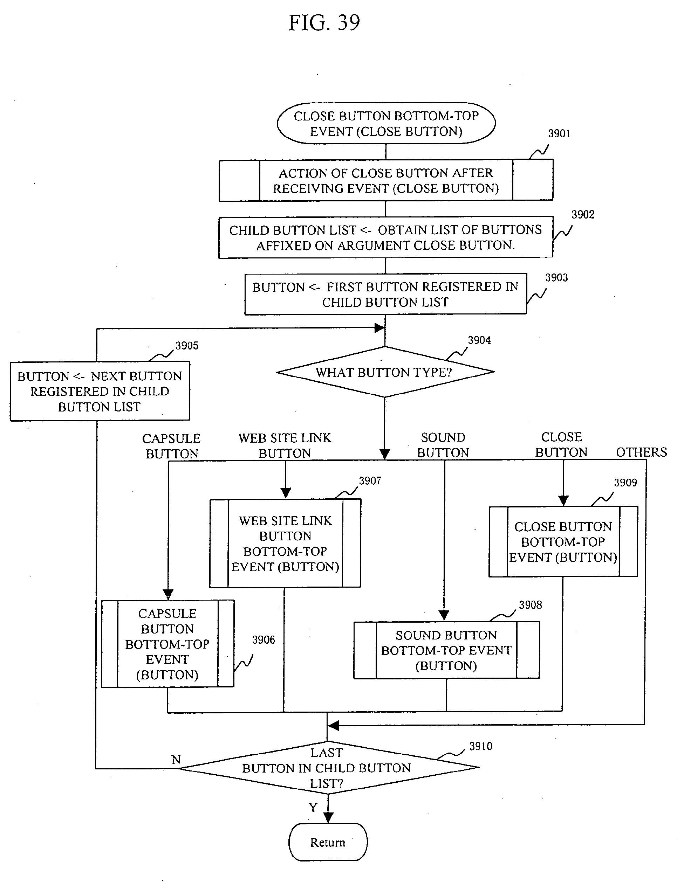

Next, how to process a close button bottom-top event will be described with reference to Fig. 39. Fig. 39 is a flowchart of the close button bottom-top event processings. Just like the processings shown in Fig. 36, in Fig. 39, if an event is transmitted from the destination of a button to be affixed to the button; the button that receives the event transmits the event to another button affixed to the button.

As shown in Fig. 39, the system calls the close button action procedure to be performed after receiving an event using the argument sound button as its argument in step 3901. In step 3902, the system obtains a list of buttons affixed on the argument close button in step 3902, then substitutes it for a list of variable child buttons. In step 3903, the system substitutes the first button registered in the list of child buttons for a variable button. In step 3904, the system decides the type of the button. If the button is a capsule button, the system calls the capsule button bottom-top event procedure using the button as its argument in step 3906.

If the button is a web site link button, the system calls the web site link button bottom-top event procedure using the button as its argument in step 3907. If the button is a sound button, the system calls the sound button bottom-top event procedure using the button as its argument in step 3908. If the button is a close button, the system calls the close button bottom-top event procedure using the button as its argument in step 3909. If the button is none of the above buttons, the system jumps to step 3910. In step 3910, the system decides whether or not the button is the last one in the list of child buttons. If it is the last button, the system returns. If not, the system obtains the next button registered in the list of child buttons in step 3905, then substitutes it for the button, and then returns to step 3904.

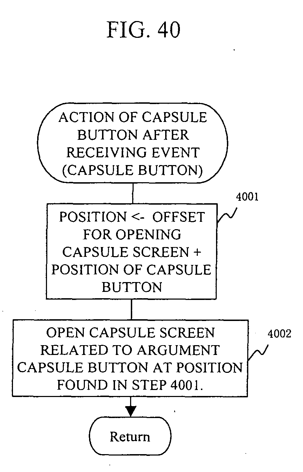

Next, how to execute capsule button action processings after receiving an event will be described with reference to Fig. 40. Fig. 40 is a flowchart of the action processings performed after receiving a capsule button event. The capsule button, when receiving an event, opens the capsule screen. Fig. 40 shows a flow of the processing. The capsule button stores a difference between its position and a position for opening the capsule screen, that is, an offset. In step 4001, the system stores a sum of the offset for opening the capsule screen and the position of the capsule button in a variable "position". Then, in step 4002, the system open the capsule screen linked to the argument capsule button at the position, then returns.

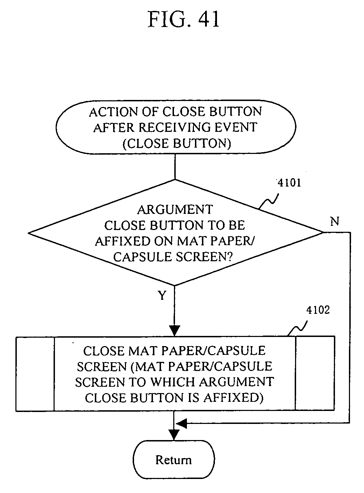

Next, how to execute close button action processings after receiving an event will be described with reference to Fig. 41. Fig. 41 is a flowchart of the close button action processings performed after receiving an event. The close button, when receiving an event, closes the mat paper/capsule screen to which the button is affixed. Fig. 41 shows a flow of the processing. As shown in Fig. 41, the system decides the destination of the argument close button to be affixed in step 4101. If it is on the mat paper/capsule screen (destination), the system calls the procedure for closing the mat paper/capsule screen using the destination of the argument close button to be affixed (mat paper/capsule screen) in step 4102. If the destination is none of the above buttons, the system returns with no operation.

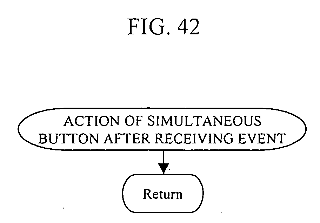

Fig. 42 is a flowchart of simultaneous button action processings performed after receiving an event.

The simultaneous button, when receiving an event, just transmits the event as shown in Fig. 33.

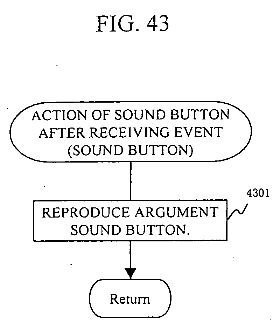

Next, sound button action processings performed after receiving an event will be described with reference to Fig. 43. Fig. 43 is a flowchart of the sound button action processings performed after receiving an event. The sound button reproduces a sound included in itself in response to a received event. Fig. 43 shows a flow of the processings. As shown in Fig. 43, the sound button reproduces a sound included in the argument sound button.

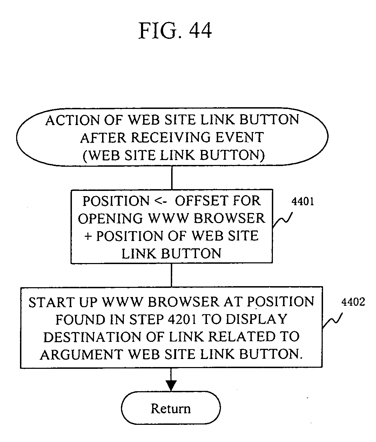

Next, web site link button action processings performed after receiving an event will be described with reference to Fig. 44. Fig. 44 is a flowchart of the web site link button processings performed after receiving an event. The web site link button, when receiving an event, starts up the target WWW browser and displays the linked web site included in itself. Fig. 44 shows a flow of the processings. As shown in Fig. 44, the web site link button stores a difference between its position and a position for opening the WWW browser screen, that is, an offset for opening the WWW browser screen in the variable "position". In step 4401, the web site link button stores a sum of the offset for opening the WWW browser screen and the position of the argument web site link button in a variable "position". Then, in step 4402, the system opens the WWW browser screen that displays the linked web site related to the argument web site link button.

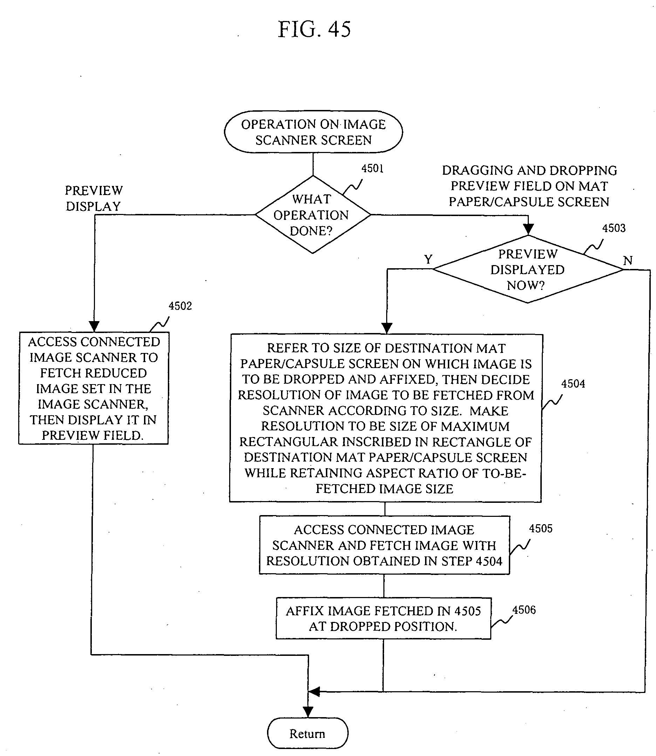

Next, operations on the image scanner screen will be described as an example for handling digital data/information. Fig. 45 is a flowchart of the operations performed on the image scanner screen. As shown in Fig. 45, in step 4501, the system decides the content of an operation performed on the image scanner screen. If the operation is preview display, the system goes to step 4502. If the operation is dragging and dropping a preview field with respect to the mat paper/capsule screen, the system goes to step 4503. In step 4502, the system accesses the connected image scanner to fetch a reduced target image of that set in the image scanner and display it in the preview field. In step 4503, the system decides whether or not the reduced image is displayed in the preview field. If it is displayed, the system goes to step 4504 to refer to the size of the mat paper/capsule screen on which the reduced image is to be dropped, then decides a resolution of the image to be fetched from the scanner according to the size. If not displayed, the system returns. The resolution should be the size of the maximum rectangular inscribed in the rectangle of the destination mat paper/capsule screen while retaining the aspect ratio of the to-be-fetched image size. The system then accesses the connected image scanner in step 4505 and fetches the image with the resolution obtained in step 4504. In step 4506, the system affixes the image fetched in step 4505 at the dropping position as a photograph material. These processings are also effective for handling digital information in digital still cameras and digital video cameras.

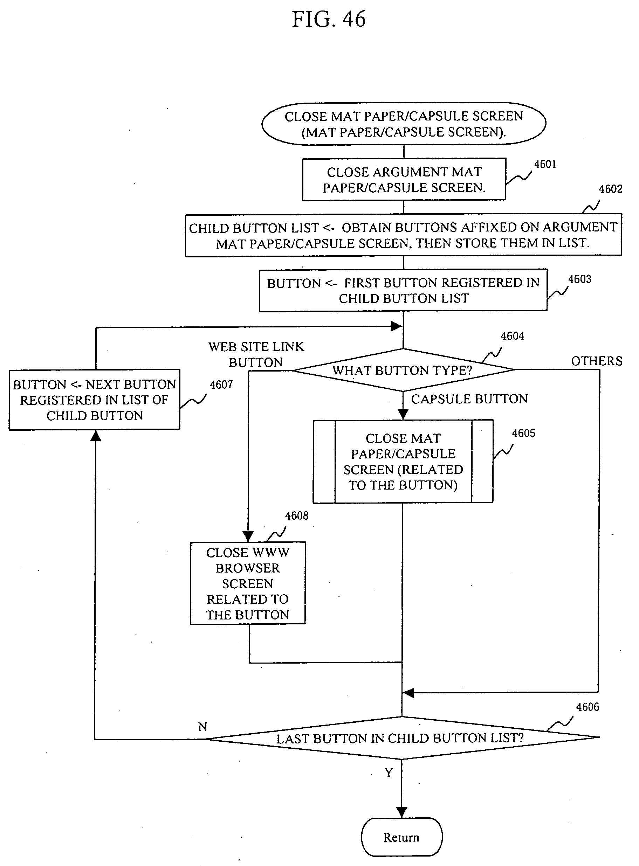

Next, how to close the mat paper/capsule screen will be described with reference to Fig. 46. Fig. 46 is a flowchart of the processings for closing the mat paper/capsule screen. As shown in Fig. 46, in step 4601, the system closes the argument mat paper/capsule screen once, then goes to step 4602 to obtain buttons affixed on the capsule screen and store them in a list of variable child buttons, then goes to step 4603. In step 4603, the system obtains the first button registered in the child button list and substitute it for a variable button. After that, the system goes to step 4604 to decide the type of the button. If it is a capsule button, the system goes to step 4605. If it is a web site link button, the system goes to step 4608. If it is none of the above buttons, the system goes to step 4606. In step 4605, the system calls the procedure for closing the mat paper/capsule screen recursively using the mat paper/capsule screen related to the button as its argument, then goes to step 4606. In step 4608, the system closes the WWW browser screen related to the button, then goes to step 4606 to decide whether or not the button is the last one registered in the child button list. If it is the last button, the system returns. If not, the system goes to step 4607 to obtain the next button registered in the child button list, then substitutes it for the button. The system then returns to step 4604.

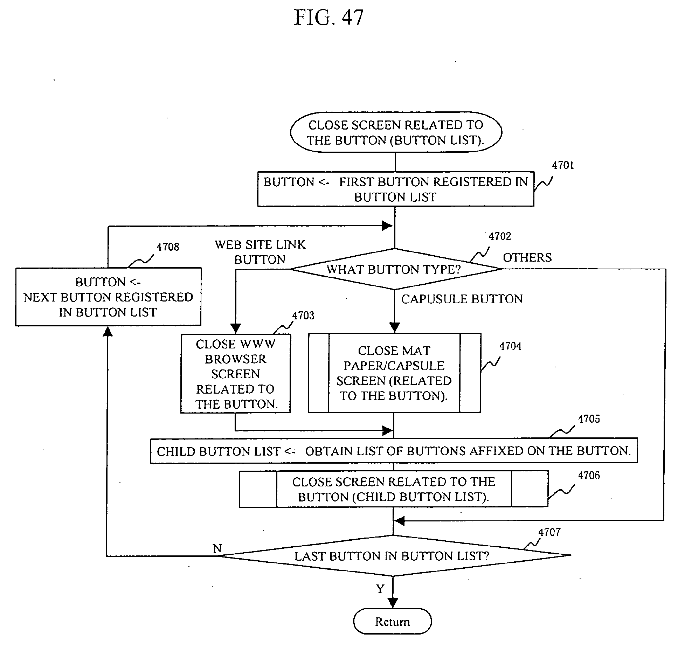

Next, how to close a screen related to each button will be described with reference to Fig. 47.

Fig. 47 is a flowchart of the processings for closing the screen related to each button. As shown in Fig. 47, the system obtains the first button registered in the argument button list, then substitutes it for a variable button. The system then goes to step 4702. If it is a web site link button, the system goes to step 4703. If it is a capsule button, the system goes to step 4704. If it is none of the above buttons, the system goes to step 4707. In step 4703, the system closes the WWW browser screen related to the button, then goes to step 4705. In step 4704, the system calls the procedure for closing the mat paper/capsule screen recursively using the mat paper/capsule screen related to the button as its argument, then goes to step 4705. In step 4705, the system obtains a button affixed on the button and stores it in the list of variable child buttons, then goes to step 4706. In step 4706, the system calls the procedure for closing the screen related to the button using the child button list as its argument, then goes to step 4707. In step 4707, the system decides whether or not the button is the last one registered in the child button list. If it is the last one, the system returns. If not, the system goes to step 4708 to obtain the next button registered in the child button list, then substitutes it for the button, then returns to step 4702.

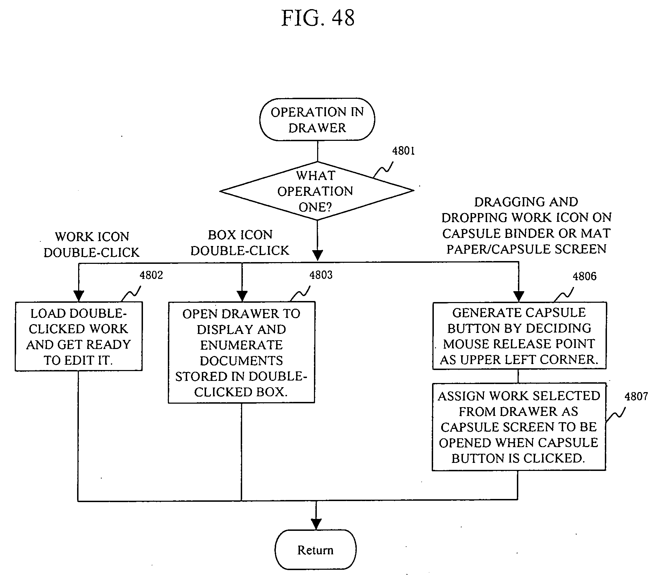

Next, how to process operations in the drawer will be described with reference to Fig. 48. Fig. 48 is a flowchart of the processings performed for operations in the drawer. As shown in Fig. 48, the system decides the content of an operation in step 4801. If the operation is double clicks for the work icon, the system loads the double-clicked work in step 4802 so as to edit it, then returns. If the operation is double clicks for the box icon, the system opens the drawer in which documents stored in the double-clicked box are displayed as a list in step 4803, then returns. If the operation is dragging and dropping the work icon on the mat paper/capsule screen or capsule binder, the system generates a capsule button by specifying the mouse release point as the upper left corner in step 4806 and assigns a work selected from the drawer as a capsule screen to be opened in response to a capsule button click in step 4807, then returns.

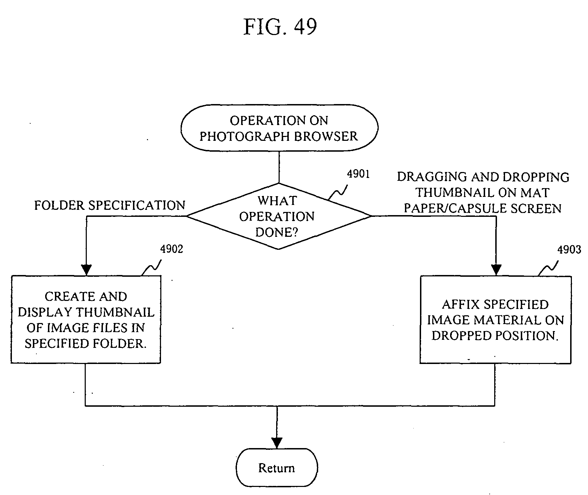

Next, how to process operations performed on the photograph browser with reference to Fig. 49. Fig. 49 is a flowchart of the processings for the operations performed on the photograph browser. As shown in Fig. 49, the system decides the content of an operation in step 4901. If the operation is specifying a folder, the system generates a thumbnail of image files stored in the specified folder and displays it, then returns. If the operation is dragging and dropping the thumbnail on the mat paper/capsule screen, the system affixes the specified image material on the dropping position in step 4903, then returns.

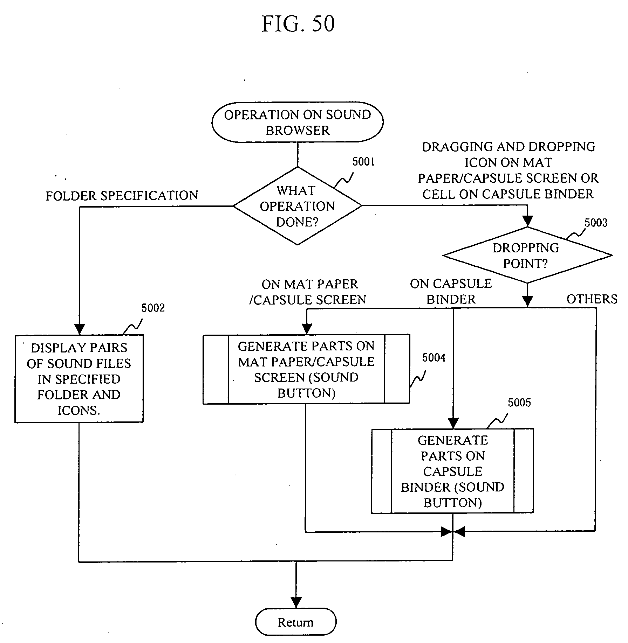

Next, how to process operations performed on the sound browser will be described with reference to Fig. 50. Fig. 50 is a flowchart of the processings for the operations performed on the sound browser. In step 5001, the system decides the content of an operation. If the operation is specifying a folder, the system displays the names of the sound files stored in the specified folder together with their icons in step 5002, then returns. If the operation is dragging and dropping a thumbnail on the mat paper/capsule screen or a cell on the capsule binder, the system goes to step 5003 to decide the dropping point. If the dropping point is on the mat paper/capsule screen, the system goes to step 5004. If it is on the capsule binder, the system goes to step 5005. If it is none of the above items, the system returns. The system then calls the procedure for generating parts on the mat paper/capsule screen using the sound button for reproducing a sound file related to the dropped icon as its argument in step 5004, then returns. In step 5005, the system calls the procedure for generating parts on the capsule binder using the sound button for reproducing a sound file related to the dropped icon as its argument in step 5005, then returns.

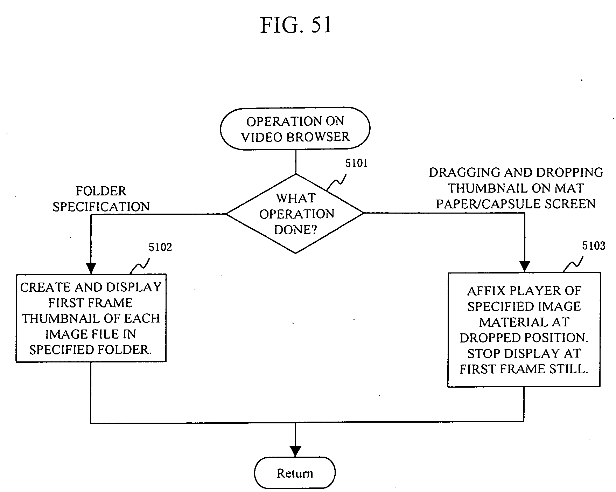

Next, how to process operations performed on the video browser will be described with reference to Fig. 51. Fig. 51 is a flowchart of the processings for the operations performed on the video browser. As shown in Fig. 51, the system decides the content of an operation. If the operation is specifying a folder, the system creates a thumbnail of the first frame of the video files stored in the specified holder and displays it in step 5102, then returns. If the operation is dragging and dropping a thumbnail on the mat paper/capsule screen, the system affixes the specified video material that is a player on the dropping position in step 5103. At this time, the display stops at the first frame, then the system returns.

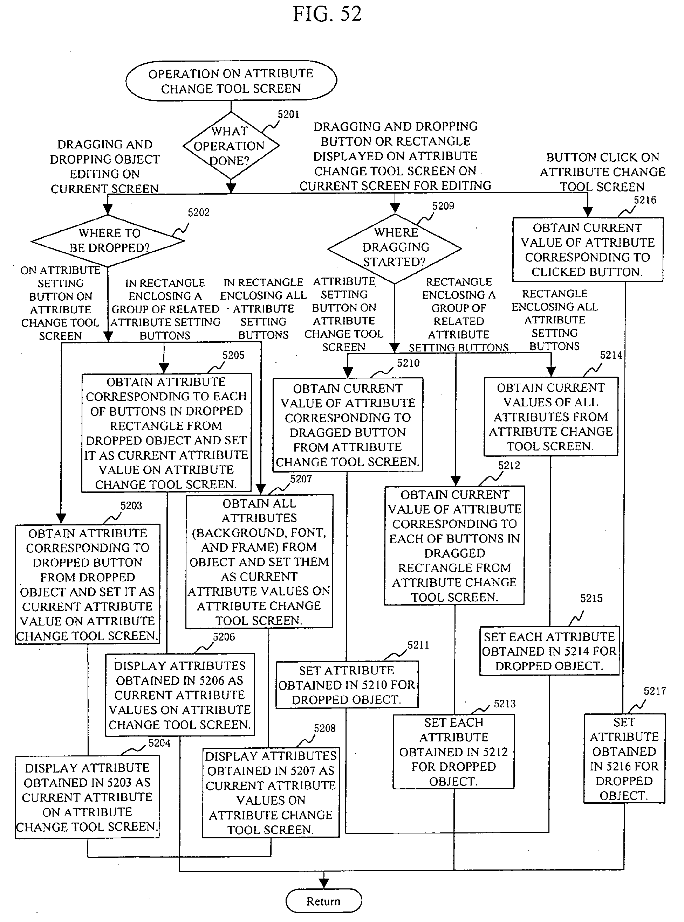

Next, how to process operations performed on the attribute change tool screen will be described with reference to Fig. 52. Fig. 52 is a flowchart of the processings for the operations performed on the attribute change tool screen. As shown in Fig. 52, the system decides the content of an operation in step 5201. If the operation is dragging and dropping an object displayed on a work screen on the attribute change tool screen, the system goes to step 5202. If the operation decided in step 5201 is dragging and dropping a button or rectangle displayed on the attribute change tool screen with respect to an object displayed on the work screen, the system goes to step 5209. If the operation is a button click on the attribute change tool screen, the system goes to step 5216. The system then decides the dropping position in step 5202. If the position is on the attribute change tool screen setting button, the system goes to step 5203. If the dropping position is on a rectangle that encloses the attribute setting buttons as a related group, the system goes to step 5205. If the dropping position is on a rectangle that encloses all the attribute setting buttons, the system goes to step 5207. The system then obtains an attribute of the dropped button from the dropped object and sets it as the current attribute value on the attribute change tool screen in step 5203, then goes to step 5204. In step 5204, the system sets the attribute obtained in step 5203 for the display of the attribute change tool screen, then returns. In step 5205, the system obtains the attribute of each button in the dropped rectangle from the dropped object and sets it as the current attribute value on the attribute change tool screen in step 5205, then goes to step 5206. In step 5206, the system sets the attribute obtained in step 5205 as the current attribute for the display of the attribute change tool screen, then returns. In step 5207, the system obtains all the attributes (background, font, and frame) from the object and sets them as the current attribute values on the attribute change tool screen, then goes to step 5208. In step 5208, the system sets the attributes obtained in step 5207 as the current attributes for the display of the attribute change tool screen, then returns. Then, the system decides the dragging starting point in step 5209. If the dragging is started on a rectangle that encloses the attribute setting buttons as a related group, the system goes to step 5212. If the dragging starting position is on a rectangle that encloses all the attribute setting buttons, the system goes to step 5214. The system then obtains the current attribute value of the attribute corresponding to the dragged button from the attribute change tool screen in step 5210, then goes to step 5211. In step 5211, the system sets the attribute obtained in step 5210 for the dropped object to be changed, then returns. In step 5212, the system obtains the current attribute value of the attribute corresponding to each button in the dragged rectangle from the attribute change tool screen, then goes to step 5213. In step 5213, the system sets the attribute obtained in step 5212 for the dropped object to be changed, then returns. In step 5214, the system obtains all the current attribute values from the attribute change tool screen, then goes to step 5215. In step 5215, the system sets the attributes obtained in step 5214 for the dropped object to be changed, then returns. In step 5216, the system obtains the current attribute value of the attribute corresponding to the clicked button, then goes to step 5217. In step 5217, the system sets the attribute obtained in step 5216 for the object selected so that its work attributes are to be changed, then returns.

As described above, according to the contents editing technique employed in this embodiment, operations are simplified, since all of such materials as slides and sounds can be added to works just by means of dragging and dropping them. In addition, because the parts to be operated are all visualized, it is easier for the user to operate the system even when he/she is not familiar with the terms specific to the system. And, because dragging and dropping are also possible for changing positions and sizes for opening a side screen just like the operations for an object, the user can edit contents of his/her work by intuition free of reference to the system manuals.

Furthermore, because it is possible to specify an order for executing buttons, contents of multimedia can be reproduced automatically. Such an order for executing buttons can be specified in various ways; for example, each button is executed by priority set in itself, by value set in itself, and by arrow part that denotes the direction of execution.

Furthermore, because the dropping of a drag & drop operation corresponds to an operation for specifying an insertion point, there is no need to set such an insertion point before the insertion. It is possible to insert an existing work in another work just like affixing materials of multimedia on a slide.

In addition, because a slide change time and a content reproduction time are related to each other, it is prevented to stop sound reproduction when a slide is changed to another, for example, when a time specified for changing a slide to another is shorter than a sound reproduction time.

Furthermore, it is possible to set a group of related attributes of a target object or all the attributes of the object collectively to change those attributes. In addition, it is easy to arrange various information items in groups according to calendar information so that those information items are referred to in an order specified by the calendar. It is also possible to adjust the data size of contents automatically in accordance with the data size of each fetched work.

Such an order may be specified for a plurality of cells disposed like a matrix on a mat paper part so that the order is defined for a row of cells in the column direction first, then for the next row of cells in the same direction. On the contrary, the ordering direction may be reversed so that the order is specified for a column of cells in the row direction, then for the next column of cells in the same direction. As for the ordering, regularity should be kept in the succession.

According to the contents editing technique of the present invention, it is possible to provide means for making it easier for the user to operate the user interface than any of existing application programs, since functions are visualized as icons so that the user feels editing of contents of multimedia simple and attractive. For example, the means makes it possible even for the user who is not familiar with computer operation to create works intuitively at his/her will without reference to system manuals.

## Claims

1. A method for editing contents, employed for an application system capable of relating processings of parts to each other by affixing a part on another on a screen, said method comprising:
a step of displaying a plurality of content processing start button parts, each for starting a content-related processing on said screen;
a step of displaying a mat paper part provided with a plurality of matrix cells defined for an order respectively; and
a step of affixing said plurality of content processing start button parts on said plurality of matrix cells so that a series of processings related to said contents are executed according to said order.

2. The method according to claim 1;
wherein said order defined for each matrix cell has regularity based on a reference matrix cell.

3. The method according to claim 1 or 2;
wherein said plurality of content processing start button parts, when two or more are affixed on the same matrix cell, are grouped and executed simultaneously.

4. The method according to one of claims 1 to 3;
wherein said method further includes:
a step of displaying a group of attribute value button parts for changing or obtaining attribute values; and
a step of selecting a plurality of attribute values from said group of attribute value button parts and affixing them on said matrix cells to change attributes related to each another collectively.

5. A method for editing contents, employed for an application system capable of relating processings of parts to each other by affixing a part on another on a screen, said method comprising:
a step of displaying a plurality of content processing start button parts, each for starting a content-related processing on said screen;
a step of displaying a mat paper part provided with a plurality of matrix cells; and
a step of affixing said plurality of content processing start button parts on said plurality of matrix cells; and
a step of specifying an order for executing said plurality of content processing start button parts affixed on said plurality of matrix cells so as to execute a series of processings related to said contents sequentially.

6. The method according to claim 5;
wherein said step of specifying an order for executing said content processing start button parts further includes:
a step of affixing a link part for specifying an order for processing said contents between said content processing start button parts affixed on said plurality of matrix cells.

7. The method according to claim 5 or 6;
wherein said method further includes:
a step of displaying a group of attribute value button parts for relating a plurality of grouped attribute values to each another on said screen; and
a step of changing or executing a plurality of items related to said plurality of grouped attributes collectively by operating said group of attribute value button parts.

8. The method according to one of claims 5 to 7;
wherein said step of specifying an order for executing said plurality of content processing start button parts includes:
a step of specifying an execution order as an attribute value for said plurality of content processing start button parts.

9. The method according to one of claims 5 to 8;
wherein said step of specifying an order for executing said plurality of content processing start button parts includes:
a step of linking one of said plurality of content processing start button parts to another with use of a link part that includes information related to an order for executing processings.

10. The method according to claim 9;
wherein said link part includes information of a time interval between contents started by said content processing start button parts linked by said link part.

11. A method for editing contents, employed for an application system capable of relating processings of parts to each another by affixing a part on another on a screen, said method comprising:
a step of displaying a plurality of content processing start button parts, each for starting a content-related processing on said screen;
a step of displaying a mat paper part provided with calendar information on a screen, said plurality of content processing start button parts being affixed on said mat paper part so as to execute said content-related processings; and
a step of affixing said plurality of content processing start button parts on said mat paper part so as to relate said calendar information to each of said plurality of content processing start button parts.

12. A method for editing contents, employed for an application system capable of relating processings of parts to each another by affixing a part on another on a screen, said method comprising:
a step of displaying a plurality of content processing start button parts, each for starting a content-related processing on a screen;
a step of displaying a mat paper part on said screen, said plurality of content processing start button parts being affixed on said mat paper so as to execute content-related processings; and
a step of deciding display characteristics of said contents according to the display characteristics of said mat paper part by affixing at least one of said plurality of content processing start button parts on said mat paper part.

13. A contents editing program employed for an application program capable of relating processings of parts to each another by affixing a part on another on a screen, said program comprising:
a procedure for displaying a plurality of content processing start button parts, each for starting a content-related processing on said screen;
a procedure for displaying a mat paper part provided with a plurality of matrix cells defined for an order respectively on a screen; and
a procedure for affixing said plurality of content processing start button parts on said plurality of matrix cells so as to execute a series of content-related processings according to said order.

14. The program according to claim 13;
wherein said order defined for each matrix cell has a regularity based on a reference matrix cell.

15. The program according to claim 13 or 14;
wherein two or more of said plurality of content processing start button parts that are affixed on the same matrix cell are grouped and executed simultaneously.

16. The program according to any of said claims 13 to 15;
wherein said program further includes:
a procedure for displaying a group of attribute value button parts for changing or obtaining an attribute value respectively; and
a procedure for changing attributes related to each another collectively by selecting a plurality of attribute values from said group of attribute value button parts and affixing them on any of said plurality of matrix cells.

17. A contents editing program employed for an application program capable of relating processings of parts to each another by affixing a part on another on a screen, said program comprising:
a procedure for displaying a plurality of content processing start button parts on a screen, each for starting a content-related processing;
a procedure for displaying a mat paper part provided with a plurality of matrix cells;
a procedure for affixing said plurality of content processing start button parts on said plurality of matrix cells; and
a procedure for specifying an order for executing said plurality of content processing start button parts affixed on said plurality of matrix cells so as to execute a series of content-related processings according to said order.

18. The program according to claim 17;
wherein said procedure for specifying an order for executing said plurality of content processing start button parts includes:
a procedure for affixing a link part for specifying an order for processing said contents between said content processing start button parts affixed on said plurality of matrix cells.

19. The program according to claim 17;
wherein said program further includes:
a procedure for displaying a group of attribute value button parts for relating a plurality of grouped attribute values to each another; and
a procedure for operating a group of attribute value button parts to change a plurality of items related to grouped attributes or execute processings related to said grouped attributes collectively.

20. The program according to claim 17;
wherein said procedure for specifying an order for executing said plurality of content processing start button parts includes:
a procedure for specifying an execution order as an attribute value for said plurality of content processing start button parts.

21. The program according to claim 17;
wherein said procedure for specifying an order for executing said plurality of content processing start button parts includes:
a procedure for linking one of said plurality of content processing start button parts to another with use of a link part that includes information related to an order for executing processings.

22. The program according to claim 21;
wherein said link part includes information of a time interval between said contents started by said plurality of content processing start button parts linked to each other by said link part respectively.

23. A contents editing system capable of relating processings of parts to each another by affixing a part on another part on a screen, comprising:
a first storage unit for storing a plurality of content processing start button parts, each for starting a content-related processing together with their processing contents;
a second storage unit for storing said plurality of content processing start button parts affixed on a mat paper part provided with a plurality of matrix cells defined for an order respectively so as to relate said plurality of start button parts to said plurality of matrix cells; and
a contents processing unit for detecting an external operation executed for any of said plurality of content processing start button parts affixed on said mat paper part to execute content processings stored in said first storage unit according to aid order defined for each of said plurality of matrix cells.

24. The system according to claim 23;
wherein said contents processing unit groups a plurality of said content processing start button parts affixed on the same matrix cell to execute processings related to said grouped content processing start button parts simultaneously.

25. The system according to claim 23;
wherein said system further includes:
a third storage unit for storing a group of attribute value button parts for changing or obtaining attribute values of contents; and
a collective attribute change unit for selecting a plurality of attribute values related to each another from said group of attribute value button parts to change their attributes collectively according to an affixing operation performed on said mat paper part.

26. A contents editing system capable of relating processings of parts to each another by affixing a part on another part on a screen, comprising:
a first storage unit for storing a plurality of content processing start buttons, each for starting a content-related processing, together with their processing contents;
a second storage unit for storing said plurality of content processing start button parts affixed on a matrix cell of said mat paper part provided with said plurality of matrix cells;
a third storage unit for storing said plurality of content processing start button parts affixed on said plurality of matrix cells and each link part affixed to define an execution order among said plurality of content processing start button parts; and
a contents processing unit for detecting an external operation and execute processings of said plurality of content processing start button parts stored in said second storage unit in accordance with the processing contents of said content processing start button parts stored in said first storage unit according to an execution order stored in said third storage unit.

27. The contents editing system according to claim 26;
wherein said system further includes:
a fourth storage unit for storing a group of attribute value button parts for relating a plurality of grouped attribute values to each another;
wherein said contents processing unit includes:
a collective change unit for operating said group of attribute value button parts to change a plurality of items related to grouped attributes or execute processings related to a plurality of grouped attributes collectively.
